# EUROPEAN PATENT SPECIFICATION

(11) **EP 3 846 045 B1**
(45) Date of publication and mention of the grant of the patent: **03.04.2024**
(21) Application number: 19220089.7
(22) Date of filing: 30.12.2019
(51) Int. Cl.: G06F 16/21

(54) **ARCHIVING DATA IN A DELTA STORE**
ARCHIVIERUNG VON DATEN IN EINEM DELTA-SPEICHER
ARCHIVAGE DE DONNÉES DANS UN STOCKAGE DELTA

(30) Priority: 23.08.2019 EP 19193230
(43) Date of publication of application: 07.07.2021
(73) Proprietor: Spicter AG, 6300 Zug (CH)
(72) Inventor: OBERHACK, Andreas, 6300 Zug (CH); KALISKI, Erwin, 6300 Zug (CH)
(74) Representative: Richardt Patentanwälte PartG mbB

(56) References cited:
- CN-B- 106 326 457
- Randy Urbano ET AL: "Oracle Streams Concepts and Administration 10g Release 2(10.2) - Chapters 2 4", Oracle Documentation, 31 January 2008 (2008-01-31), XP055707002, Retrieved from the Internet: URL:https://docs.oracle.com/cd/B19306_01/s erver.102/b14229.pdf [retrieved on 2020-06-19]
- Anonymous: "Hibernate Envers - Easy Entity Auditing", docs.jboss.org, 22 January 2019 (2019-01-22), pages 1-17, XP055935032, Jboss.org Retrieved from the Internet: URL:http://web.archive.org/web/20190122113 620/https://docs.jboss.org/envers/docs/ [retrieved on 2022-06-23]
- Rad Ramin: "Mastering Hibernate, Edition 1, Chapter 6 Events, Interceptors and Envers" In: "Mastering Hibernate, Edition 1, Chapter 6 Events, Interceptors and Envers", 16 May 2016 (2016-05-16), Packt Publishing Limited, XP055932766, vol. 107, pages 1-16,

## Description

### Field of the invention

The disclosure relates to the archiving of data objects of application programs and to techniques for operating the archive.

### Background and related art

Organizations of many different economic and technical fields generate large amounts of data. For example, banks store data on a large number of customers, business partners, bank transactions, financial products such as credit agreements and bonds. Airlines store data on customers, flights, personnel, weather conditions as well as service and discount programs. Telecommunications companies manage large amounts of data relating to individual mobile and Internet connections for their customers, as well as the corresponding tariff features.

Data archiving is of growing importance for all of them: a growing number of organizations archivate their data for various purposes, e.g. for complying to legal requirements, for monitoring the quality of a product or service and/or for optimizing or customizing ads, services and discounts.

Data archiving is the storage of data, in particular the long-term storage of data. In recent years this approach has become increasingly strained as the amount of data that is processed and potentially needs to be archived has grown termendously. The size of the data archives represents an enormous technical challenge, because the creation, analysis, modification or recovery of such large data archives is often not possible or not possible to the desired extent due to limited hardware resources and the long duration of individual data processing steps. Furthermore, legal and organizational requirements in respect to the type of data to be stored and in respect to the form and/or duration of the storing change frequently. Often, the structure of the data archive and/or the program code of the software used for creating the archive does not comply to the new requirements and a significant time and effort is needed to modify and recompile the archiving software and/or to adapt the structure or content of an existing archive. Hence, existing archiving approaches are often time - and resource- consuming and inflexible.

For example, an enterprise generate application data (e.g., a file, document, content, database records, etc.) by a state-of-the-art flight booking software and store the data in an external data archive. To comply with a new law, regulation, or policy, it may now be necessary to remove specific content (e.g., flight details and address details related to a particular person) from the IT-infrastructure of the flight-booking company, i.e., from the computer system running the flight-booking software and from the external archive. Since the IT-system of the company may be configured to regularly create snapshots of both a first computer system hosting the flight-booking application and of a second computer system hosting the external archive, the data of this particular person may be stored in multiple copies in multiple snapshots of the first and second computersystems. To complicate things, the data of this person may be stored in different formats in the snapshots of the first computer system and in the snapshots of the second computer system. Hence, in order to completely remove the data of a particular person, the administrator may need to evaluate each backup/snapshot of the IT-system that could include data of this particular person and may need to go into each snapshot and and each particular data format.

Hibernate Envers - Easy Entity Auditing, Hibernate Envers Reference Documentation, 3.3.0.GA, 2004 Red Hat Middleware LLC, discloses a mechanism for persisting changes to data objects in an application program for the purpose of auditing and application-state restoration. If

The US patent application 20180225349 A1 discloses a backup system for application programs and data. The backup allows searching and analysis of the backup at the application level via an application API. The backup approach disclosed in this document is based on generating snapshot copies of entire storage units or virtual machines at very short intervals. As a consequence, a lot of storage space is required, the data in the multiple backups is highly redundant, and any subsequent changes would have to be made in a large number of Snapshot copies.

Randy Urbano et al. in the Oracle Documentation "Oracle Streams Concepts and Administration", 10g Release 2 (10.2), chapters 2 and 4 explains the concepts and architecture of the Streams capture process in Oracle databases. Chapter 2 relates to the stream capture process and covers topics such as the redo log and a capture process, logical change records (LCRs), capture process rules, the datatypes captured, logs and streams capture processes. Chapter 4 relates to the application of streams and covers topics such as apply process rules, message processing with an apply process, datatypes applied, the streams apply process and apply process architecture.

Furthermore, problems associated with data consistency may arise, and even a high frequency of snapshot generation will not provide complete coverage of all data object changes performed by the application program over time.

### Summary

It is an objective of the present invention to provide for an improved method for archiving data, for restoring data or for restoring an application program having created the data, and for respective computer systems as specified in the independent claims. Embodiments of the invention are given in the dependent claims. Embodiments of the present invention can be freely combined with each other if they are not mutually exclusive.

In one aspect, the invention relates to a computer-implemented method for archiving data. The invention is defined by the independent claims to which reference should be made.

According to the independent claims of the invention, as any change operation performed on a data object results in the creation and storing of a delta object, the archive according to preferred embodiments covers the history of all change operations of the application program.

These features may be advantageous for multiple reasons:
Firstly, the archive according to embodiments of the invention may cover all data object changes performed over the time on the DOs of the application program.

Contrary to snapshot-based archiving and backup approaches, embodiments of the invention may capture any DO change and store the DO change in the at least one delta store. As a consequence, according to embodiments of the invention, the time when a reconstruction of the whole data content and state of the application is possible may not be limited to small set of predefined "snapshot" times. The archive may cover not only the whole data content of the application at a small number of "snapshot times", but may comprise the change of each of the data objects over the time. Hence, no information may be lost in the archiving process.

Data archives are often intended for the long-term storage of data. The fact that the at least one delta store used as archive may contain all changes of data objects within the application program over time may be particularly advantageous for the long-term storage of data: the question which data are relevant and worth storing with regard to legal or operational requirements often cannot be predicted over a longer period of time. Dedicated archiving systems that save a certain part of the data of an application program in an archive must therefore be continuously revised and updated. This not only costs time and money, but also means that the content of a data archive can change over time with regard to the composition and structure of the data stored in it. This considerably complicates a consistent analysis of the data over time and in the worst case can render the analysis of the archived data impossible after a certain period of time.

To the contrary, according to embodiments of the present invention, neither the programmer of the application program nor anyone else has to decide whether and which data is relevant and worth archiving, both now and in the future. An archive consisting of one or more delta stores according to embodiments of the invention is thus complete both in terms of covering the totality of objects of an application at a certain point in time and in terms of covering all data object changes occurring while the application program is running. For example, the archive can comprise delta objects created by a single instance of the application program or created by multiple sequentially created and closed instances of the application program.

Second, the data content of the at least one delta store may be ensured to comprise data that was written within a transactional context. This transactional context may allow reconstructing the state of the DOs of the application program at an arbitrary time in the past in a consistent manner. This is because the change operations performed within the application program and the storing operations for storing the delta objects in the delta store are performed within integrated transactions and hence are performed in accordance with the all-or-nothing principle. In case the at least one delta store comprises delta objects representing the creation and/or modification of some data objects in the application program, it may be ensured that these data object changes have actually been performed and completed within the application program. In case the storing of one of the delta objects in the delta store fails for whatever reason, the storing of all delta objects contained in the same integrated transaction is aborted or revoked, and also the data object changes performed in the application program within the said integrated transaction are revoked.

State of the art archiving approaches do not take into account a transational context of the application or there may not exist any transactional context in the application program. Hence, these prior-art archiving approaches are associated with an information loss and cannot be used for recovering the totality of data processed by the application program at a particular time.

As the data content of the delta store may be ensured to comprise data that was written within a transactional context, the delta store may comprise and/or allow reconstructing the state of the DOs of the application program at an arbitrary time in the past consistently.

By propagating any changes made within the application program to the at least one delta store within an integrated transactional context that covers at least the application program and the at least one delta store, mission critical application programs may be provided whose state at an arbitrarily selected time can quickly and consistently be reconstructed. As any DO state changes are, according to embodiments, automatically persisted in the at least one delta store within a transactional context and preferably in real-time, the data content of the delta store may be used for a fast and consistent recovery of the application program at an arbitrary time in the past. As a consequence, the application program may be used in many mission critical scenarios such as for control of fly-by-wire aircraft, anti-lock brakes on a vehicle, internet-of-things based industrial production processes, enterprise application programs and the like.

A third advantage may be that the creation of the integrated transactions is triggered in the application program. Hence, the creation and management of the integrated transactions may be defined during the creation, deletion and/or modification of data objects in the application program by a developer at design time of the application program. The begin and end of the integrated transactions may hence correspond closely to the workflows and functions implemented in the application program.

A fourth advantage of the method for archiving application program data with the help of the framework according to embodiments of the invention may be that the programmer or developer of the software program may prove to third parties (without further tests and quality checks) that all data processing steps performed in the application program may completely and consistently be persisted in the archive. Programming is a manual task. Hence, errors can occur and quality tests may be necessary. However, since the data object changes according to embodiments of the invention are not archived by explicit methods or functions defined manually by the programmer in the course of programming the application program, but rather automatically by the described interaction of the application program and the framework, it may inherently be ensured that any application program that has been programmed in such a way that it interacts with the framework as described, necessarily and fully automatically archives any change of the above-mentioned data objects during operation of the application program. This accelerates the software development process because no testing is required if all business data is really archived. The fact that the application program has been programmed to work with the framework as described may ensure that the data is archived completely.

The at least one delta store can be a single delta store or a plurality of delta stores.

Each of the at least one delta store is an "append only" data store, in particular a data store managed by a streaming application and/or a by a queuing system.

This may have the advantage that a sequential write (append only) of delta objects in the at least one delta store may be much faster than writing data in tables of conventional relational databases where a lot of database constraints, e.g. uniqueness constraints on one or more columngs of one or more tables, have to be made and where the data may be written to multiple non-adjacent regions within a storage device.

According to embodiments, the business logic of the application program is identical to or is an updated version of the business logic of a legacy application program. The method comprises replacing the legacy application program by a combination of the application program and the framework.

For example, a legacy application program may have been written in an arbitrary programming language without the use of the framework. The legacy program may encode business logic for any purpose, e.g. for booking filghts, for performing financial transactions, for controlling industrial manufacturing processes or the like. The legacy program comprises explicit routines for storing a predefined subset of the data processed by the business logic in an archive, e.g. a file system or a relational database. After some time, the business logic and/or the selection of the data to be archived may become outdated, e.g. because the business logic does not cover important new aspects of the business or because the archived data does not comply to privacy requirements or lacks information meanwhile deemed to be of relevance. In this case, instead of adapting the source code of the business logic and/or of the data archiving routines of the application program to the new requierments, a software developer writes a new application program which encodes solely the business logic of the legacy application program (or an updated version of this business logic) but which preferably does not comprise any explicit archiving functions. The new application program is written such that the new application program automatically communicates any change of any one of a plurality of data objects contained in and processed by the application program to the framework, thereby triggering the framework to create a respective delta object being indicative of this change. The source code of the newly written application program may comprise explicit or implicit routines or events which induce the begin or commit of an integrated transaction within which one or more of the data object changes are performed, wherein the new application program is configured to communicate the begin and commit events to the framework for enabling the framework to perform the creation and storing of the delta object within the respective integrated transactions. Hence, as the combination of the new application program and the framework may automatically and inherently ensure that the new application program in combination with the framework may be able to create a complete archive of all DO change operations performed in the application program.

According to embodiments, the the application program is free of program routines specifically designed for archiving data object changes. For example, the application program can be free of write operations which access a data store (e.g. a relational database or a directory) for the purpose of archiving data created or modified by business logic processes performed within the application program.

As mentioned above, the absence of data archiving routines explicitly specified in the program code of the application program may have the advantage that this application program in interoperation with the framework may automatically create a complete archive of all changes performed on any of the data objects of the application program (or on a subset of the data objects consisting of "transient DOs" marked as "serializable" as will be explained later). This may ensure automatically that the programmer does not forget to archive relevant data or that the archiving routines are in in conflict with routines of the business logic of the application program. Completeness and consistency of the archive may automatically be ensured by specifying the program code of the application program at design time of the application program such that it interoperates with the framework as described.

According to embodiments, the application program is programmed such that any change operation applied on any one of the totality of DOs comprised in the application program automatically triggers the creation of one of the delta objects. The creation and the storing of the delta object by the framework is performed such that the at least one delta store (the totality of the delta stores in case multiple delta stores are used) comprises a complete history of the totality of change operations performed on the DOs in the application program over the time.

According to alternative embodiments, the application program comprises serializable ("non-transient") DOs and non-serializable ("transient") DOs and the application program is programmed such that any change operation applied on any one of the serializable DOs comprised in the application program - but not any change operation applied on any one of the non-serializable DOs - automatically triggers the creation of one of the delta objects. The creation and the storing of the delta object by the framework is performed such that the at least one delta store (the totality of the delta stores in case multiple delta stores are used) comprises a complete history of the totality of change operations performed on any one of the totality of serializable DOs in the application program, wherein a "serializable" DO is a DO that is marked as being intended for being stored.

The term "serialization" refers to the process of translating data structures or object state into a format that can be stored (for example, in a file or memory buffer) or transmitted (for example, across a network connection link) and reconstructed later (possibly in a different computer environment). For example, in the programming language Java, instances of object classes implementing the interface Serializable are used according to embodiments of the invention als "serializable" DOS and all other DOs are used as "non-serializable DOs".

According to preferred embodiments, the framework comprises an interface class implementing the Serializable interface provided by the Java programming language. This interface class is refered herein e.g. as "SerializableMasterDO". All classes of the application program used as templates for instantiating the DOs whose changes are to be persisted via the framework implement the SerializableMasterDO interface. Hence, as these DOs implement the SerializableMasterDO interface, they are marked as "serializable".

Embodiments of the invention preferably do not use the Serializable interface directly for persisting a DO, because the storing of the data object changes is performed by the framework. The framework does not simply serialize the whole DO but rather creates a delta object merely comprising DO changes.

According to embodiments, the framework is configured to check, before creating a new delta object, if the DO whose change triggered the current delta object creation process is an instance of a class implementing the SerializableMasterDO interface or not. If the DO is an in instance of a class implementing this interface, the new delta object is created. If not, no delta object is created. This may enable a programmer to easily define DOs whose state changes shall be persisted simply by defining an object class implementing the SerializableMasterDO interface provided by the framework. If the programmer does not define the class on which the DO is based such that it implements the SerializableMasterDO interface, changes to instances of this class will not be persisted by the framework in the at least one delta store. Hence, the programmer is enabled to use an interface provided by the framework to trigger a new, framework- and delta store based persistence of object changes which actually may not make use of the DO serialization routines provided by the Java programming language. The programmer may be enabled to define at design time of the application program on a per-class basis whether or not the DOs being instances of this class shall be archived or not by the framework. Other embodiments may be based on other object oriented languages and may make use of other interfaches or abstract classes having a similar functionality. Hence, according to embodiments, the ones of the DOs which are intended to be persisted so that their state can be preserved over time are programmed at design time such that their respective classes implement the Serializable interface while transient DOs which do not implement this interface live for the duration of an application process. This may allow a programmer to decide which ones of the classes he or she creates implement business logic functions which shall be persisted and which ones of the classes are required merely for program-internal functions.

According to embodiments, each of the delta objects comprises meta data of the one of the data object whose change triggered the creation of the respective delta object. The method further comprises:
- receiving, by a delta store management program (e.g. the framework or another program having access to the at least one delta store), a request to hide information associated with a particular one of the data objects, the request comprising one or more search values; for example, the request can be received from a user or from another application program; the data object can be, for example, a particular instance of a class, e.g. a data object representing the customer "M. Smith";
- identifying, by the delta store management program, all delta objects in the delta store representing a change operationeration performed on the particular one data object by comparing the one or more search values with the meta data of the stored delta objects; for example, in case the address of the customer "M. Smith" was changed two times during the last five years, these changes have been stored in the at least one delta store and a search for e.g. the object-ID of this customer will identify all delta objects being descriptive of these two address changes (and other changes to the data object "M. Smith", if any);
- a) modifying selectively the identified delta objects in the at least one delta store such that the value of at least one attribute of the meta data of all the identified delta objects is hidden; the hiding is performed by deleting, anonymizing, pseudonymizing or encrypting the at least one attribute; and/or
- b) creating a modified copy of at least the ones of the at least one delta store comprising the identified delta objects, wherein in the modified copy selectively the identified delta objects are modified such that the value of at least one attribute of the meta data of all the identified delta objects is hidden, wherein the hiding is performed by deleting, anonymizing, pseudonymizing or encrypting the at least one attribute.

For example, the attribute to be hidden can be the name or the address or the credit standing of the data object "M. Smith".

Performing the hiding operation directly on delta objects of the (originally created) at least one delta store according to a) may have the advantage that it is ensured that the attribute will be hidden permanently provided the at least one delta store is the only instance/copy of the archive. For example, if the customer M. Smith has requested based on the EU-data protection regulation that his address be deleted completely from all data stores operated by a particular company, the company can easily delete this attribute specifically from the delta objects relating to this customer which reveal address change information. Hence, the archive and any backup copies created therefrom will comply to the customer's request and to the data protection regulation. However, there is no option of recovering the attribute once it is deleted in all existing instances of the archive.

However, typically the framework or the streaming application program used by the framework for storing the delta objects in the delta store will not support any kind of update operation on the delta store, because the at least one delta store is preferably an append-only store. In this case, in order to hide specific parts of the at least one delta store used as the archive, a copy of the at least one delta store is created according to b). The resulting "modified" delta store may also be stored in the form of an append-only store which can only be modified during a further delta store copy operation.

Performing the hiding operation on a copy of the at least one delta store may have the advantage that it is possible to generate an additional instance of the archive that conforms to one or more requirements regarding confidality or anonymity of person-related data. For example, the at least one delta store can comprise medical data of one or more patients which must not be given to third parties. However, the delta store may comprise valuable biomedical information for data analysts, e.g. for conducting a retrospective medical study. By applying the hiding operation on the copy of the archive instead of the original archive, it is possible to generate e.g. a pseudonymized or anonymized or otherwise modified version ot the archive that can be given to third parties for further analysis without violating personality rights.

Accordint to a further embodiment, the hiding of some attribute values of some of the delta objects in the at least one delta store is implemented according a third implementation option "c)". Accoring to this embodiment, each of the delta objects comprise meta data of the one of the data object whose change triggered the creation of the respective delta object. The method further comprises:
- storing, by a delta store management program, at least one command object in the at least one delta store, the at least one command object being indicative of one or more of the attributes of one of the DOs to be hidden, and being indicative of a time period during which the one or more attributes of the said DO shall be hidden, wherein the at least one delta store is access-protected and selectively allows the delta store management program and the framework to access the at least one delta store;
- traversing, by the delta store management program, all delta objects in the at least one delta store a first time for parsing the command objects and for obtaining a specification of the attributes and DOs which shall be hidden and the respective hiding time periods;
- traversing, by the delta store management program, all delta objects in the at least one delta store a second time for parsing the delta objects, thereby creating modified copies of the ones of the delta objects comprising attribute values to be hidden according to the specification, wherein in the modified delta objects the ones of the attribute values indicated in the specification are hidden if the delta object was created within a hiding time period indicated in the specification for this attribute value and for the one of the DOs whose change triggered the creationof this delta object, wherein the hiding is performed by deleting, anonymizing, pseudonymizing or encrypting the at least one attribute.

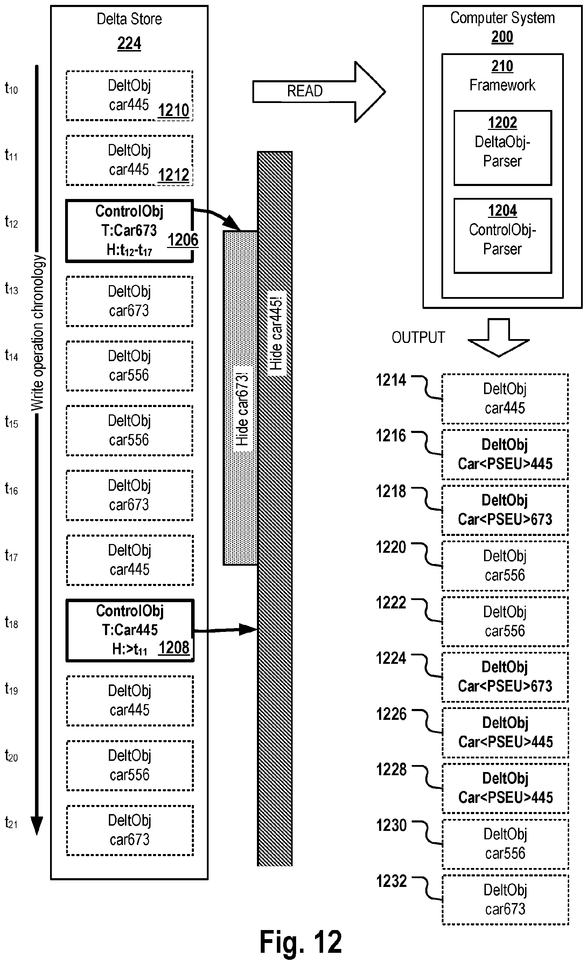

Embodiments of the invention may have the advantage that complex constraints regarding the identity of the DOs, the attributes and the time periods during which sensitive data shall be hidden can be specified. These constraints can be stored in the delta store at an arbitrary time and the hiding time period specified in the command objects may deviate from the storage time of the respective command object. The delta store management program and the framework (wich may in fact be the same software program in some embodiments) are the only programs allowed to access the at least one delta store. The delta store management program is configured to traverse the at least one delta store a first time for parsing the command objects and a second time for extracting delta objects and for selectively hiding attribute values identified as "sensitive" in the command objects. Hence, as the delta store management program is written such that the hiding instructions in the command objects are necessarily considered before information contained in the parsed delta objects is output to a recipient, and as no other application program is allowed to access the at least one delta store, it may be ensured that sensitive data is hidden. An example of an embodiment implemented according to option c) is described with reference to figure 12 further below.

According to further embodiments, the method further comprises:
- receiving an indication of a selected time;
- traversing at least some of the delta objects in the at least one delta store for automatically extracting UNDO or REDO operations from the traversed delta objects, the identity of the traversed delta objects depending on the selected time; and
- using the extracted UNDO or REDO operations for reconstructing the state of the application program at the selected time or for reconstructing an OLTP database having stored the state of the application program at the selected time.

Traversing a delta store for reconstructing the application program at the selected time (or for reconstructing the data content of the OLTP database at the selected time) may have the advantage that the reconstruction may be performed much faster than by analyzing an archive stored in the form of e.g. a conventional relational database. Preferably, each of the at least one delta store is an append-only store. Hence, a sequential scan of each of the at least one delta stores and the delta objects stored therein can be performed much faster than performing complex SELECT queries on multiple tables of a relational database.

Embodiments of the invention may provide the advantage that the archive may not only comprise the data processed by the application, but may also comprise dyman-ic information related to the data object changes which caused a data object to change state as a result of a change operationeration. Hence, a user may reconstruct the whole application program and its state for an arbitrarily selected time in the past.

According to embodiments, each of the delta objects stored in the at least one delta store comprises or is stored in association with an identifier of the integrated transaction ("transaction-ID") within which the delta object was created.

According to embodiments, the evaluation of the transaction-ID of the traversed delta objects allows performing the reconstruction of the application program or of the OLTP database in a transaction-save manner. For example, the REDO or UNDO operations can be performed within transactions whose borders (begin and commit event) are defined by a change of the transaction-ID of the traversed delta objects.

According to emboments, each integrated transaction defines a integrated transactional context in which:
○ a failure to store within the integrated transaction a delta object in the delta store and/or
○ a failure to perform within the integrated transaction an OLTP data store update reflecting a DO change in the application program and/or
○ a failure to perform within the integrated transaction a change operation on a DO in the application program
induces:
∘ a reversal of all DO changes in the application program having already been performed in the said integrated transaction; and
∘ a reversal of all OLTP data store updates having already been performed in the said integrated transaction; and
∘ a deletion of all delta objects having already been written in the delta store in the said integrated transaction.

The event "failure to perform within the integrated transaction an OLTP data store update reflecting a DO change in the application program" and the effect "reversal of all OLTP data store updates having already been performed in the said integrated transaction" may be absent in embodiments wherein the state of the application program is not persisted in an OLTP database by the framework. However, in some embodiments, the framework is configured to persist the delta objects in the at least one delta store and in addition to propagate any data object change performed on any one of the data objects by the application program to an OLTP database such that the OLTP database always reflects the most current state of the application program. Preferably, the propagation of the data object changes to the OLTP database is performed within the same integrated transaction within which the data object changes are performed and whithin which the respectively created delta objects are persisted.

According to embodiments, the method comprises sorting, by the framework, the ones of the delta objects created within different ones of the integrated transactions in accordance with the chronological order of the commit events of the integrated transactions comprising the respective delta objects. The framework performs the storing of the sorte delta objects in the at least one delta store such that delta objects belonging to the same integrated transaction are stored in accordance with the chronological order of their creation and such that delta objects belonging to different ones of the integrated transactions are stored in accordance with the chronological order of commit-ready-events of the integrated transactions comprising the respective delta objects. For example, a commit-ready event can be a signal provided by the application program to the framework that indicates that the current integrated transaction should be committed and all data object changes performed within this transaction shold be persisted to the at least one delta store.

Hence, according to embodiments of the invention, the chronological order of physical write operations for storing delta objects in the delta store depends firstly on the chronological order of commit-ready events of the integrated transactions and secondly depends on the timestamps within each of the delta objects created within an individual integrated transaction. Typically, each time stamp reflects the time of a change of a data object or class in the application program.

These features may be beneficial as they may ensure that a sequential scan of the physical storage areas in the delta store will provide a series of delta objects that is inherently ordered in accordance with the series of integrated transactions within which the DOs and/or classes of the application program were originally modified. A sequential read of a read/write head of a physical storage device will automatically, without any jump operations to distant physical storage areas and without any complex re-sorting of the read delta objects, provide a series of delta objects whose order corresponds to the order of original integrated transaction commit events and corresponds to the chronological order of the time stamps of the delta objects within a given transactional context. Hence, the series of delta objects that are obtained in a sequential read of the delta store can be used for reconstructing an original state of the application program (e.g. by applying UNDO commands derived from delta objects on an OLTP data store or directly on the application program as described for embodiments of the invention) very quickly and in a transaction-based manner that confirms to the ACID criteria.

In a further beneficial aspect, as the order of the delta objects obtained in a sequential read already corresponds to the order of changes performed in a series of transactions, it is not necessary to load a large number of delta objects or the whole content of the delta store into memory in order to perform a sorting, parsing or other form of data processing in memory. The delta objects obtained in a sequential read are immediately ready for performing a series of delta-object-based REDO or UNDO operations e.g. on data object of this or another instance of the application program or on an OLTP data store comprising data records respectively corresponding to one of the DOs of the application program) and hence have a very small "memory footprint". The above-described way of storing delta objects in the delta-store may allow for a very fast reconstruction of the state of the application program that requires only minimum memory consumption even in case the delta store comprise many terabytes of delta objects.

Depending on the embodiment, the delta store can be a single delta store and can comprise delta objects being indicative of data object canges in two or more different ones of the data objects of the application program.

According to preferred embodiments, the method comprises creating, by the framework, for each of the data objects of the application program, a respective data stream; and assigning, by the framework, to each of the data streams a respective delta store of the at least one delta store. The framework is configured to add every delta object created in response to a change operation performed on one of the data objecs selectively to the data stream created for this data object; and to perform the storing of the delta objects such that all delta objects being indicative of a change of a particular one of the data objects are added selectively to the data stream created for this data object and are stored selectively in the one of the delta stores assigned to this data stream.

This approach may have several benefits compared to using a single delta store for archiving all data object changes of the application program:
Firstly, using multiple delta stores may allow parallelizing both the storing process as well as the reading/delta object traversal process for reconstructing the application program or its data at a selected time.

Furhtermore, this embodiment may allow modifying individual data objects in the archive particularly fast, e.g. for hiding one or more attributes of the data object in the archive. As each data object corresponds to a respective delta store, the number of delta objects that need to be traversed until all delta objects related to this particular data objects have been processed can be reduced tremendously, thereby reducing CPU consumption and increasing the speed of data recovery.

According to embodiments, the method is performed on a computer system comprising multiple processing units. The method comprises automatically assigning the data streams to different ones of the processing units for processing the data streams in parallel.

In addition, or alternatively, the delta stores are different physical storage devices or storage areas within different physical storage devices. The storing of the data streams in the respective delta stores is performed in parallel.

Storing all delta objects describing changes of a particular data object via a respective data object specific stream in a respective one of the delta stores may have the advantage that both the storing and the later performed traversal of the stored delta objects may be performed in parallel. Hence, the scalability of the archiving and reconstruction can be increased tremendously. Furthermore, as the streams are stored on a per-data-object basis, logical conflicts or conflicts regarding read or write access to different delta stores can be avoided.

According to embodiments, the method further comprises:
- for each of the at least one delta store, automatically creating an asymmetric cryptographic key pair respectively comprising a private decryption key and a corresponding public encryption key;
- encrypting each of the delta objects stored in any one of the at least one delta store with the public encryption key created for this delta store;
- receiving a request for hiding data related to one or more of the DOs in the at least one delta store; and
- in response to receiving the request, identifying and deleting the one of the private decryption keys created for the one or more of the at least one delta stores comprising delta objects indicating a change of one of the DOs indicated in the request.

For example, these steps can be implemented by the framework or by a cryptographic key management program adapted to access the at least one delta store. Accoring to preferred embodiments, the at least one delta store comprises multiple delta stores, whereby each delta store corresponds to one of the DOs in the application program and selectively comprises delta objects indicating a change of this DO. This may have the advantage that the deletion or hiding of one of the private keys may automatically hide the information comprised in the respective delta store and hence all the data related to one particular DO, because without the private key, the data comprised in this delta store cannot be decrypted any more.

For example, the framework can comprise a permission management, user management and key-management module for automatically computing complex decision which user to provide with which ones of the private keys and/or which ones of the private keys to be deleted.

According to embodiments, the application program is configured for being used by multiple users concurrently. The creation of first ones of the integrated transactions is triggered by a first one of the multiple users. The creation of second ones of the integrated transactions is triggered by a second one of the multiple users. The storing of delta objects in the delta store comprises storing an identifier of the first user in association with the delta objects created within the first ones of the transactions and storing an identifier of the second user in association with the delta objects created within the second ones of the transactions.

According to embodiments, the begin of each of the one or more integrated transactions is triggered by a call to a function of the application program. The execution of the called function comprises performing the one or more change operations to be performed within the integrated transaction whose begin was triggered by the call. For example, the function can be a Java lambda function or another function that preferably provides a transactional isolation of change operations performed within this function from change operations performed in other functions. Preferably, the function is provided by and performed in the framework.

Preferably the call is performed in a data object of the application program. The function can be e.g. a lambda function, e.g. a Java lambda function.

According to embodiments, the one or more change operations to be performed within the one of the integrated transactions whose begin is triggered by the call to the function are provided to the function as function arguments.

An example of a function receiving a plurality of change operations as arguments is provided in the detailed description in the form of the lambda function *repository*.unitOfWork("add_data", (uow) -> {argument1, ..., argumentn}.

This may greatly facilitate transaction management and may ensure data consistency at a very low level of a software system architecture: as any call to a particular method provided e.g. by the framework will inherently begin a new transactional context and as the transactional context will be terminated with a commit (or a failure) automatically when the called function returns, the programmer of the application program is freed of the burden to explicitly begin and commit (or roll back) individual transactions. This may increase the quality of the application program and speed up the software development process as any manually defined, explicit transaction handling may result in inconsistences, e.g. when the developer forgets to close a transactional context.

According to embodiments, the creation and storing of the delta objects within the integrated transactions is implemented in the framework.

Preferably, the program logic of the framework encoding the creation and storing of the delta objects within the integrated transactions is hidden from the application program and is accessible only via an interface. The interface allows the application program to notify the framework of the begin of an integrated transaction and allow the application program to indicate which and how many change operations performed in the application program belong to this integrated transaction. However, the interface does not allow the application program to see or directly interact with the program logic used by the framework for creating and persisting the delta objects. This ensures that the programmer of the application program cannot accidentally or willingly modify or deactivate the archiving of data to the archive. Hence, a software developer can guarantee and prove, simply by writing the application program such that it interacts with the framework as described, that the archiving functionality provided by the framework is intact.

Likewise, in embodiments where the framework is configured for continuously updating an OLTP data store with data object changes performed in the application program within transactional context defined by the integrated transactions, the interface does not allow the application program to access ("see") or directly interact with the program logic used by the framework for performing these updates.

According to embodiments, the change operations comprise a class change operation. A class change operation is the creation, deletion or structural modification (e.g. modifying the number and type of attributes) of a class acting as template for a class-specific type of data objects. The changes induced by the class change operations are reflected in one or more of the delta objects.

For example, a class change operation can be a function that can be executed at the runtime of the application program. The framework is configured to automatically create a delta object in response to the execution of one of the class change operations, whereby the delta object is descriptive of the changes of the structure of the class and/or the structure of the newly created class and/or the identity of the deleted class. Any dynamically executed class change will result in a respective update of the DOs being instances of this class in the application program. For example, a removal of an attribute of an existing class will result in the removal of this attribute and its attribute value from all DOs which are instances of this class. The updating of the DOs is performed in a respective change operation. Preferably, the framework is in addition configured to update the object-relational domain model and the respective mapping accordingly such that the DOs that are created based on the changed class and the respective DO changes can be persisted in the OLTP database and/or to automatically create delta objects also for each DO change caused by a modification of the respective template class.

This may be advantageous as the change of a class structure may be handled fully automatically. It may be possible to reconstruct the state of the OLTP data store at an arbitrary time in the past even in case the structure of one or more classes used as templates for instantiating the DOs in the application program changed one or more times since this time in the past. Hence, structural changes to the classes are therefore no longer an obstacle when it comes to reconstructing a previous state of the application program and/or to reconstructing a previous state of an OLTP database representing the latest state of the application program.

According to some embodiments, the change operations comprise a modification of an association between two of the DOs. For example, the act of bying a particular product PR3434 by a particular customer CU556 can be represented in the application program by assigning the DO "CU556" the DO "PR3434", whereby the DO "PR3434" represents a property (i.e. attribute) of the CU556 DO. Hence, the creation of the association between DO CU556 and DU PR3434 corresponds to the modification of the CU556 DO and hence triggers the creation of a respective delta object in the delta store. Embodiments of the invention may have the advantage that not only DO states and state changes are persisted, but also DO associations and their changes.

According to embodiments, the method further comprises:
- receiving an indication of a selected time;
- traversing at least some of the delta objects in the at least one delta store for automatically extracting UNDO or REDO operations from the traversed delta objects, the identity of the traversed delta objects depending on the selected time;
- using the extracted UNDO or REDO operations for reconstructing the state of the application program at the selected time and/or for reconstructing the state of an OLTP-data store comprising the latest state of all DOs of the application program at the selected time.

For example, the reconstruction can be performed by the delta store management program (which may be the framework or another program). The extraction of UNDO or REDO operations from the traversed delta objects may be performed highly efficiently as the delta objects may be stored sequentially on adjacent physical storage areas (e.g. of a stored data stream or queue) in a data storage medium.

The UNDO or REDO operations may be specified in various languages, e.g. in the form of Java methods, but more preferably in the form of SQL commands such that the content of a relational database, in particular an OLTP database, at the selected time can be recovered. In some embodiments, the state of the application program can then be recovered from the recovered OLTP database based on an object-relational mapping.

According to embodiments, the method comprises displaying a GUI. The GUI comprises at least one GUI element, e.g. a selectable button, enabling a user to select a point on a graphical representation of a timeline. For example, the GUI may be provided by the delta store management program. In response to receiving the user's selection of the point on the timeline with the GUI element, the method comprises performing, e.g. by the delta store management program, the reconstruction of the application program and/or of the OLTP data store at the selected time.

According to preferred embodiments, the reconstruction is performed in real-time. Thanks to the sequential storing of the delta objects in the at least one delta store even large archives comprising several terabytes of data can be traversed at least partially within fractions of seconds, thereby providing for a real-time navigation in large archives, wherein the navigation can be associated with reconstructing the state of the OLTP database and/or of the application program at a selected time.

In a further aspect, the invention relates to a computer-implemented method of restoring data and/or of restoring an application program having created the data from an archive. The method is defined by the independent claims.

Each of the at least one delta store is an append only store, e.g. a storage area managed by a streaming framework. In preferred embodiments, the delta objects are stored in the at least one delta store in the form of one or more data streams of delta objects.

Using a delta-store based archive for persisting application data may have the benefits of increased scalability, complete data coverage, transactional consistency, increased software development speed and the ability to recover not only payload data, but also the state of an executable application program, at an arbitrarily selected moment in time.

According to embodiments, the selected time is a time before a failure of the application program or of a computer system hosting the application program happened. Hence, embodiments of the invention may not only be used for archiving data, but in addition for disaster recovery of data and application programs.

In a further aspect, the invention relates to a computer system defined by the independent claims, to which reference should be made.

The application program and the framework are respectively configured for:
- processing data by the application program, the application program thereby performing a plurality of the change operations;
- creating, by the framework, a plurality of delta objects in response to the plurality of change operations;
- storing, by the framework, the plurality of delta objects in the at least one delta store; and
- providing the at least one delta store as data archive. According to preferred embodimetns, the archive covers the history of all change operations of the application program.

Thereby, the plurality of change operations and the creation and storing of the delta objects are performed within integrated transactions. Each integrated transaction covers one or more of the plurality of change operations and covers at least the creation and storing of the delta objects triggered by the said one or more change operations within the said integrated transaction.

In a further aspect, the invention relates to a computer system for restoring the state of an application program. The system is defined by the independent claims, to which reference should be made.

In a further aspect, the invention relates to a computer-readable storage medium which is defined by the independent claims, to which reference should be made.

According to embodiments, any change operation performed within the application program during the whole lifetime of the application program (i.e., the total time in which the application program is instantiated, i.e. "running") is automatically persisted in the form of delta objects in the delta store and is, according to embodiments, in addition propagated to an OLTP data store for updating the OLTP data store. The automated storing of any data object change in a delta store in the form of an ordered sequence of adjacently stored delta objects may tremendously facilitate the implementation of complex monitoring and control programs for all kinds of technical and other processes and workflows, as it is not necessary to implement explicit reporting or logging routines for any relevant aspect of the program and it is not necessary to decide at design time of the program which functional aspect of the complex program will be of relevance to the end user. This is because any kind of change in the state of a data object in the application program will result in the creation and storing of one or more delta objects reflecting these changes that can be quickly traversed for performing any kind of analysis on the delta objects. Programming the application program or a framework that is interoperable with the application program such that delta objects are automatically created and stored upon every data object change in the application program may ensure that every single, small change of the state of the application program is persisted and can be used for reconstructing and/or analyzing the state of the application program quickly and easily. According to embodiments, the creation of a delta object and the storing of the delta objects in the delta store is automatically triggered by and/or inherently associated with the execution of one of the change operations in the application program. For example, the framework can comprise class files for each of a plurality of different predefined types of change operations and can be configured to automatically create the delta objects in the form of new instances of the one of the class files corresponding to the currently performed change operationeration.

According to embodiments, the data object changes induced by every change operation performed in the application program on any one of the data objects of the application program is represented in a delta object that is stored in the delta store (provided that the integrated transaction within which the change operation is performed, and within which the delta object is created and stored commits successfully).

This may be beneficial because it is ensured that every change of DOs in every submodule of the application program is recorded in the delta store in a consistent and transaction-safe manner.

### Delta Store

The delta store is a data store used for storing delta objects.

The delta store is a data store that is adapted to store and maintain the delta objects in such a way that they are stored in sequentially adjacent physical storage areas in accordance with the chronological order of physically writing the delta objects on the delta store. The delta store is an "append only store".

This means that the delta store is a data store that ensures that after a delta object is stored in the delta store, the physical storage area to which the delta object was stored is maintained even in case some background routines are performed which may typically modify the location where a data record is stored. For example, hard disc defragmentation routines may induce a modification of the physical storage area comprising a data records. This effect is disabled in the delta store according to embodiments of the invention: the delta store and the software used for storing delta objects in the delta store are configured to ensure that delta objects stored sequentially in chronological order one after another will be stored in adjacent storage areas in the delta store in accordance with the chronological sequence of their respective physical write events and this physical order of the delta objects in the delta store is maintained throughout the usage time of the delta store for storing delta objects of an application. Accordign to embodiments, INSERT operations for storing a new delta object in between already stored delta objects are not allowed. In some embodiments, also UPDATE and/or DELETE operations are also not allowed in the delta store and any amendment (e.g.pseudonymization) of a delta obect must be performed on a copy of the stored delta objects.

For example, the append only" delta store can be a data store managed by a queuing system and/or managed by a streaming application.

According to preferred embodiments, the delta store is a logical storage unit combprising a plurality of physical storage unit which are managed such that parallel write and/or read operatins can be performed on the delta store, e.g. for writing and reading delta objects. For example, the multiple physical storage units can be distributed physical storage units connected with each other via a network, e.g. the internet or an intranet.

This may have the advantage of a particular high performance, because multiple delta objects may be stored in parallel to the different physical storage units of the delta store. Often, read/write operations on a physical data store constitute the bottleneck of computer systems used for persisting, analyzing and/or restoring large amounts of data. Hence, by using a delta store comprising multiple physical storage units in combination with a software adapted to write and/or read the delta objects in parallel, the speed of storing and/or reconstructing the state of an application program can greatly be increased.

For example, the delta store can be managed by a combination of a queuing system system and a distributed in-memory database like Apache ignite or hazelcast which is configured to delivere a unique sequential ID for each of the delta objects stored in the qeue management system. The in-memory database can be configured to create unequivocal IDs that can be used as a kind of "queuing-system-generated" transaction-ID for each of the integrated transactions, whereby these type of transaction-IDs in combination with the timestamps of the delta objects may be used as unequivocal identifiers of the individual delta objects which allow storing a stream/queue of delta objects to many different physical storage units in parallel such that the original order of the delta objects in the stream/queue can be reconstructed. This may ensure that the original order of delta objects in the qeue/the stream of delta objects can be reconstructed although the delta objects were stored to different physical storage units. Hence, the reconstructed order of delta objects allows directly deriving UNDO or REDO operations which can be executed right in the order of their creation.

These embodiments have a particularly good performance and scalability.

According to embodiments of the invention, the delta store is a data store that is free of cross-table and inner-table constraints, in particular uniqueness constraints imposed by relational database management systems for primary key columns.

For example, the delta store can be a database table that is free of any constraints, in particular uniqueness constraints. Hence, in a further beneficial aspect, a sequential write (append only) of delta objects in the delta store is much faster in the delta store then traditional databases where a lot of updates has to be made which have to comply to various constraints to ensure data integrity and consistency.

For example, there exist specialized file systems which are optimize for fast, distributed storing of sequential data in multiple different, distributed physical storage units like LogDevice.

According to embodiments, the framework (or any other software in charge of storing the delta objects in the delta store) performs a grouping of the delta objects created within not-yet committed integrated transactions based on the transaction-IDs of the transaction within which the delta objects were respectively created. The grouped delta objects can be cached by the framework/the software in charge of storing the delta objects. Once one of these not-yet committed integrated transactions is ready for commit (e.g. after all change operations have been completed within the application program and should now be persisted), selectively all delta objects having been created within this particular "commit-ready" integrated transaction are stored in the delta store sequentially. The order of write operations which store multiple delta objects created in the said integrated transaction is in accordance with the timestamp comprised in each of the delta objects. Hence, according to embodiments of the invention, the chronological order of delta object related physical write operations in the delta store depends firstly on the chronological order of commit-ready events of the integrated transactions and secondly depends on the timestamps within each of the delta objects. Typically, each time stamp reflects the time of change of a data object or class in the application program.

These features may be beneficial as they may ensure that a sequential scan of the physical storage areas in the delta store will provide a series of delta objects that is inherently ordered in accordance with the series of integrated transactions within which the DOs and/or classes of the application program were originally modified. A sequential read of a read/write head of a physical storage device will automatically, without any jump operations to distant physical storage areas and without any complex re-sorting of the read delta objects, provide a series of delta objects whose order corresponds to the order of original integrated transaction commit events and corresponds to the chronological order of the time stamps of the delta objects within a given transactional context. Hence, the series of delta objects that are obtained in a sequential read of the delta store can be used for reconstructing an original state of the application program (e.g. by applying UNDO commands derived from delta objects on an OLTP data store or directly on the application program as described for embodiments of the invention or by applying the delta objects) very quickly and in a transaction-based manner that confirms to the ACID criteria.

In a further beneficial aspect, as the order of the delta objects obtained in a sequential read may already correspond to the order of changes performed in a series of transactions, it may not be necessary to load a large number of delta objects or the whole content of the delta store into memory in order to perform a sorting, parsing or other form of data processing in memory. The delta objects obtained in a sequential read may immediately be ready for performing a series of delta-object-based REDO or UNDO operations on an OLTP data store or on the application program directly (as described for embodiments of the invention) and hence have a very small "memory footprint". The above-described way of storing delta objects in the delta-store may allow for a very fast reconstruction of the state of the application program that requires only minimum memory consumption even in case the delta store comprise many terabytes of delta objects.

According to embodiments, the delta objects are provided to the delta store in the form of a stream of delta objects. For example, the framework may sort the delta objects firstly into groups of delta objects in accordance with a "commit-ready" time of the integrated transaction within which they were created, then sort the delta objects within each group according to their timestamp, and then provide the sorted series of delta objects in the form of a stream to a software adapted to store the delta objects in the delta store.

According to embodiments, the delta store is a streaming database. In this case, the software adapted to store the delta objects in the delta store can be a streaming application.

This may be advantageous because several currently available streaming databases and streaming applications already come with inbuilt functionalities that can be used for implementing the method and system for storing, reading and processing data records (here: delta objects).

For example the streaming application Apache Kafka has an in build Streaming component which is highly scalable, fault-tolerant, and secure (able to protect stored data against unauthorized access, e.g. based on encryption algorithms). It guarantiees delivery and exactly-once processing semantics which is very helpful for implementing the delta store. Other streaming applications which may be used for storing the delta objects are e.g. Hazelcast Jet or Ignite Streaming.

According to one example, the streaming application is Apache Kafka. Its storage layer is essentially a massively scalable pub/sub message queue designed as a distributed transaction log. Kafka can connect to external systems (such as the framework or other software program configured for creating delta objects) for data import/export via Kafka Connect, and it allows users and other applications to subscribe to it and publish data (e.g. delta objects stored and read by the Apache Kafka framework to and from the delta store to one or more other applications, including real-time applications.

According to preferred embodiments, the streaming application comprises one or more analytical functions that are applied on the delta objects before they are stored in the delta store and/or after the delta objects are read from the delta store. Example analytical functions include creation of "materialized views" for data aggregations (dashboards, statistics, etc.), predictive analytics (intelligent forcast from past data analysis), customer behavior pattern analytics, machine behavior pattern analytics (how many consumables were used/how many products fabricated by a particular machine) etc. All those analytical functions are possible because all data and the complete history thereof is available in form of the delta objects that are to be stored or that have already been stored in the delta store.

According to embodiments, the delta store is a data store managed by a queuing system.

According to embodiments, the streaming application comprises a windowing function. The windowing function is used for defining a timeframe (eg. time window) which is used for neartime analytics and / or data recovery. For example the windowing function provides a standardized SQL query interface to the stored delta objects for neartime adhoc queries and reports.

According to some embodiments, the method comprises changing the state of the application program (or a copy/new instance thereof) to a state that is identical to the state of the application program at an arbitrarily selected time in the past. The changing of the state comprises:
- identifying the one of the delta objects in the delta store belonging to the most recently committed integrated transaction and being the most recently stored delta object of all delta objects within the said integrated transaction;
- starting with the identified delta object, sequentially traversing the delta objects in the delta store until a downstream-termination delta object is reached, the downstream-termination delta object being the one of the delta objects that belongs to the one of the integrated transactions having committed first after the selected time and that was first stored in the delta store after the selected time, the traversing including the downstream-termination delta object and comprising sequentially undoing (e.g. in one or more UNDO operations) all DO changes specified in the traversed delta objects in the application program in which the DO changes were originally applied or undoing all DO changes in a new instance or copy of the application program that reflects the latest state of the application program.

The reconstruction of the application program (or a new instance thereof) at the selected time can be performed, for example, for crash recovery purposes, for increasing the robustness of the system against failures by providing multiple redundant copies of the application program, but also for performing debugging or testing purposes. For example, it may be beneficial to create multiple copies of a particular application program that represents the state of a complex industrial manufacturing process or a simulation thereof. It may be unclear with control parameter value (e.g. which temperature) provides the best result at a particular state in the workflow (e.g. a complex chemical process involving multiple sequentially executed reaction processes). By creating multiple instances of the application program having exactly the state of the original application program at a time of interest, it is possible to enter different control parameter values into the different application program instances and monitor the effect of the entered control parameter value on the outcome of the manufacturing process.

### OLTP data store

According to embodiments, the computer-implemented method further comprises:
- providing an OLTP-data store comprising the latest state of all DOs of the application program before the change operations were performed; and
- updating the OLTP-data store such that the updated OLTP-data store reflects the changes of the DOs caused by the change operations.

The updating of the OLTP-data store with the one or more DO changes created by the one or more change operations performed within the particular one of the integrated transactions is executed within the said integrated transaction.

The updating of the OLTP-data store with the one or more DO changes can be performed continuously to ensure that any data object change occurring after the OLTP data store was initially provided is updated such that it now also reflects these DO changes and hence continues to reflect the latest state of the application program.

For example, when the application program is instantiated the first time, and/or at any later moment in time, the totality of data objects contained in the application program can be persisted in the OLTP data store. Then, all changes induced by change operations performed in the application program after the OLTP data store was created are propagated to the OLTP data store and used for updating the data content of the OLTP data store. The updating is performed continuously to ensure that any change in the state of a data object in the application program is propagated to the OLTP data store. The OLTP data store hence is ensured to always represent the latest state of the application program and the data objects contained therein. As the updates are performed within the same integrated transactions within which the change operations are performed and within which the delta objects are created and stored, it is ensured that the state of the application program, the content of the delta store and also the content of the OLTP data store are always in sync and transactionally consistent. Hence, the application program is the place where the data objects are changed initially and where the integrated transactions are begin and committed. The OLTP data store is a data store that always reflects the latest state of the application program but that is preferably free of any data being indicative of a previous state of the application program and its data objects. The delta store is a data store comprising all changes introduced by the change operations in the application program (starting e.g. from an arbitrary user-selected time, e.g. the time when the application program was initially instantiated) in sequential order on a physical storage space, whereby the order of the delta objects in the physical storage area corresponds to the sequence of commit events of the integrated transactions comprising the delta objects and, within a given transactional context, corresponds to the chronological sequence of timestamps in the delta objects.

These features may be advantageous, as they may ensure that the data content of the OLTP data store is always available in a current, consistent state, whereby the OLTP data store preserves its OLTP capabilities and whereby in addition the data content of the OLTP data store at an arbitrarily selected time in the past can quickly be recovered by processing the delta objects stored in the delta store. This is because the data object changes are not only propagated to the OLTP data store in order to update the OLTP data store, the data object changes are in addition also persisted by means of delta objects in the delta store. The delta store preferably maintains the storage locations assigned to the individual delta objects in the moment of the physical write process. Hence, the chronological order of the physical write operations for storing individual delta objects is reflected by the series of adjacent storage areas to which the delta objects are stored. This ensures that a sequential scan/traversal of the delta objects in the delta store provides the delta objects exactly in the correct order needed to re-apply the changes encoded in the respective delta object on a previously created backup copy of the OLTP data store or to undo the changes encoded in the respective delta object on the OLTP data store that reflects the latest state of the application program. As a consequence, the recovery of the state of the OLTP data store can be performed very fast. The way the delta objects are stored in the delta store ensures that a read/write head of a physical data store device can quickly read all data object change information necessary for reconstructing the state of the OLTP data store at a selected time simply by sequentially traversing the delta objects in the delta store.

By propagating any changes made within the application program both to the OLTP data store and to the delta store, mission critical application programs can be provided whose state is synchronized with and reflected by the OLTP data store in real-time and hence can be used for many mission critical scenarios such as for control of fly-by-wire aircraft, anti-lock brakes on a vehicle, and the like. For example, one or more different client applications may access the OLTP data store in order to receive current status information of the application program without directly interfacing with the application program. The OLTP data store may comprise structured data being descriptive of the data objects in the application program in a program-m language independent/agnostic form. This may ensure indirect interoperability of the application program with many other (client) programs and systems via the OLTP data store even though the application program and the one or more client programs may be written in different programming languages and/or may lack interfaces for direct data exchange.

After the data object changes performed within a particular integrated transaction have been propagated successfully to both the OLTP data store and to the delta store, the transaction commits. According to embodiments, the commit event of an integrated transaction comprises removing all delta objects created within the committed integrated transaction from the cash of the framework that was used for creating the delta objects, for forwarding the delta objects to the delta store and for updating the OLTP data store with the respective data object changes.

### OLTP data store reconstruction I

According to embodiments, the method further comprises:
- receiving an indication of a selected time; for example, the selected time mentioned in this embodiment and in the embodiments described below can be received by the framework from a user interacting with a GUI element or from a client application having submitted a request comprising an indication of the selected time;
- reconstructing the state of the OLTP data store at the selected time, the reconstruction comprising:
   ∘ identifying the one of the delta objects in the delta store belonging to the most recently committed integrated transaction and being the most recently stored delta object of all delta objects within the said integrated transaction;
   ∘ starting with the identified delta object, sequentially traversing the delta objects in the delta store until a downstream-termination delta object is reached, the downstream-termination delta object being the one of the delta objects that belongs to the one of the integrated transactions having committed first after the selected time and that was first stored in the delta store after the selected time, the traversing including the downstream-termination delta object and comprising sequentially undoing (e.g. in one or more UNDO operations) all DO changes specified in the traversed delta objects in the OLTP data store or in a copy thereof.

The reconstruction of the OLTP data store at the selected time can be performed, for example, for crash recovery purposes, but also for performing some data analysis or reporting task by querying the OLTP data store in a state at a selected time of interest. This feature may be advantageous as the OLTP data store reconstruction can be performed very fast. The UNDO operations are obtained by linearly scanning a physical data store (the delta store) and deriving UNDO operations from the delta objects traversed during the scan.

These features may be advantageous as a method of reconstructing the state of an OLTP data store is provided that does not require the frequent creation of backup copies: as a previous state of the OLTP data store is created starting from the current version of the OLTP data store, the creation of a complete backup copy (snapshot) of the original OLTP data store is rendered unnecessary. The frequent creation of complete backups has been observed to be impracticable for large databases for space and performance reasons. OLTP data stores of complex applications, e.g. of large airlines, banks or manufacturing companies currently often comprise several petabytes of data. To the contrary, as the current OLTP data store state is always available, the problems associated with repeatedly creating database snapshot copies may be avoided completely.

According to embodiments, when the UNDO operations are executed on the OLTP data store, the UNDO operations are performed within transactions whose begin and commit times correspond to the begin and commit events of the integrated transactions within which the traversed delta objects were stored. This may be beneficial as the UNDO operations being performed within transactions whose begin and commit events correspond to the begin and commit events of the integrated transactions ensure that a previous state of the OLTP data store is obtained in a transactionally save manner. This also ensures that it is possible to repeatedly set the state of the OLTP data store to different time points of interest without risking data inconsistencies. Thus, the reconstruction of a state that never actually existed in the original OLTP data store as this state does not correspond to a state when all data object changes were committed can be avoided.

### OLTP data store reconstruction II

According to embodiments, the computer-implemented method further comprises:
- creating a backup of the OLTP data store at a time referred to as backup time;
- receiving an indication of a selected time;
- reconstructing the state of the OLTP data store at the selected time, the reconstruction comprising:
   ∘ identifying the one of the delta objects in the delta store belonging to the one of the integrated transactions having committed first after the backup time and that was first stored in the delta store after the backup time;
   ∘ starting with the identified delta object, sequentially traversing the delta objects in the delta store until an upstream-termination delta object is reached, the upstream-termination delta object being the one of the delta objects that belongs to the one of the integrated transactions that was last committed before the selected time and that was last stored in the delta store before the selected time, the traversing including the upstream-termination delta object and comprising sequentially applying ("re-doing", e.g. in one or more REDO operations) all DO changes specified in the traversed delta objects on the backup.

The reconstruction of the OLTP data store at the selected time based on a backup of the OLTP database can be performed, for example, for crash recovery purposes, but also for performing some data analysis or reporting task by querying the OLTP data store in a state at a selected time of interest. The redo operations are applied on the backup created most recently before the selected time.

These features may be advantageous as the reconstruction can be performed very fast. The REDO operations are obtained by linearly scanning physical storage areas of the delta store comprising a sequence of delta objects and deriving REDO operations from the delta objects traversed during the scan.

According to embodiments, when the REDO operations are executed on a backup copy of the OLTP data store, the REDO operations are performed within transactions whose begin and commit times correspond to the begin and commit events of the integrated transactions within which the traversed delta objects were stored. This may be beneficial as the REDO operations being performed within transactions whose begin and commit events correspond to the begin and commit events of the integrated transactions within which the delta objects were created ensure that the state of this backup copy is set to a later state in a transactionally save manner. This also ensures that it is possible to repeatedly set the state of the backup to different time points of interest without risking data inconsistencies. Thus, the reconstruction of a state that never actually existed in the original OLTP data store as this state does not correspond to a state when all data object changes were committed can be avoided.

These features may be advantageous as a method of reconstructing the state of an OLTP database is provided that may not require the frequent creation of backup copies: as the delta objects are organized sequentially on a data storage medium, they can be read very fast. A single OLTP database copy created e.g. upon the first instantiation of the application program may be sufficient. The creation of additional complete backup copies is possible, but often not necessary. This may safe processing power.

### OLTP data store reconstruction III

According to embodiments, the computer-implemented method further comprises providing an OLTP-data store copy at a time referred to as copy time. The OLTP data store copy comprises the latest state of all DOs of the application program at the copy time. The method comprises: after the copy time, continuously updating the OLTP-data store copy with delta object copies created after the copy time such that the updated OLTP-data store copy comprises and represents the latest state of all DOs of the application program. For example, the framework may traverse and parse delta objects in order to extract OLTP data store update commands from the delta objects and use the data store update commands for updating the OLTP data store copy. The OLTP data store copy can have the same or a different structure as the original OLTP data store copy.

According to preferred embodiments, the updating of the OLTP-data store copy with the copies of the delta objects created within any particular one of the integrated transactions is executed within the said integrated transaction. This means that in case the updating of the OLTP data store copy with a copy of one of the delta object fails, the creation of all delta objects within the same integrated transactions, the data object changes reflected by these delta object, the storing of the delta objects in the delta store and the updating of the OLTP data store with the said data object changes is aborted or revoked.

According to embodiments, the updating of the OLTP-data store copy with the copies of the delta objects is performed in near-time or real-time.

These features may be advantageous as the OLTP data store copy may be ensured to reflect the latest state of the DOs of the application program without applying any REDO or UNDO operations. This means that the OLTP data store copy which is continuously updated with copies of delta objects may immediately be used as a replacement for the original OLTP data store, e.g. for disaster recovery purposes.

According to embodiments, the OLTP data store copy is used for replacing the OLTP data store immediately and fully automatically in the case of a failure of the OLTP data store that is continuously updated by the framework.

The OLTP data store copy can be a remote OLTP data store copy or a local OLTP data store copy.

According to embodiments, the delta object copies are transferred to the remote OLTP data store copy via a network asynchronously (asynchronous in respect to the delta objects stored in the delta store).

These features may be advantageous as the creation of additional OLDP data store backups for disaster recovery purposes is not necessary any more as there is always an additional OLTP data store available that reflects the latest state of the application program and that can be used in case of an complete failure of the original OLTP data store.

### OLTP data store/application state reconstruction general

According to embodiments, when the REDO operations are executed on a backup copy of the OLTP data store, or when the UNDO operations are executed on the original OLTP data store, the REDO or UNDO operations are performed within transactions whose begin and commit times correspond to the begin and commit events of the integrated transactions within which the traversed delta objects were created and stored.

This may be beneficial as the REDO and UNDO operations being performed within transactions whose begin and commit events correspond to the begin and commit events of the integrated transactions within which the delta objects were created ensure that the reconstructed state of the OLTP data store or OLTP data store copy reflects a state of the application program and/or of the original OLTP data store that actually existed and that could be "seen" by application-program-external clients (which are not able to see uncommitted changes in the application program and in the OLTP data store).

According to embodiments, the reconstruction of the state of the application program at a selected time covers two aspects: in a first aspect, the state of the OLTP data store at the selected time is reconstructed based e.g. on UNDO or REDO commands derived from delta objects. These REDO or UNDO commands are performed within a transactional context (i.e., within reconstruction transactions) which corresponds to the borders of the integrated transactions indicated in the delta store. In a second aspect, the state of the application program is reconstructed from the reconstructed OLTP data store, e.g. based on an object-oriented domain model that maps data structures in the OLTP data store to data objects, attributes and object associations. The reconstruction of the application program from the OLTP data store can be performed outside of a transactional context. It can be performed after the reconstruction of the state of the OLTP data store has completed or, more preferably, is performed in parallel to the reconstruction of the OLTP data store, whereby each commit of a reconstruction transaction, the state of the data objects modified by the committed reconstruction transaction is updated.

According to embodiments, the method comprises reconstructing the state of the application program at the selected time. The reconstruction of the state of the application program comprises instantiating data objects in accordance with the state of the totality of data objects specified in the data content of the reconstructed OLTP data store.

Using the OLTP data store in combination with the stored delta objects for creating new instances of the application program may have the benefit of being able to flexibly create application program instances representing the state of an application program at an arbitrary time in the past. This may be highly advantageous for testing and error detection purposes in complex software systems. For example, in order to test the hypothesis that the entry of a certain parameter led to a faulty production control, it is possible to set the state of the application program back to a state right before this parameter was entered, entering a different parameter value and monitor the effect on this new parameter value on the production process controlled by the newly created instance of the application program.

These features may be advantageous, as the delta store may allow for a highly efficient, fast and memory-saving recovery of the OLTP data store at an arbitrarily selected time in the past. By recovering the state of the application program based on the recovered OLTP data store, embodiments of the invention provide for a method that allows for a highly efficient, fast and memory-saving recovery of a complex application program at an arbitrarily selected time in the past.

According to embodiments, the computer-implemented method further comprises:
- providing an input data store, the input data store being the OLTP data store or a copy or version thereof, the input data store reflecting the state of the DOs of the application program at a current or previous time;
- receiving an indication of a selected time;
- reconstructing the state of an input data store such that it reflects the state of the DOs of the application program at the selected time; for example, the input data store can be reconstructed at the selected time as described herein for different embodiments of the invention, e.g. based on reconstruction approaches I-III;
- creating a new instance of the application program (e.g. by closing and re-instantiation or creating an additional instance) such that the state of the new instance of the application program reflects the state of the application program at the selected time, the creation comprising:
   ∘ reading data being descriptive of the state of the plurality of data objects of the application program at the selected time from the input data store; and
   ∘ creating the DOs of the new instance of the application program and the associations between the said DOs in accordance with the read data, the said DOs and DO associations being created according to a predefined object-relational mapping of an object-oriented domain model to a database schema of the input data store.

### Integrated Transactions

Performing the change operations, creating and storing the delta objects and optionally also performing the updating of the OLTP data store within a plurality of integrated transactions spanning at least the application program, the software performing the storing operations in the delta store and optionally also the software in charge of updating the OLTP data store may be advantageous as the said operations are all performed in accordance with the ACID criteria: a change of one or more data objects or classes (including classes implementing method interfaces provided by the framework) performed within a given integrated transaction may ensure that changes of data objects or classes in the application program which are not successfully propagated to the OLTP data store via the OLTP data store updates or that fail to be persisted in the delta store in the form of delta objects are revoked in the application program. Hence, any OLTP data store reconstruction program that sequentially scans the data content of the delta store and/or that is to apply the UNDO or REDO operations on the OLTP data store or a copy thereof can be sure that neither the OLTP data store nor the delta store comprises any data object changes not contained in the application program. The reconstruction process can also be sure that neither the OLTP data store nor the delta store misses change information that has already taken effect within the application program.

According to embodiments, each delta object comprises a transaction-ID of the one of the integrated transactions within which the delta object was created and stored in the delta store. In addition, or alternatively, each delta object is stored in the delta storage in association with an identifyer of the one of the integrated transactions within which the delta object was created and stored in the delta store. For example, the transaction-ID can be a numerical value or an alphanumerical character string that is unique for all integrated transactions created and managed by a particular software program, e.g. a framework.

For example, the delta objects can be stored as key-value pairs in the delta store, whereby a combination of the transaction-ID and the timestamp of the delta object are used as key and the delta object is used as value. For example, all property values of the delta object can be stored in an XML object or a JSON object. This embodiment may ease the development of software programs and modules used for parsing the delta objects and creating REDO or UNDO operations adapted to re-apply or undo data object changes encoded in the delta object.

According to another example, the delta objects can be stored in the form of transaction-specific key-value pairs in the delta store. For example, all delta objects created within a particular transaction are combined together to form a single combined value. This value is stored (e.g. in the form of an XML or JSON object) in the delta store whereby the transaction-ID is used as the key. This embodiment may accelerate the reading and traversing of delta objects in the delta store as the amount of data that is read from the delta store per individual read operation is increased and the number of individual read operations may be reduced.

According to embodiments, each integrated transaction defines a integrated transactional context in which an event selected from a group comprising:
- a failure to store within the integrated transaction a delta object in the delta store and/or
- a failure to perform within the integrated transaction an OLTP data store update reflecting a DO change in the application program and/or
- a failure to perform within the integrated transaction a change operation on a DO in the application program
induces:
- a reversal of all DO changes in the application program having already been performed in the said integrated transaction; and
- a reversal of all OLTP data store updates having already been performed in the said integrated transaction; and
- a deletion of all delta objects having already been written in the delta store in the said integrated transaction.

These features may be advantageous as the integrated transactional context may ensure that the state (and the data content) of the application program, the state (and the data content) of the OLTP data store and the state (and the data content) of the delta store are always synchronized and consistent. In case a change operationeration in the application layer fails, the storing of all data object changes belonging to the same transaction as the failed change operation in the OLTP data store and the storing of all respective delta objects in the delta store will be prevented and any new OLTP data records and delta objects within this transaction that may have already been written to the OLTP data store or the delta store within the context of this failed transaction are deleted/revoked. Likewise, in case the storing of a delta object in the delta store fails or in case the updating of the OLTP data store fails, also the change operationeration in the application layer having triggered these storing operations and all other change operations within the same transactional context will be revoked in the application layer.

The strictly transactional data object change and storing process may be highly advantageous as it ensures that the reconstruction of the state of the OLTP data store at an arbitrarily selected time and in a guaranteed consistent manner can be performed quickly by scanning sequentially stored delta objects and directly applying REDO or UNDO operations quickly derivable from the delta object during this sequential scan.

It should be noted that the sequential scanning of the delta objects does not require the loading of large log files or large backup tables into the main memory which often makes state of the art recovery approaches very slow. As the way the delta objects are stored ensures they are provided in the order needed for a transactionally consistent OLTP data store recovery, it is not necessary to load the totality of delta objects into memory all at once. Rather, it is sufficient to process the delta object sequentially and hence with minimum memory consumption.

According to embodiments, each integrated transaction defines a integrated transactional context within which the performing of change operations in the application program, the storing of delta objects in the delta store and the performing of updates in the OLTP data store to reflect the said DO changes within the same integrated transaction is executed such that the ACID properties (Atomicity, Consistency, Isolation, Durability) are satisfied.

According to embodiments, the begin event of each of the one or more integrated transactions is triggered by a call to a function. Preferably, this function is adapted to receive the one or more change operations to be performed within this integrated transaction is provided by the application program as one or more arguments of this function. According to preferred embodiments, the call is performed by a data object of the application program. The function is provided by and performed in a framework that is interoperable with the application program. For example, the function can be a Java lambda function or another function that preferably provides a transactional isolation of change operations performed within this function from change operations performed in other functions.

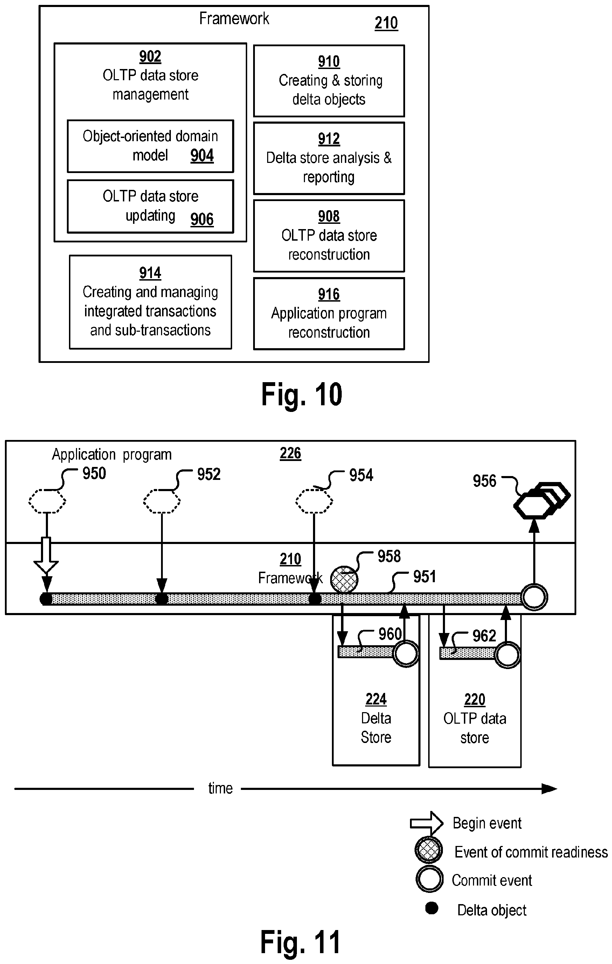

An example of a function receiving a plurality of change operations as arguments is provided in the figure description of figure 11 in the form of the lambda function repository.unitOfWork("add_data", (uow) -> { argument1, ..., argumentn}.

This may greatly facilitate transaction management and may ensure data consistency at a very low level of a software system architecture: as any call to a particular method provided e.g. by the framework will inherently begin a new transactional context and as the transactional context will be terminated with a commit (or a failure) automatically when the called function returns, the programmer of the application program is freed of the burden to explicitly begin and commit (or roll back) individual transactions. This may increase the quality of the application program and speed up the software development process as any manually defined, explicit transaction handling may result in inconsistences, e.g. when the developer forgets to close a transactional context.

According to embodiments, the creation and storing of the delta objects within the integrated transactions is implemented in the framework.

Preferably, the program logic of the framework encoding the creation and storing of the delta objects within the integrated transactions is hidden from the application program and is accessible only via an interface. The interface allows the application program to trigger the begin of an integrated transaction and allow the application program to indicate which and how many change operations performed in the application program belong to this integrated transaction. However, the interface does not allow the application program to see or directly interact with the program logic used by the framework for creating and persisting the delta objects. Likewise, in embodiments where the framework is configured for continuously updating an OLTP data store with data object changes performed in the application program within transactional context defined by the integrated transactions, the interface does not allow the application program to access ("see") or directly interact with the program logic used by the framework for performing these updates.

According to preferred embodiments, the program logic of the framework for creating and storing delta objects and, optionally, for repeatedly updating an OLTP data store, and for maintaining and controlling the integrated transactions (e.g. determining if the storing of delta objects and/or if an updated was performed successfully and, if not, performing revocation actions) is encapsulated and hidden from the application program logic. This may ensure that a developer of the application program at design time of the application program does not write any application program code that depends on framework-internal program routines for creating and persisting delta objects or updating the OLTP data store. The application program developer is merely able (and required to implement) calls to functions provided by the framework in order to begin a transactional context that is managed by framework-internal routines ant that automatically terminates (with a commit or roll back action) when the called transaction returns. Hence, the program logic of the framework is encapsulated and can be easily replaced, amended or updated without the need to amend any code in the application program. For example, framework-internal routines for creating, storing, reading and/or parsing delta objects, for updating the OLTP data store, for generating reports based on traversed delta objects or for recreating an instance of an application program or an OLTP data store at a selected time can be replaced, amended or updated without the need to amend any code in the application program. This may provide a great degree of flexibility to the programmer as the programmer is allowed to concentrate on the business logic of the application program. The task of handling and persisting changes of a data objects of the application program and/or the task of using the stored delta objects and/or an OLTP data store for analysis and recovery purposes is delegated completely to the framework which is accessed by the application program only via a defined interface. For example, the interface may comprise small set of interface classes and/or methods which hide implementation details from the application program.

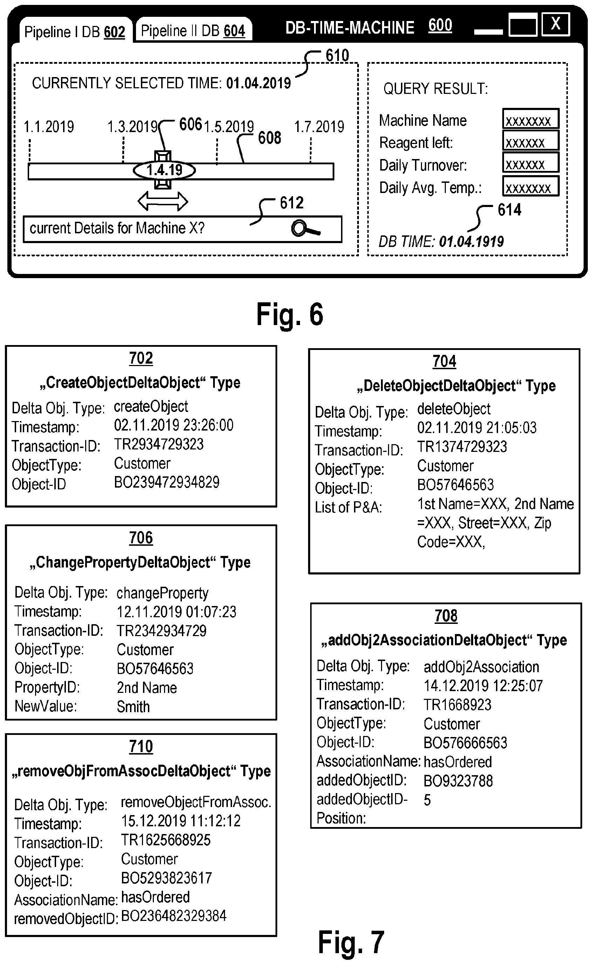

Hence, according to embodiments, of the invention, the change operations are operations performed within the application program, and hence represent functions and routines that are inherently linked to the data processing workflow performed by the application. Any data object change is automatically communicated from the application program to the framework and will be processed by the framework in a transaction-based manner .Some example implementations of how the integrated transactions are created and managed are described with reference to figures 7-11.

Hence, a programmer and software developer may fully concentrate on the development of the code that performs the actual data processing task, e.g. the control of a particular machine, and does not have to care about transaction management and does not have to write complex code in order to define when a transactional context should be created and when a transaction should commit. In some cases, the change operations can simply be provided as arguments to a function (e.g. a Java lambda function) that triggers the creation of a respective integrated transaction in the framework.

The function can be provided by the framework which may also comprise more complex transaction management logic. Providing the change operations as arguments to a function provided by the framework may have the advantage that a programmer will be automatically protected from forgetting to close a transactional context that was created previously, or implements change operations that are not persisted in the delta store or OLTP data store. By providing the change operations as arguments of a method, the compiler will ensure that the begin and end point of a series of change operations will always be encapsulated in an integration transaction context. If the brackets are not closed in the source code, the compiler will throw an error.

According to embodiments, any operation performed in the application program which changes one or more data objects (e.g. setting an attribute value, creating a new data object, deleting an existing data object) and/or which changes a class used as template for instantiating a data object automatically triggers the creation and begin of a respective integrated transaction and the successful completion of the said change operation within the application program triggers a commit event for the said transaction. This ensures complete transactional consistency of the data content of the OLTP database and of the delta store with the state of the data objects and the structure of the classes of the application program at any given moment in time.

According to embodiments, the delta objects are stored in the delta store in accordance with the chronological order of the commit events of the integrated transactions comprising the delta objects. For example, once all change operations which have to be performed in the application program within a given integrated transaction have completed, the integrated transaction is ready for commit and the framework starts persisting the delta objects of this integrated transaction in the delta store and, optionally, starts updating the OLTP data store with these changes. When the persisting of the delta object and the optional updating of the OLTP data store with the changes has successfully been executed, the integrated transaction that was "ready for commit" now actually commits. No other integrated transaction is allowed to store delta objects in the delta store unless the transaction that was ready for commit prior to this integrated transaction has successfully committed.

As a consequence, according to embodiments, the delta objects are stored in the delta store in accordance with the chronological order of the commit events of the integrated transactions comprising the respective delta objects.

According to embodiments, the delta store is used for reconstructing the state of the OLTP data store at an arbitrarily selected time. For example, the reconstruction can be performed by an OLTP data store reconstruction program. The framework or any other software application program can implement the functionality of the OLTP data store reconstruction program described herein for various embodiments of the invention.

According to embodiments, the traversing of the delta objects during the OLTP data store reconstruction process comprises:
- identifying, for each of the traversed delta objects, the one of the integrated transactions within which the delta object has been created and stored;
- performing the undoing of the DO changes specified in the traversed delta objects according to reconstruction approach I such that all DO changes specified in delta objects identified to have been created and stored in the same integrated transaction are undone in the OLTP data store or in the copy thereof within a common, single transaction; or
- performing the application of the DO changes specified in the traversed delta objects according to the reconstruction approach II such that all DO changes specified in delta objects identified to have been created and stored in the same integrated transaction are applied on the backup within a common, single transaction.

In other words, the borders of the integrated transactions within which data object changes and/or class changes performed within the application program were propagated both to the OLTP data store and to the delta store are used for reconstructing respective transactions during the OLTP data store reconstruction process (referred herein as "reconstruction transactions"). Hence, each reconstruction transaction corresponds to one of the integrated transactions used for propagating changes from the application program to the OLTP data store and the delta store. This means that the data changes specified in the totality of delta objects created within a particular integrated transaction are used for creating one or more respective UNDO or REDO operations for undoing (in the first reconstruction approach) or re-applying (in the second reconstruction approach) the said data changes on the OLTP data store or a previous version and copy of the OLTP data store.

This may be advantageous as it ensures that not only the process of storing the data object changes of the application program in the OLTP data store and the delta store is transactionally consistent, but also the process of reconstructing the OLTP data store at a particular time and the reconstruction process has the same transactional "granularity" as the delta store.

### The framework

In the following, several features of the framework used in the method and system according to embodiments of the invention will be described in greater detail.

In a further aspect, the invention relates to the framework and to a computer-readable volatile or non-volatile storage medium comprising instructions which, when executed, cause a processor to instantate and execute the framework as described herein for embodiments of the invention. The framework is configured to interact with the application program such that the framework is notified of any DO change performed by change operations within the application program, is notified of the begin and end of a plurality of integrated transactions within which the DO changes are performed and is configured to create and store delta objects being indicative of the DO canges, the delta objects being stored in at least one delta store, wherein the creation and storing of the delta objects is performed within thie integrated transactions within which the respective DO changes were performed.

According to embodiments, the framework is configured for sorting the delta objects in accordance with the order of integrated transaction "commit-ready" events and, within a given integrated transaction context, in accordance with the order of timestamps contained in the delta objects as described herein for embodiments of the invention.

According to embodiments, the framework is further configured for storing the (optionally sorted) delta objects in the delta store directly or for providing the (optionally sorted) delta objects to a software (e.g. a streaming application) that is configured to store the delta objects in the delta store.

According to embodiments, the framework is interoperable with an OLTP data store comprising the latest state of the DOs of the application program. The framework is further configured for continuously updating an OLTP data store such that any DO change induced in the application program by one or more change operations is reflected in the OLTP data store and thus that the data content of the OLTP data store always reflects the latest state of the DOs in the application program.

According to embodiments, the framework is further configured for performing the recovery of the OLTP database or a copy of the OLTP database and/or for performing the recovery of the application program at an arbitrarily selected time in the past as described herein for embodiments of the invention.

According to embodiments, the framework is interoperable with the application program. The framework is configured to manage the creation, commit and/or roll back of the integrated transaction, to perform the storing of the delta objects in the delta store and optionally also the updating of an OLTP database with data object change. The implementation of the said management and storing tasks is encapsulated and hidden from the application program such that the implementation of these tasks in the framework can be modified or exchanged without requiring a modification of the source code of the application program. The execution of any one of the DO change operations in the application program automatically induces the creation of a delta object being indicative of the change performed on the DO object.

According to embodiments, the framework comprises a function that is accessible to data objects of the application program for triggering the creation of an integrated transaction, whereby the created integrated transaction automatically terminates (with a commit or roll back event) when the called function returns.

According to embodiments, the function is configured to receive an indication of one or more change operations as function arguments, whereby the one or more change operations are performed in the application program and the indication of the one or more change operation is used by the framework for automatically creating one or more delta objects representing the data object changes induced by the change operations.

According to embodiments, the framework comprises classes for multiple different delta object types and the framework is configured for automatically selecting, in dependence on the type of change operation performed in the application program, the one of the multiple different delta object types that represents the type of data object change induced by the change operation.

According to embodiments, change operations comprise a class change operation. The framework is configured to create a delta object for this type of change operation in the same way as performed for any other type of change operationeration (like setting a new attribute value, creating a new data object or deleting a data object). This may provide a high degree of flexibility, because it allows changing the class structure of the application program at runtime without the need to modify and/or recompile the source code of the persistence logic.

According to embodiments, the framework comprises an object-oriented domain model and comprises functions for automatically performing the updating of the OLTP data store with the changes induced by the change operations in accordance with the object-oriented domain model fully automatically.

According to embodiments, the framework is configured to automatically update the object-oriented domain model in response to receiving an indication of a change operationeration that is a class change operation. For example, the object-oriented domain model may assign a particular table to a particular data object class and may assign a column of this table to each attribute of this class. The table is used for storing class instances of this class, whereby each attribute value is stored in a respectively assigned column. In case a class change operation that adds an additional attribute to a particular class, the updating of the object-oriented domain model may comprise adding an additional column to the table and updating the mapping. This may provide a high degree of flexibility, because it allows changing the class structure of the application program at runtime without the need to manually modify the object-oriented domain model used for updating the OLTP data store.

According to embodiments, the framework comprises a plurality of different interface methods respectively representing one out of a plurality of different predefined change operations. The execution of any one of the change operations in the application program automatically induces the execution of the one of the interface methods representing the type of the said change operations. Each interface method is configured to automatically create a change operation type-specific delta object being indicative of the change performed on the DO object.

According to embodiments, the plurality of DOs and their associations are defined in accordance with an object-oriented domain model. The storing of the DOs in the OLTP data store is performed by the framework such that the DOs and their attributes are stored in accordance with an object-relational mapping of the object-oriented domain model to a database schema of the OLTP data store.

The framework can be used as persistence framework for persisting delta objects and DO changes both to the delta store and the OLTP data store. In respect to the storing of the data object changes in the OLTP data store via the updates, the framework can be configured to handle object-relational impedance mismatch problems by replacing direct, persistent database accesses with high-level object handling functions.

In contrast to existing persistence frameworks such as Hibernate, the framework according to embodiments of the invention is more strongly connected to change operations performed in the application program as the change operations use interface methods provided by the framework. Hence, any change of a data object and even changes to classes used as templates for creating the data objects will inherently be communicated to the framework and as the framework comprises program code for creating and persisting the delta objects and for performing the OLTP data store updates, it is ensured that any change to the DO objects and/or class structures is immediately and automatically propagated to the OLTP data store without requiring a user to manually adapt the object-relational mapping between DOs and the data structures of the OLTP data store used for storing the latest state of the DOs of the application program.

Existing object-relational tools like Hibernate tend to render the application program inflexible and difficult to adapt to new requirements, because any amendment to the object-relational model of the DOs in the application layer would lead to an inconsistency in the object-relational mapping of Hibernate. Even in case it is possible to update the object-relational mapping of these persistence tools, then still there is the problem that the updated object-relational mapping does not fit to the table structure of database backups having been performed before the object-relational mapping was modified. Embodiments of the invention avoid this problem, because any change in a class file is represented as a respective delta object, and the traversal of this delta object would automatically induce a modification of the structure of the data in the OLTP data store.

According to embodiments, the change operations comprise a class change operation. A class change operation is the creation, deletion or structural modification (e.g. modifying the number and type of attributes) of a class acting as template for a class-specific type of data objects. The changes induced by the class change operation are reflected in one or more of the delta objects.

For example, a class change operation can be a function that can be executed at the runtime of the application program. The framework is configured to automatically create a delta object in response to the execution of one of the class change operations, whereby the delta object is descriptive of the changes of the structure of the class and/or the structure of the newly created class and/or the identity of the deleted class. Any dynamically executed class change will result in a respective update of the DOs being instances of this class in the application program. For example, a removal of an attribute of an existing class will result in the removal of this attribute and its attribute value from all DOs which are instances of this class. The updating of the DOs is performed in a respective change operation. Preferably, the framework is in addition configured to update the object-relational domain model and the respective mapping accordingly such that the DOs that are created based on the changed class and the respective DO changes can be persisted in the OLTP database and/or to automatically create delta objects also for each DO change caused by a modification of the respective template class.

This may be advantageous as the change of a class structure is handled fully automatically. It is possible to reconstruct the state of the OLTP data store at an arbitrary time in the past even in case the structure of one or more classes used as templates for instantiating the DOs in the application program changed one or more times since this time in the past. Hence, structural changes to the classes and/or to OLTP database tables are therefore no longer an obstacle when it comes to reconstructing a previous state of the OLTP database.

### Time Traveling in an OLTP database

According to embodiments, the computer-implemented method further comprises:
- Displaying a GUI, the GUI comprising at least one GUI element enabling a user to select a point on a graphical representation of a timeline;
- In response to receiving the user's selection of the point on the timeline with the GUI element, performing the reconstruction of the OLTP data store at the selected time in accordance with several different approaches described herein, wherein the selected time is the time selected by the user with the GUI element; and
- In response to the completion of the reconstruction, automatically updating the GUI such that the GUI indicates that the state of the reconstructed OLTP data store is the state of the OLTP data store at the selected time.

This may be advantageous as a GUI is provided that enables a user to dynamically move the current state of the OLTP-DB forward and backward in time, even in case the OLTP data store should comprise multiple megabyte or gigabyte of data.

According to embodiments, the user's selection of a point in the graphical representation of the timeline, the respective reconstruction of the OLTP data store and the updating of the graphical representation of the timeline are performed multiple times in real-time.

Using a GUI that enables a user to select an arbitrary time in the past in combination with a fast OLTP data store reconstruction method according to embodiments of the invention may be advantageous as these features allow a user to examine and use the data content of an OLTP data store at an arbitrary time in the past in real time without requiring the OLTP data store to store many snapshots or versions of the data content (which consumes a lot of storage space, reduces performance and imposes a challenge in respect to version management). Rather, according to preferred embodiments, the data content of the OLTP data store merely reflects a single, particular state of the data objects of the application program, e.g. the current state or the state at a selected time in the past. Thanks to the delta objects in the delta store, the state of the OLTP data store can be quickly reconstructed in real-time at an arbitrary time in the past, thereby enabling a user e.g. to perform error analysis of an industrial production pipeline or any other kind of analysis that spans a period of time.

According to embodiments, the state of an application program is synchronized with the state of the data content of the OLTP data store selected by the user via the GUI.

This may be advantageous as the user is enabled to set the state of a complex application program easily and in real time to an arbitrarily selected time in the past. This may allow performing complex error analysis tasks, performing an analysis regarding the behavior of the application program in response to different input data and many other use-case scenarios.

According to embodiments, the user's selection of a point in the graphical representation of the timeline, the respective reconstruction of the OLTP data store and the updating of the graphical representation of the timeline being performed within a session context of the user interacting with the GUI, wherein the reconstruction of the OLTP data store is performed on a session-based copy of the OLTP data store, the lifetime of the session-based OLTP data store copy being limited to the session context of the user.

The session-based dynamic reconstruction of an application program can be used, for example, for the purpose of debugging the application program and/or for testing how the application program or a system controlled by the application program behaved at a particular time in the past. Optionally, different input data can be entered into the previous version and respective instance of the application program than the input data actually provided at that previous time in order to assess the impact of the entered data on the process outcome. Providing session-based versions of the application program ensures that other users currently using this application program are nod adversely affected as the reconstruction of the application program state at the selected time was performed on a newly created, session-bound instance of the application program.

In a further aspect, the invention relates to a computer system comprising:
- a data store referred to as "delta store";
- an application program comprising a plurality of data objects - DOs, the application program being configured to perform change operations which respectively create, modify and/or delete at least one of the DOs in the application program, wherein the application program is configured for initiating the creation of one or more integrated transactions and for performing the change operations within the one or more integrated transactions;
- a software program (e.g. the application program or a framework operatively coupled to the application program or a combination thereof). The software program is configured for: creating, in response to the performing of the one or more change operations, delta objects, each delta object being descriptive of one or more DO changes caused by one of the change operations; and storing the delta objects in the delta store. The creation and the storing of the ones of the delta objects being descriptive of one or more change operations within a particular one of the integrated transactions is executed within the said integrated transaction. According to embodiments, this software program is also configured for creating and managing the integrated transactions. For example, the creation of an integrated transaction can be performed in response to a call of a function provided by the framework by a data object of the application program.

According to embodiments, the computer system further comprises an OLTP data store. The OLTP data store comprises the latest state of the DOs of the application program before the change operations was performed. The software program is configured for updating the OLTP-data store such that the updated OLTP-data store reflects the changes of the DOs caused by the change operations, wherein the updating of the OLTP-data store with the one or more DO changes created by the one or more change operations performed within the particular one of the integrated transactions is executed within the said integrated transaction.

In a further aspect, the invention relates to a computer readable medium comprising instructions that when executed by a processor causes the processor to execute a method for persisting data objects of an application program according to any one of the embodiments described herein.

In a further aspect, the invention relates to a computer-readable storage medium comprising computer-interpretable instructions which, when executed by a processor, cause the processor to provide a framework as described herein for embodiments of the invention.

According to some embodiments, the framework is operatively coupled to an application program comprising a plurality of data objects - "Dos". The framework further comprises an interface to a delta store and is configured for:
- receiving an indication of change operations which respectively create, modify and/or delete at least one of the DOs in the application program from the application program;
- in response to the receiving, creating delta objects, each delta object being descriptive of one or more DO changes caused by one of the change operations; and
- storing the delta objects in the delta store.

Thereby, the creation and the storing of the ones of the delta objects being descriptive of one or more change operations within a particular one of the integrated transactions are executed within the said integrated transaction.

According to embodiments, the framework implements additional functions such as one or more functions selected from a group comprising updating of an OLTP data store with DO changes, reconstructing the state of the OLTP data store or the application program at a selected time in the past, providing interface methods, providing templates for different types of delta objects, providing data object persistence routines in accordance with an object-oriented domain model that are automatically updated in accordance with dynamic modifications of classes of the application programs, and others. Various additional features and functionalities of the framework are described herein in combination with other features and components such as the delta store and the application program. However, the framework can be provided, sold and distributed in isolated form. The framework can be used by programmers for and during the development of new application programs, thereby enabling a programmer to develop application programs which make use of the framework and in particular its interface methods for developing application programs which implicitly trigger the creation of delta objects, the persisting of the delta objects to the delta store and the updating of the OLTP data store within integrated transactions whenever DOs or classes are modified in the application program. The developer may completely or largely be freed of the burden to explicitly write code for creating and persisting the delta objects, for updating an OLTP data store, for beginning, committing and rolling back failed integrated transactions, for persisting the latest state of the DOs in an OLTP data store according to an object-relational mapping and for generating reports as all these routines can be provided by the framework already.

A "computer system" as used herein is a machine or a set of machines that can be instructed to carry out sequences of arithmetic or logical operations automatically via computer programming. Modern computers have the ability to follow generalized sets of operations, called "programs", "software programs" or "software applications". These programs enable computers to perform a wide range of tasks. According some embodiments, a computer system includes hardware (in particularly, one or more CPUs and memory), an operating system (main software), and additional software programs and/or peripheral equipment. The computer system can also be a group of computers that are connected and work together, in particular a computer network or computer cluster, e.g. a cloud computer system. Hence, a "computer system" as used herein can refer to a monolithic, standard computer system, e.g. a single server computer, or a network of computers, e.g. a cloudcomputer system.

A "change operation" as used herein is any operation performed by and/or within an application program that creates a new data object of the application program (e.g. based on a class acting as a template for a new data object instance), and/or that modifies an existing data object of the application program (e.g. changes the value of a data object attribute) and/or that deletes an existing data object of the application program (e.g. changes the value of a data object attribute) and/or that creates, modifies or deletes a class to be used as a template for a data object.

A "transaction" as used herein is an atomic change of state of data. A transaction is a set of one or more data processing operations performed as an individual, indivisible unit of work. Each transaction must succeed or fail as a complete unit. It can never be only partially complete. Transaction processing systems, e.g. OLTP data stores, the framework and/or the delta store management program, can comprise a hardware- or software- based transaction-oriented controller that performs the routine transactions necessary to conduct a particular task such as manufacturing, process control, shipping, etc.

A "commit ready time" of an integrated transaction as used herein is the time when all change operations to be performed by the application program within this integrated transaction have been performed but the integrated transaction has not yet committed. This means that at the commit ready time, the delta objects reflecting the said data changes need to be stored to the delta store and optionally also need to be stored in an OLTP data store in order to commit this integrated transaction. The framework is configured to ensure that the integrated transaction commits only after a successful storing of all delta objects in the delta store and, according to some embodiments, after a successful updating of the OLTP data store with the data changes specified in the said delta objects. Accordingly, a "commit ready event" is an event that the framework is notified of the commit-ready-time of an integrated transaction.

An "integrated transaction" as used herein is a transaction that guarantees atomicity in "global transactions" that are executed across two or more software components. The two components can comprise, for example, the application program having executed the change operations and software that manages a data store, e.g. the framework. An "integrated transaction" could also be referred to as "cross-application transaction", whereby any software used for storing data in a data store may also be considered an "application". For example, an integrated transaction can be implemented in accordance with the X/Open XA standard (short for "extended Architecture"), a specification that was released in 1991 by X/Open for distributed transaction processing (DTP). To guarantee integrity, XA uses a two-phase commit (2PC) to ensure that all of a transaction's changes either take effect (commit) or do not (roll back), i.e., atomically. XA describes the interface between a global transaction manager and a specific application.

According to embodiments, the software that creates the delta objects uses XA to create integrated transactional contexts by instantiating an XA transaction manager using a library or a separate service. The transaction manager tracks the participants in the transaction (i.e. the various data stores to which the framework writes, i.e., the delta store and optionally also the OLTP data store), and works with them to carry out the two-phase commit. In other words, the XA transaction manager is separate from an application's interactions with servers. XA maintains a log of its decisions to commit or roll back, which it can use to recover in case of a system outage.

An "integrated transaction" is a transaction in accordance with the ACID criteria. An integrated transaction can cover, for example, the change operations performed within the application program and storing operations performed within the framework which stores the delta objects in the delta store. According to some embodiments, the transaction in addition covers storing operations performed within a software used for updating an OLTP data store with the data object changes. According to some embodiments, the integrated transactions are implemented based on the two-phase-commit protocol. According to other embodiments, other protocols can be used ensuring that all operations performed in the application program, the storing operations in the delta store and, optionally, the storing operations in the OLTP data store, which are performed within the same integrated transaction, are performed according to the "all or nothing principle": either they are all performed successfully (commit event), or they are all not performed or rolled back (failure/roll back event).

The "ACID" criteria (Atomicity, Consistency, Isolation, Durability) as used herein is a set of properties of transactions intended to guarantee validity even in the event of errors, power failures, etc. A sequence of operations performed in one or more different applications (e.g. data object changes within an application program and storing operations performed by one or more software programs maintaining a data store) that satisfies the ACID properties is called a transaction. Hence, all operations contained within a transaction represents a single logical operation on the data. For example, the creation of a new data object, the assignment of new attribute values to various attributes of the new data object and the storing of each delta object representing one of the said data object changes can be performed within a single transaction referred herein as "integrated transaction" as the transaction comprises operations performed in two or more different software programs.

A "data object", also referred herein as "DO", as used herein is a data object within a software application. According to preferred embodiments, a DO is an instance of a class written in an object-oriented programming language such as, for example, Java. For example, a DO can be a Java bean. A DO can comprise one or more variables, also referred to as "properties" or "attributes", and respective data values. In some embodiments, at least some of the DOs of the application program are text-based DOs such as XML objects or JSON objects.

Some DOs may merely comprise one or more variables and may be used for holding a set of instance variables and/or associations with other DOs, thereby weaving a network of objects representing the object relationships. Other DOs may in addition or exclusively comprise one or more methods, also referred to as "functions", for manipulating the variable values of other DOs and/or for performing any other kind of data processing task, e.g. for monitoring or controlling an industrial production workflow, for aggregating the data contained in a plurality of other DOs, for selecting one or more DOs fulfilling a particular criterion, for creating new DOs and/or for deleting DOs. Typically, the creation of a new DO is implemented as the creation of a new instance of a class and the deletion of an existing DO is implemented as the deletion of an instance of a class.

For example, a DO "car_237428348" would be an instance of the class "Car" comprising variables such as "Color", "Date of registration", "manufacturer", "type", "fuel consumption" and it could hold an 1-n association with its owners (a collection of "Person" instances). In addition, it can comprise getter and setter methods enabling other DOs to read and manipulate the variable values currently assigned to the variables of the a DO "car_237428348".

According to some embodiments, only business objects and classes used as templates for creating the business objects are considered to be a DO. The data objects used for purely program-internal data processing steps are not considered to represent a DO whose change triggers the creation of a delta object in the framework. In other words, according to some embodiments, the DOs of the application whose change triggers the creation of the delta objects comprise both business objects and non-business objects, wherein the non-business objects can be DOs implementing some application-program-internal workflows and processes which do not represent an aspect of the "business logic" implemented by the totality of business objects.

According to other embodiments, the DOs of the application whose change triggers the creation of the delta objects comprise only the business objects and not the non-business objects.

A "class" as used herein is an extensible program-code-template for creating data objects, providing initial values for state (member variables) and implementations of behavior (member functions or methods). In many programming languages, the class name is used as the name for the class (the template itself), the name for the default constructor of the class (a subroutine that creates objects), and as the type of objects generated by instantiating the class; these distinct concepts are easily conflated. When an object is created by a constructor of the class, the resulting object is called an instance of the class, and the member variables specific to the object are called instance variables, to contrast with the class variables shared across the class. In some programming languages, classes can only be declared at compile-time, not at runtime of the application program. In other languages, classes can be declared and their structure modified at runtime of the application program.

An "application program" or "application software" as used herein is software designed to perform a group of coordinated functions, tasks, or activities for the benefit of one or more users and/or for the benefit of an organization, e.g. a company. Examples of an application include a word processor, a spreadsheet, an accounting application, a web browser, an email client, a media player, a file viewer, an aeronautical flight simulator, or a maintenance or control program for a manufacturing process. According to preferred embodiments, the application program is a complex application program, e.g. an application program written in an object-oriented programming language such as Java and comprising thousands or even millions of DOs. The DOs dynamically interact with each other, are instantiated, modified and deleted at runtime of the software application and thereby represent and control important workflows and services implemented in the application software. For example, the application program can be an enterprise application software (EAS). The term EAS refers to a collection of computer programs with complex applications, tools for modeling how the entire organization works, and development tools for building applications unique to the organization. An EAS is intended to solve an enterprise-wide problem and aims to improve the enterprise's productivity and efficiency by providing technical control logic support functionality. EAS is computer software used to satisfy the needs of an organization rather than individual users. Such organizations include businesses, e.g. the mining, manufacturing, agricultural, energy, and service industries, and governments. For example, the application program can be an EAS configured to monitor or control one or more industrial production processes, e.g. in the context of the internet of things.

According to embodiments, the application program is a software program configured to display, process and manipulate large amounts of often complex data and to support and/or automate industrial production processes or other processes with that data. The application program typically is not a DBMS or a similar program for managing the storage of data provided by a different source but is rather a software program whose main purpose is to solve a technical and/or business-related problem. According to embodiments, the application program can perform manufacturing functions and/or many other functions such as order processing, procurement, production scheduling, customer information management, energy management, and accounting. It is typically hosted on servers and may provide simultaneous services to a large number of users, typically over a computer network. For example, the application program can be an enterprise resources planning (ERP) system, an EAS, or a customer relationship management (CRM) software.

The "business logic" or "domain logic" as used herein is the part of the program that encodes the real-world businessrules or domain rules that determine how data can be created, stored, and changed. It is contrasted with the remainder of the software that might be concerned with lower-level details of managing a database or displaying the user interface, system infrastructure, or generally connecting various parts of the program.

A "data store" as used herein is a repository for storing and managing collections of data. A data store can be an in-memory data repository or, more preferably, a non-volatile, persistent data repository. A data store can be a database, i.e., a collection of data managed by a database management system (DBMS), but also simpler store types such as files, directories, directory services, etc. A DBMS can be, for example, a DBMS configured for managing relational databases, object-oriented databases, NoSQL databases, key-value databases, wide column stores, etc. According to preferred embodiments, the data store used as the delta store is an append only store, e.g. a streaming database managed by a streaming management application such as Apache Kafka.

A "legacy application program" as used herein is an old application program implementing implemented based on an outdated, unsecure or erroneous code and is yet still in use. A "legacy application program" is software in need of replacement or update.

An "Online transaction processing (OLTP) data store" as used herein is a data store, in particular but not necessarily a DBMS, configured for supporting transaction-oriented applications and processes. In other words, an OLTP data store is a OLTP-capable data store. The OLTP data store can be an in-memory data store or a non-volatile data store. In particular, the OLTP data store can be configured to respond in real-time to requests of one or more users or client applications. An OLTP data store is a data store optimized for efficient, high throughput write operations such as INSERT and UPDATE database operations in the context of an OLTP-DBMS. According to embodiments, the OLTP data store is able to serve hundreds or even thousands of clients concurrently. An OLTP data store is any data store that supports OLTP queries. Often, the OLTP data store is a relational OLTP database maintained by an OLTP DBMS, in particular a relational OLTP DBMS. In some embodiments, the OLTP database is implemented as a graph-based DBMS, a table-oriented DBMS, a column-store DBMS, a row-store DBMS, an object-oriented DBMS (OODBMS) or other type of DBMS. OLTP is contrasted to OLAP (online analytical processing), which is characterized by much more complex queries, in a smaller volume, for the purpose of process workflow intelligence or reporting rather than to process transactions.

A "delta object" as used herein is a piece of data that is used for storing a change in one or more DOs. A delta object can be a data object created as instance of a class specified in an object oriented programming language, but can also have any other data format, e.g. an XML or JSON file. Preferably, a delta object comprises metadata being indicative of aspects of a change event (e.g. an ID of the DO that was created, deleted or modified, a timestamp indicating the time when the change operation that induced the delta object creation was applied to the DO in the application program, and the values of any changed variable after the change. Optionally, the delta object can in addition comprise the values of any changed variable before the change. Preferably, the delta object is free of any DO variable values which were not modified by the change operation.

A "timestamp" as used herein is a sequence of characters or encoded information identifying when a certain event is recorded by a computer, usually giving date and time of day, sometimes accurate to a small fraction of a second. The time at which the event is recorded by the computer can be used as an indication of the time of the event itself, in particular when the event happens within the computer itself, e.g. the event indicates a state change of a DO instantiated on the computer. For example, the timestamp can be specified in accordance with the ISO 8601 standard.

A "selected time" as used herein is a time, usually a combination of a date and optionally also an indication of a particular hour, minute and/or second, that can freely be selected. For example, the selection can be performed by a user, by a software program, by a hardware device, or the like. The selected time is not bound to any particularities of the application program, the framework, the delta objects or the OLTP data store described herein for embodiments of the invention.

A "change operation" as used herein is an operation that is performed within an application program and that changes the state of one or more DOs by creating, modifying or deleting a DO in the application program and/or that changes the structure of a class used as template for instantiating a DO. For example, the change operation can be the setting of a variable of a DO to a new value, the creation of a new DO, and/or the deletion of an existing DO. According to some embodiments, the programming language that was used for creating the application program allows declaring classes and/or modifying the structure of existing classes at runtime of the application program. In this case, the change operation can be the declaration of a new class in the application program and/or the deletion of an existing class and all DOs being instances of this class and/or the modification of the structure of an existing class. The modification of the structure can comprise adding an additional variable, adding an additional method, deleting an existing variable or deleting an existing method. According to embodiments, one of the change operations which triggers the creation of one or more delta objects is a modification of a class structure of a class comprised in the application program. The change of the class structure automatically triggers the propagation of these structural changes to all instances of this class in the application program, whereby each DO structure update performed during the propagation can also be a change operation that triggers the creation of a respective delta object.

An "object-oriented domain model" as used herein is a specification of static structures of classes and objects as well as their associations and optionally also their behavior. Preferably, the object-oriented domain model is stored in a data format that allows the automated creation of data container structures in the OLTP data store such that the data containers, e.g. tables or nodes of a graph, are adapted to store DOs and their associations in accordance with this model. According to embodiments, the model is maintained by a software that generates a graphical representation of the type and structure of object classes and their associations ("relations") specified in the model.

A "framework" as used herein is a piece of software. In particular, a framework is a universal, reusable software environment or a part thereof that provides particular functionality to facilitate development of software applications, products and solutions. Software frameworks may include support programs, compilers, code libraries, tool sets, and/or application programming interfaces (APIs) that bring together all the different components to enable development of a project or system. According to embodiments, the framework comprises at least some program logic (e.g. a software program or module) that is interoperable with any application program developed with this framework at runtime of the application program. The framework is configured for creating delta objects, for storing delta objects in a delta store, and optionally also for propagating DO chantes to an OLTP data store, and preferably also for creating and maintaining an integrated transactional context that covers DO changes in the application programs as well as the write operations performed in the delta store and optionally also the OLTP data store.

According to embodiments, the framework further comprises interface methods implemented by one or more classes of the framework. Hence, a DO executing a change operation will implicitly call and induce execution of some program code specified in the framework, e.g. code for creating delta objects and/or for creating and committing a transaction. According to embodiments, the framework in addition or alternatively comprises functionalities for persisting the current state of the DOs in the application program in accordance with an object-oriented domain model to a relational database used as the OLTP data store.

According to embodiments, the framework, dictates the overall flow of control in respect to the creation and storing of delta objects and optionally also in respect to the updating of the OLTP data store. The framework is preferably also in control of determining whether or not an integrated transaction has successfully completed or not and whether the integrated transaction should terminate with a commit or a roll back event. Hence, the flow of control in respect to these tasks is not dictated by the caller, the application program, but rather by the framework, which hides implementation details from the caller.

A "streaming application" as used herein is software configured to allow other applications to exploit a parallel processing of data. According to preferred embodiments, a streaming application is configured to allow other applications to exploit a parallel storing of data on many different physical data stores. Often, the bottleneck of data storing tasks is disc access performance, not CPU or memory capacity. Hence, a software application that allows parallel write (and read) operatins to many separate physical data stores which are managed in the form of a single logical "delta store" may have the advantage of a particularly high performance.

A streaming application may enable these applications to use multiple computational units, such as the floating point unit on a graphics processing unit or field-programmable gate arrays (FPGAs), without explicitly managing allocation, synchronization, or communication among those units.

According to embodiments, the streaming application is a software comprising a set of functions ("kernel functions") and that is configured to receive a sequence of data (a stream) and apply one or more of the functions on each element in the stream. According to embodiments of the invention, the stream of data is a stream of delta objects received from a framework that has created the delta objects. The kernel functions are usually pipelined. Streaming applications are configured to provide optimal local on-chip memory reuse in order to minimize the loss in bandwidth, accredited to external memory interaction when processing the data stream.

According to embodiments, the streaming application uses uniform streaming, where one kernel function is applied to all elements in the stream. Since the kernel and stream abstractions expose data dependencies, compiler tools can fully automate and optimize on-chip management tasks.

According to embodiments, the streaming application is adapted to using programming language features - eg. Java, Scala or Go - to get an optimal throughput of the processed data stream. For example, a compiler of the programming language used for writing the framework and the application program is used for optimizing the memory access and the kernel functions.

The streaming application can be, for example, Apache Kafka. Apache Kafka is an open-source stream-processing software platform developed by Linkedln and donated to the Apache Software Foundation, written in Scala and Java. Apache Kafka is a unified, high-throughput, low-latency platform for handling real-time data feeds. Its storage layer is essentially a "massively scalable pub/sub message queue designed as a distributed transaction log, making it highly valuable for enterprise infrastructures to process streaming data. Additionally, Kafka connects to external systems (for data import/export) via Kafka Connect and provides Kafka Streams, a Java stream processing library. Apache Kafka allows users to subscribe to it and publish data to any number of real-time applications.

According to embodiments, the streaming application is configured to store data objects, e.g., key-value messages, that come from arbitrarily many processes called producers. The data can be partitioned by the streaming application into different "partitions" within different "topics". Within a partition, the data object in the stream are strictly ordered by their offsets (the position of a message within a partition), and indexed and stored together with a timestamp. Other processes called "consumers" can read data objects from partitions. For stream processing, a streaming application can offer an API (e.g. the Streams API in the case of Kafka) that allows writing Java applications that consume data from the streaming application and write results back to the streaming application. For example, the framework that creates the delta objects and that may optionally in addition be configured to continuously update the OLTP data store may act as a producer that provides a stream of delta objects to the streaming application and that in addition acts as a consumer that receives a series of delta objects obtained by the streaming application sequentially scanning and traversing the delta store, e.g. for the purposes of using the read delta objects to reconstruct the state of the OLTP data store at a selected time.

A "streaming database" as used herein is a data store, wherein write and/or read access to this data store is controlled by a software referred to as "streaming application". In context of this invention a streaming database preferably fulfills some or all of the following criteria: sequence consistency and reliablility, guarantied delivery and transactional consistency, an "exactly once" semantics, security, scaleablility and fault tolerance.

A "stream" or "data stream" as used herein represents an unbounded, continuously updating data set, where unbounded means "of unknown or of unlimited size". According to some embodiments, a stream consists of one or more stream partitions, wherein a stream partition is an ordered, replayable, and fault-tolerant sequence of immutable data records (e.g. delta objects), where a data record is defined as a key-value pair. For example, Apache Kafka can be used for receiving one or more streams of delta objects from the framework and store the one or more streams in one or more delta stores managed by Apache Kafka.

A "windowing function" as used herein is a type of function supported by some streaming application which allow grouping of data records ("events") sharing a particular key for stateful operations such as aggregations or joins into so-called windows. Windows are tracked per record key. A window function implements a timeline that contains event data and enables a streaming application or another application to perform various operations selectively against the events within that window.

A "queuing system" or "message queuing system" as used herein is a software program configured to enable receiving a high frequence of messages in parallel. Preferably, a queuing system according to embodiments of the invention is in addition adapted to store batches of messages of a queue in multiple different physical data stores in parallel, whereby each message and/or message batch of the queue has an unequivocal message identifyer allowing the reconstruction of the original sequence of messages and/or message badges of the queue from the multiple different physical data stores. Preferably, a queuing system is adapted to register a plurality of subscribers to pull a message, or a batch of messages, from the queue. Each delta object may represent a message stored to the queue. A queue managing system preferably is configured for supporting transactions when pushing a message to the queue, thereby ensuring that the desired action (e.g. the storing of a delta object in the queue) is guarantied.

The data store managed by the queuing system for storing the queue is used according to embodiments of the inveintion as a delta store, i.e., as a data store used for storing delta objects. The queuing system may be used for creating and assigning unequivocal identifiers in the form of transaction IDs to batches of delta objects corresponding to the same integrated transaction. In addition, or alternatively, the delta store can manage the parallel read and/or write access to multiple different physical storage units used in combination to provide a single logical storage unit used as the delta store.

Although "streaming applications" and queuing systems have some conceptual differences, in praxis, several applications like Apache Kafka can both be used as streaming application and as queuing system.

A "delta store" is a data store used for storing delta objects.

According to preferred embodiments, the delta store is an "append only" data store, i.e., a data store that is adapted to store and maintain data records (in particular delta objects) in such a way that they are stored in sequentially adjacent physical storage areas in accordance with the chronological order of physically writing the data records on the delta store. Data stored on the delta store is maintained such that it is protected from later re-arrangement, e.g. by the operating system, for the purposes of storage optimization or for other purposes. For example, the delta store may not allow any insert operation for storing a new data record (e.g. delta object) in between already stored data records. Hence, the delta store according to embodiments of the invention is an "append only data store". According to embodiments, the append only data store allows modifying existing data records, e.g. for replacing a data record with an encrypted, anonymized or pseudonymized form.

In some embodiments, data, once written to the delta store, cannot be deleted or altered or moved to a different storage location for a predetermined length of time - or in some cases, forever.

In other words, a series of data records is stored in the delta store such that subsequent data records are written in adjacent storage areas and such that the chronological sequence of writing the data records is reflected in the series of adjacent storage areas comprising the respective data records. Hence, it is ensured that even after a long time and after various storage management routines that may be performed by the operating system, the order of data records as originally stored in the delta store is maintained. Examples for delta stores are volatile and/or non-volatile data stores managed by various streaming applications and/or qeueing systems such as LogDevice, Apache Ignite, Hazelcast, Apache Geode, Infinispan, ehcashe, Terracotta, and Apache Kafka.

The expression to perform a task in "real-time" as used herein means that the hardware and/or software systems performing this task is able to complete this task within a predefined maximum duration. Typically, this means that the said hardware and/or software system is subject to a "real-time constraint", for example from event to system response. Real-time programs must guarantee response within specified time constraints, often referred to as "deadlines". Real-time responses are often understood to be in the order of milliseconds, and sometimes microseconds or seconds. A system not specified as operating in real-time cannot usually guarantee a response within any timeframe, although typical or expected response times may be given. "Near-time" data is data that may not be guaranteed to be the latest data available but that is still highly up-to-date. Although there is a risk that the original data may already have changed compared to the near-time data, the probability of this happening is classified as low or irrelevant. Although the term near-time suggests a temporal proximity, the concrete form can differ considerably depending on the context. For example, stock market reporting may have a delay of only a few seconds in order to be considered "near-time".

An "interface method" as used herein is a definition of a method that can be implemented by a class and by an instance of this class. The interface method is not specified within the code of the interface class but is rather specified within the code of a class implementing the interface. For example, all methods and functions of the framework that are accessible by the application program can be implemented as interface classes, whereby the interface methods are implemented by classes of the framework that are inaccessible by the application program directly. The interface method provides a definition of the signature of a set of methods without specifying their complete implementation. An interface method may be contained in an interface class that may in addition define types that can be used to declare the type of variables or parameters and return values of methods.

Any software program described herein can be implemented as a single software application or as a distributed multi-module software application carried by one or more carriers. A carrier may be a signal, a communications channel, a non-transitory medium, or a computer readable medium amongst other examples. A computer readable medium may be: a tape; a disc for example a CD or DVD; a hard disc; an electronic memory; or any other suitable data storage medium. The electronic memory may be a ROM, a RAM, Flash memory or any other suitable electronic memory device whether volatile or non-volatile. The operations of the flow diagrams are described with references to the systems/apparatus shown in the block diagrams. However, it should be understood that the operations of the flow diagrams could be performed by embodiments of systems and apparatus other than those discussed with reference to the block diagrams, and embodiments discussed with reference to the systems/apparatus could perform operations different than those discussed with reference to the flow diagrams. Any method step described herein should be interpreted as a functional feature of a respective element of a computer system or software program and vice versa. In view of the wide variety of permutations to the embodiments described herein, this detailed description is intended to be illustrative. The scope of the invention is defined by the independent claims, to which reference should be made.

### Brief description of the drawings

In the following embodiments of the invention are explained in greater detail, by way of example only, making reference to the drawings in which:
- Figure 1A: is a flowchart of a method for storing data objects of an application program in an archive;
- Figure 1B: is a flowchart of a methof for restoring the state of an application program from an archive;
- Figure 2: is a block diagram of a computer system configured for persisting data objects of an application program;
- Figure 3: illustrates the data content of a delta store;
- Figure 4A: illustrates a process of reconstructing the content of an OLTP data store according to a first approach;
- Figure 4B: illustrates a process of reconstructing the content of an OLTP data store according to a first approach in a transaction-based manner;
- Figure 5A: illustrates a process of reconstructing the content of an OLTP data store according to a second approach;
- Figure 5B: illustrates a process of reconstructing the content of an OLTP data store according to a second approach in a transaction-based manner;
- Figure 6: depicts a GUI for real-time selection of the time and state of the data content of an OLTP data store;
- Figure 7: illustrates the data content of delta objects of various types;
- Figure 8: illustrates a the creation of delta objects in a framework;
- Figure 9A: illustrates the transaction based storing of delta objects in a single delta store;

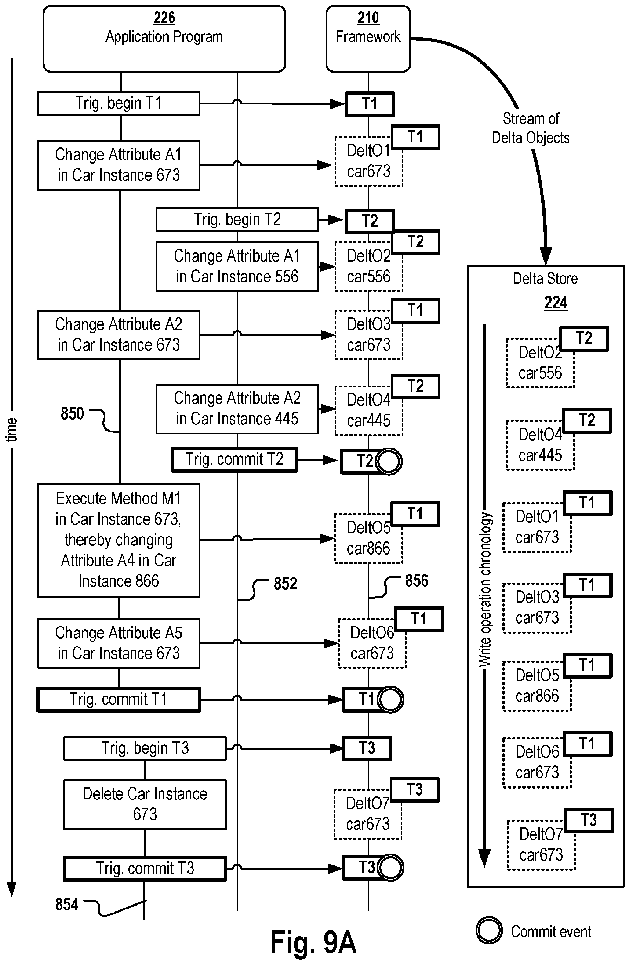

- Figure 9A: illustrates the transaction based storing of delta objects in multiple data-object specific delta stores;
- Figure 10: illustrates various sub-modules of the framework;
- Figure 11: illustrates the creation and management of an integrated transaction; and
- Figure 12: illustrates the hiding of information of the delta store using command objects.

### Detailed description

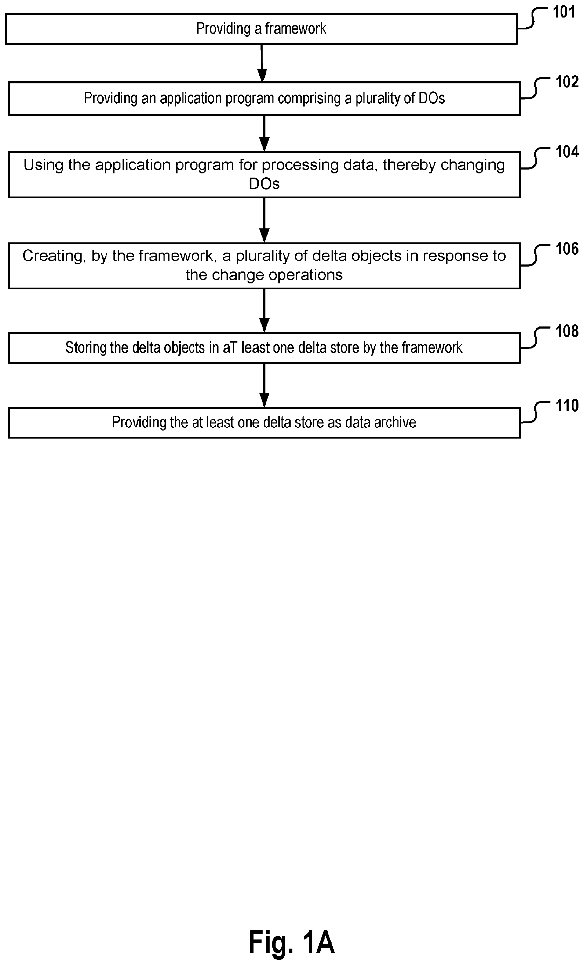

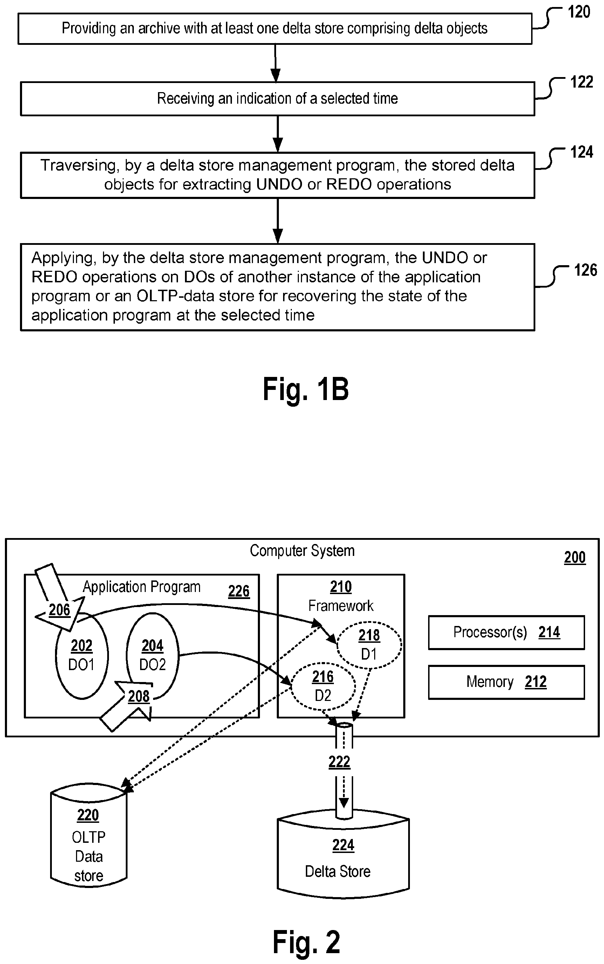

**Figure 1A** is a flowchart of a method for archiving data objects of an application program. The method can be implemented, for example, in a computer system depicted in the block diagram of figure 2. In the following, the method of figure 1 and the system of figure 2 will be described together.

In a first step 101, a framework 210 is provided. For example, the framework can be a software application, a software program library or software plugin configured for creating a plurality of delta objects within a transactional context and for storing the delta objects within the transactional context in one or more data stores refered herein as delta stores. The framework comprises an interface for exchanging data with a software application at runtime of the software application. The data exchanged between the application and the framework via this interface relates change operations performed on data objects (DOs) within the software program as well as indications of begin and commit borders of the transactions within which these changes occur in the application program and are persisted by the framework in the form of delta objects.The DOs can in particular be business objects representing objects and/or events of the real world which implement the business logic of the application program. According to preferred embodiments, the framework is used by a software developer already at design time of the applicaton program for programming the application program such that it exchanges data on change operations and transaction borders as described herein for embodiments of the invention. For example, the framework can be a Java program comprising a pluraliy of n delta object classes. Each delta object class is used as template for instantiating a delta object whose type and attributes are defined in the respective template. In addition, the framework comprises classes and methods for managing transactions and for storing delta objects into the achive.

Next in step 102, an application program 226 is provided comprising a plurality of data objects, e.g. Java objects, in particular Java business objects. For example, the application program 226 can be instantiated on a computer system 200 comprising one or more processors 214 and a main memory 212. The providing of the application program can comprise instantiating the application program the first time or any later moment in time that is to be used as basis for storing any future DO changes in the form of delta objects in the delta store.

Next in step 104, the application program is used for processing data. The application program can be written for any application purpose and data processing can be carried out in different ways for different purposes, e.g. for managing financial transactions, for controlling access to a building, for booking services or for controlling a technical workflow. Step 104 typically involves a series of data processing steps respectively involving a change operation performed on one or more DOs.

According to one example, the application program 226 can be a highly complex program for monitoring and controlling the production of a plurality of machine parts in a plurality of parallel industrial manufacturing processes. The software 226 may be able to monitor and represent the current state of a plurality of machines involved in the manufacturing process, to represent the current state, amount and/or availability of a plurality of consumables used during the manufacturing process, to represent the current state of intermediary products and waste products generated during the production process as well as the number, skills and identity of a plurality of persons in charge of various subtasks of the manufacturing process. The application program 226 can be based on an object-relational model of the world, wherein objects of different types such as "person", "intermediary product", "supplier", "consumable", "final product" or "vehicle" are specified in the form of Java classes acting as template for the creation (instantiation) of hundreds, thousands or even millions of class instances ("Java objects", "data objects") 202, 204. The name and address of the customers may constitute sensitive, personal data which may fall under specific legal or organizational regulations to protect personality rights. The number of data objects created or modified by the change operations, the attribute values of the data objects and the time when the data objects are created, modified and/or deleted depend on the class used as template for data object instantiation, on the workflow, various input parameters and other circumstances.

The application program can be written in an object oriented rogramming language. Hence, the data processing may involve executing change operations 206, 208 on data objects in the application program which represent relevant concepts and objects of a task to be solved. A change operation can be an operation that creates, modifies and/or deletes data objects in the application program. According to some embodiments, a change operation can also be an operation that creates, modifies and/or deletes a class used as template for instantiating one or more of the data objects.

The change operations performed in the application program 226 during step 104 trigger the creation of delta objects 216, 218 in step 106 by the framework 210. Each delta object is descriptive of one or more changes of one of the DOs caused by one of the change operations and comprises at least a timestamp indicating the time of the one change operation.

**Figure 2** shows two change operations 206, 208 corresponding to the assignment of the new value for the variable "color" and "sensor type" in data objects 202 and 204. Each change of a data object 202, 204 is automatically recognized by the framework 210. For each of the change operations, the framework creates a respective delta object 216, 218. The DO change operations 206, 208 and the creation of a respective delta object is performed within one or more integrated transactions covering at least the application program, the framework and the delta store 224. The framework caches all delta objects created within the same integrated transaction in a group-wise manner, sorts the groups in accordance with the commit ready times of the respective integrated transaction and/or in accordance with other criteria such as the object-ID of the object which was changed, sorts the delta objects of a given integrated transaction in accordance with their timestamps, and generates at least one stream of delta objects 222 sorted e.g. in accordance with the transaction-specific commit-ready times and the delta-object-specific time stamps. The sorted delta objects are provided in the form of a stream of delta objects 222 to the delta store 224.

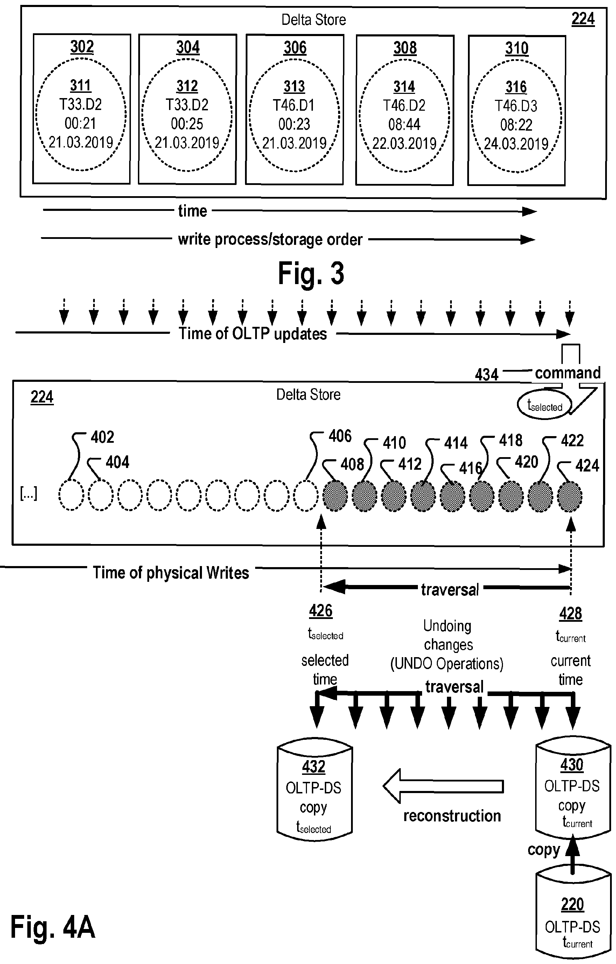

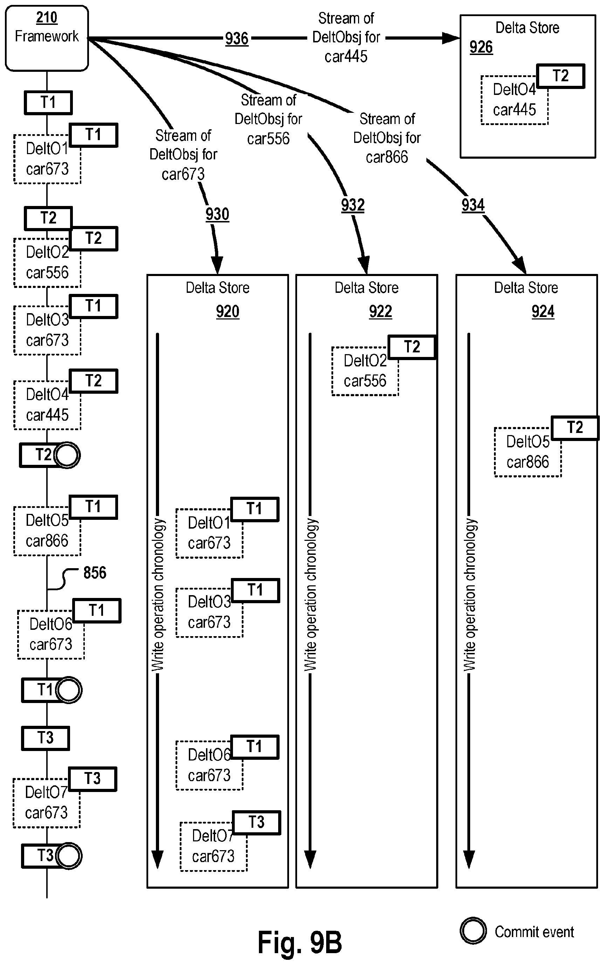

Next in step 108, the at least one stream of delta objects 222 is stored in the at least one delta store 224 used as archive. For example, the framework 210 can be used for storing the stream of delta objects into the delta store, e.g. directly or by providing the stream of delta objects to a streaming application configured to store the delta objects in the delta store. The delta store stores and maintains any data record in such a way that data records (e.g. delta objects) are stored in sequentially adjacent physical storage areas in accordance with the chronological order of physically writing the data records on the delta store. Figures 3, 9A and 9B illustrate the chronological order of the delta object writing process according to embodiments of the invention in greater detail.

The delta objects are stored within the same integrated transaction(s) within which they were created. This means that in case the integrated transaction comprises multiple DO change operations and one of them fails, or if the integrated transaction comprises the creation and storing of multiple delta objects and the creation or storing of one of these delta object fails, all DO change operations within this transaction are revoked, all delta objects created within this transaction are deleted from the cache of the framework, and all delta objects created within this transaction are not stored in the delta store or removed from the delta store in case they should have already been written. Only when the storing of the delta objects created within a given integrated transaction is performed successfully, the integrated transaction commits.

The data content of the at least one delta store is transactionally consistent with the application program. Furthermore, as any change operation triggers the creation of a respective delta object in the framework, the at least one delta store also comprises a complete history of data object and class changes performed while the application program was running. Hence, in step 110 the at least one delta store is provided as a transactionally consistent archive that is guaranteed to be complete.

According to some embodiments depicted for example in figure 2, the data changes described in the delta objects are in addition propagated by the framework to and persisted in an OLTP data store, e.g. a relational OLTP database. For example, the OLTP data store may be used as data source for one or more clients and/or can be used for reconstructing the state of the application program at a selected time in the past.

For example, an OLTP data store 220 can be provided that comprises the latest state of each of the data objects of the application program and hence reflects the latest state of the application program at the time when the OLTP data store is provided. For example, the providing of the OLTP data store be performed upon providing (e.g. installing, and/or instantiating) the application program and in this case the OLTP data store reflect the state of the data objects of the application program at the time of providing the application program.

The OLTP data store is not an archive as it comprises only the latest state of the application program, but it can be used in addition to the archive to make the current state of the application program available to other application programs via a different interface, e.g. via an SQL based query interface. The OLTP data store can be instantiated on the computer system 200 hosting the application program and the framework or on a remote computer system, e.g. a remote database server connected to the computer system hosting the application program via a network. In this case, the computer system 200 can be considered as a distributed computer system comprising multiple sub- systems. For example, this step can be performed when the application program is initially synchronized with and persisted in the OLTP data store as to ensure that the OLTP data store comprises and represents the current state of the data objects of the application program.

The OLTP data store is repeatedly updated such that the data content of the OLTP data store reflects the changes of the data objects caused by the change operations 206, 208. For example, the framework 210 can perform conventional SQL CREATE, UPDATE, INSERT or DELETE commands in order to store the changes in the data objects 202, 204 in the OLTP data store 220. The interaction of the applicationprogram and the framework ensures that any change of a DO introduced in the application program by a DO change operation is propagated to the OLTP data store.

The OLTP data store provides OLTP capability to the system meaning that one or more client systems or client applications can access the latest state and search specific attributes of the latest state of the DOs as reflected in the OLTP data store in real time. The last/current state of any DO in the application program is always stored in this OLTP data store and optionally made accessible to one or more clients via this OLTP data store.

Any change applied to a data object in the application program is propagated to the OLTP data store such that the OLTP data store always reflects the latest state of the data objects of the application program and hence always reflects the latest state of the application program itself.

Preferably, and as described in greater detail with reference e.g. to figures 9A and 9B, the change operations in the application program, optionally the write commands in the OLTP data store (e.g. INSERT SQL commands), and write operations performed on the delta store are performed within an integrated transactional context, to ensure that the data content of the application program, the OLTP data store and the delta store is always in a consistent state.

For example, a change operation 206 applied on data objects 202 can involve the change of a particular attribute value. The color of a data object representing an intermediate product may have assigned a NULL value upon instantiation. The assignment of the color value "green" in the application program can trigger a manufacturing step of painting or varnishing the intermediate product in "green". Then, a further change operation 208 is applied on data object 204. For example, the same variable, e.g. color, could be set to a particular value, e.g. "blue", or a different variable, e.g. "sensor type", being indicative of the type of sensor to be activated in the product, can be set to a new value (e.g. from "type I" to "type II").

The OLTP data store 220 can concurrently be accessed by a plurality of client applications which may operate on and require the latest state of the DOs of the application program (not shown). For example, a program for automatically ordering new consumables may repeatedly access the OLTP data store in order to determine the number and type of consumables still available and in order to determine whether it is necessary to automatically place an order for new consumables. The OLTP data store only comprises and reflects the latest state of the DOs of the application program. Hence, in case the OLTP data store crashes and/or becomes inconsistent, the OLTP data store may not comprise history data allowing to reconstruct the OLTP data store at a desired time in the past when the data was still consistent. However, the framework may use the delta objects in the delta store as described with reference to figure 1B for creating REDO or UNDO operations which re-apply or und the DO changes specified in a delta object and apply the UNDO or REDO functions on the OLTP data store or a backup copy thereof created previously.

Both the delta objects and the data records in the OLTP data store comprise or are stored in association with an identifier of the DO whose changes they respectively reflect.

The change operations 206, 208 are performed at runtime of the application program 226. According to embodiments, it is possible to instantiate and close the application program repeatedly without any limiting effect on the reconstructability of the state of the application program that may be stored in the OLTP data store based on the data in the at least one delta store. According to embodiments, the closing and re-instantiation of the application program 226 has an impact on transaction borders because the closing of the application triggers a commit event for all currently executed transactions and the closing process is delayed until all ongoing transactions have committed. Otherwise, the instantiation and closing the application does not have an effect on the way data is persisted to the OLTP data store and the delta store.

According to embodiments, each change operation performed in the application program corresponds to one delta object created in the framework, and each integrated transaction covers one or more change operations and the creation and storing of the respective delta objects. According to other embodiments, a single delta object can be indicative of multiple data changes and respective change operations.

The numerical ratio between change operations and respective delta objects may vary in dependence of the implementation, but a 1:1 ratio eases the data exchange between the application program and the framework.

**Figure 1B** is a flowchart of a method for restoring the state of an application program from an archive.

In a first step 120, an archive comprising one or more delta stores which respectively comprise a plurality of detla objects is provided. For example, the archive can be the archie provided in step 110 of the method of figure 1A.

Next in step 122, a delta store management program, which can be a separate software program or a module of the framework 210, receives an indication of a selected time. For example, a user may specify the selected time via a GUI. The selected time can be an arbitrary time in the past when the application program was already in use.

Next in step 124 the delta store management program traverses each of the at least one delta stores in the archive. Thereby, the delta store management program analyzes the delta stores and the transaction-IDs, object-IDs and data changes specified therein for extracting UNDO or REDO operations.

Next in step 126 the delta store management program applies the UNDO or REDO operations on data objects of the application program 226 or on data objects of another instance of this application program. For example, UNDO operations can be performed on an application program copy that represents the latest state of the application program for quickly reconstructing the state of the application program at a selected time in the past. Alternatively, the UNDO or REDO operations can be, for example, SQL commands which are applied on an OLTP data store that comprises the state of the application program at a particular moment in time. For example, each of the data records in the OLTP data store can be an ASCI text, e.g. an XML text or JSON text being descriptive of a respective one of the DOs of the application program 226 at this particular moment in time.

**Figure 3** illustrates the data content of a single delta store 224. The delta store preferably is or is part of a single physical data storage device comprising a plurality of data storage areas 302-310 respectively used for storing a delta object. A series of delta objects 311-316 is stored on the delta store 224 such that the chronological order of physical write operations corresponds to and is reflected by the sequence of adjacent storage areas 302-310 to which the delta objects are written. The sequence is maintained by the delta store. For example, the framework may use existing streaming programs such as Apache Kafka for storing delta objects in a streaming database maintained by the streaming program. This means that the physical storage location of a particular delta object does not change over time e.g. as a result of a storage optimization, defragmentation and/or swapping operation performed by the operating system or another program. For example, the delta objects 311, 312 belong to a first integrated transaction T33 while delta objects 313-316 belong to a second integrated transaction T46. Delta object 311 has the oldest timestamp of all delta objects of transaction T33, namely March 21, 2019, 00:21. Transaction T33 is ready for commit before transaction T46, therefore the delta objects 311, 312 are written to the delta store before the delta objects 313-316 of transaction T46 although the timestamp of delta object 313 is older than timestamp of delta object 312. The chronological order of physically storing the delta objects in the delta store in the embodiment depicted in figure 3 is represented by the time arrow below, meaning that the more to the left of the time arrow, the earlier the delta object is written to the delta store.

Storing delta objects in adjacent physical storage areas in accordance with the order of write operations may be advantageous, because the read/write head of the one or more physical storage devices constituting the delta store 224 can sequentially traverses and read the delta objects either in the original order of the delta object writing process (here: from left to right) or in reverse order (here: from right to left) very quickly, because the read/write head does not have to "jump" to distant storage locations as indicated by pointers or other types of links.

For example, starting from the most recently written delta object which may in some embodiments correspond to a current state of the OLTP data store 220, the read/write head can quickly traverse the delta store 224 depicted in figure 3 from right to left, whereby the data object changes indicated in each traversed delta object are used to automatically extract an UNDO operation that is performed on the OLTP data store, thereby reverting the current state of the OLTP data store to a previous state in a step-wise manner, wherein each traversed delta object represents a step.

Preferably, the stepwise reversal is performed such that the UNDO operations (corresponding to traversed delta objects) are grouped into "UNDO transactions". Each UNDO transaction comprises one or more UNDO operations corresponding to respective delta objects, whereby the begin event of each undo transaction corresponds to the commit event of the respective integrated transaction within which the delta objects used for creating the UNDO transaction were originally created and persisted, and whereby the commit event of each undo transaction is identical to the begin event of this integrated transaction.

For example, the traversal of the delta store by the read/write head from right to left would comprise reading and parsing delta object 316 first and creating a first UNDO operation, then reading and parsing delta object 314 and creating a second UNDO operation and then reading and parsing delta object 313 and creating a third UNDO operation. The first, second and third UNDO operations are bundled into a first UNDO transaction and executed together on the OLTP data store in accordance with the ACID principles. Then, the delta object 312 is read and parsed for creating a fourth UNDO operation and delta object 311 is read and parsed for creating a fifth UNDO operation. The fourth and fifth UNDO operations are performed within a second UNDO transaction on the OLTP data store after a successful commit of the first UNDO transaction.

An "UNDO operation" as used herein is a command or function created based on DO change information stored in a delta object and that, if applied on any data entity (e.g. a data object or class or database record) representing the DO whose changes are reflected in this delta object, revokes these changes in the data entity.

Likewise, starting from an old state of the OLTP data store 220, e.g. from the state of the content of the OLTP data store 220 as created upon storing a backup copy of the OLTP data store, the read/write head can quickly traverse the delta store 224 depicted in figure 3 from left to right, whereby the data object changes indicated in each traversed delta object are used to automatically extract a REDO operation that is performed on the old version of the OLTP data store (the "backup"), until a desired state of the OLTP data store, e.g. the current state of the OLTP data store or the state at any other, arbitrarily selected time, is obtained. The REDO operations for recreating the OLTP data store at a selected time can be performed in a step-wise manner, wherein each traversed delta object represents a step.

Preferably, the stepwise reconstruction of the OLTP data store is performed such that the REDO operations (corresponding to traversed delta objects) are grouped into "REDO transactions". Each REDO transaction comprises one or more REDO operations. Each REDO transaction comprises one or more REDO operations corresponding to respective delta objects, whereby the begin event of each REDO transaction is identical to the begin event of the respective integrated transaction within which the delta objects used for creating the REDO transaction were originally created and persisted, and whereby the commit event of each REDO transaction is identical to the commit event of this integrated transaction.

A "REDO operation" as used herein is a command or function created based on DO change information stored in a delta object and that, if applied on any data entity (e.g. a data object or class or database record) representing the DO whose changes are reflected in this delta object, re-applies these changes on the data entity.

For example, the framework can be configured to create and execute an UNDO command as follwos:
- reading all delta objects in sequence related to a particular integrated transaction (trx0 - 1) whose changes are to be undone from the delta store
- opening a reconstruction transaction on the OLTP data store;
- for each of the read delta objects of this particular, already "persisted" integrated transaction:
   ∘ extracting the object Id from the delta object,
   ∘ retrieving the one of the data records (e.g. an XML document, a JSON document, a table or a table line) in the OLTP data store which comprises the extracted object id from the OLTP data store
   ∘ identifying the type of delta object (changePropertyDeltaObject, addAssociationObjectDeltaObject etc.) of the retrieved delta object;
- committing and closing this reconstruction transaction; as a consequence, the OLTP data store has the exact state of (trx0-1); and
   repeating the above-mentioned steps for all delta objects created and stored within the integrated transaction (trx0 - 2) until the begin timestamp of (trx0 - x) is smaller or equal the selected time.

Since the delta objects are stored strictly sequentially in the storage areas and their position does not change during the storage period, the read/write head can very quickly read out and immediately process all information required for the reconstruction (also referred to as "restoring") of the application program and/or the OLTP data store by performing a sequential scanning of the physical storage medium.

Embodiments of the invention may allow reconstructing the state of an application program and/or of an OLTP data store used for persisting the latest state of the application program very quickly, e.g. within a few seconds. Accordign to one implementation example, the data changes stored in 5000 integrated transactions could be restored in an OLTP data store within only one second on a computer system having standard hardware equipment. This is because the reconstruction is based on a sequential scanning of adjacent physical storage areas and the immediate application of information obtained by linearly scanning of one or more storage devices. According to preferred embodiments, data obtained in the scanning process is already organized in the form of transactions whose "borders" (begin and commit events) correspond to integrated transactions having been used for applying and persisting delta object changes originally. For example, the "borders" of an integrated transaction can be derived from the transaction-IDs of the traversed delta objects. Hence, the UNDO/REDO operations obtained during the scanning process can immediately performed on an OLTP data store in a transaction-based manner, thereby ensuring that the state of the OLTP data store is reconstructed in a consistent manner in accordance with the ACID criteria.

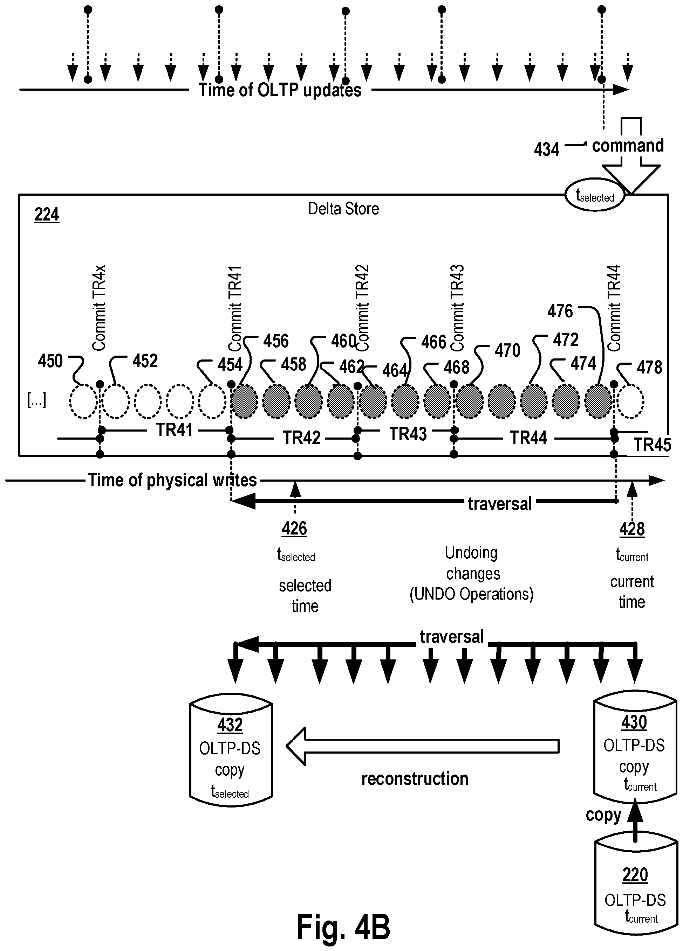

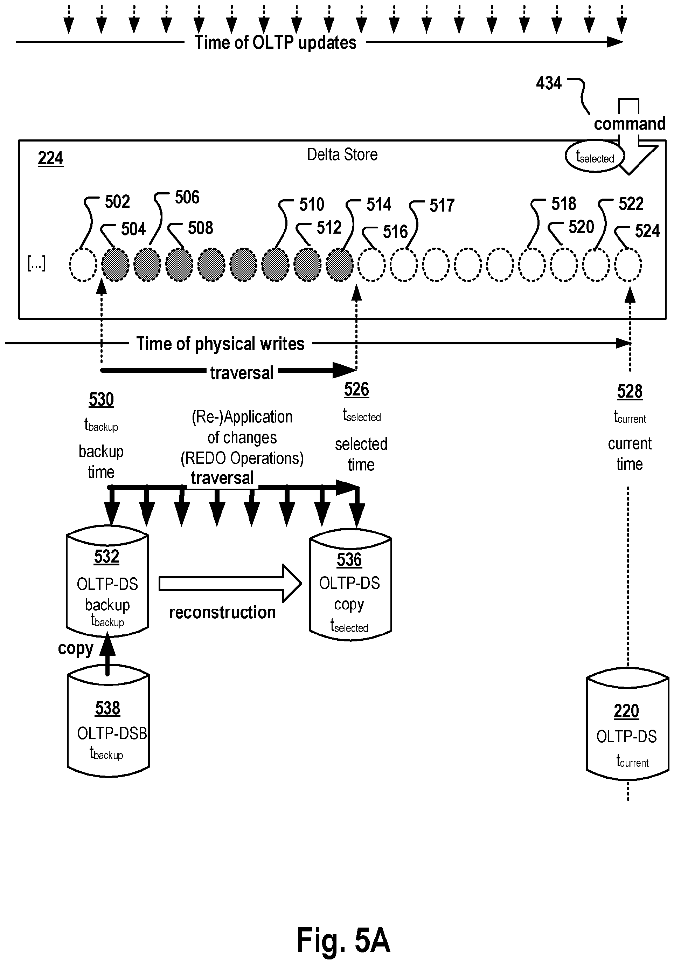

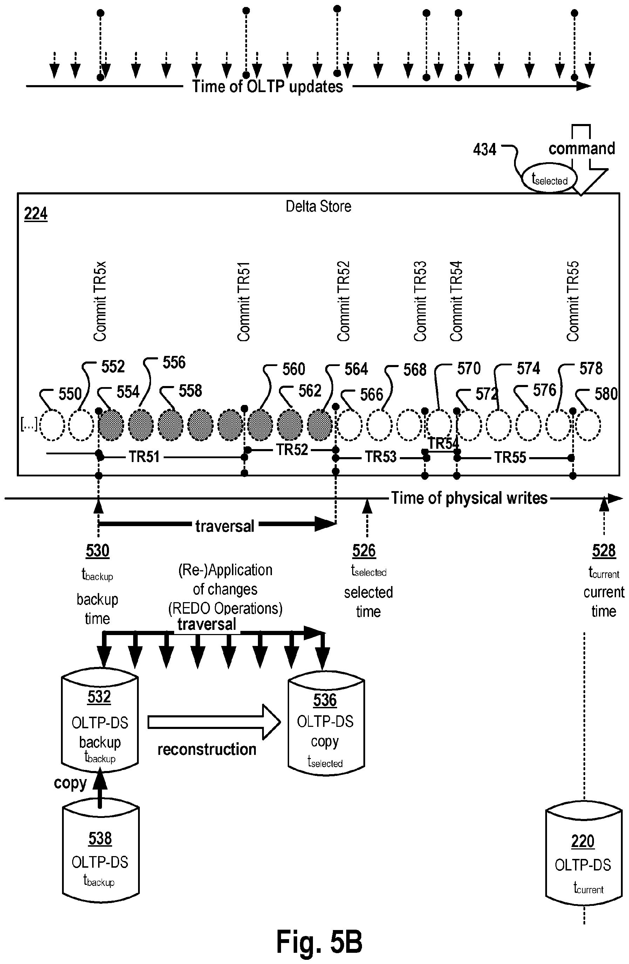

**Figure 4A** illustrates a process of reconstructing the content of an OLTP data store based on a first reconstruction approach that comprises traversing delta objects and performing UNDO operations. The reconstruction of the application program can be performed analogously to the reconstruction of the OLTP data store described in figures 4 and 5 based on UNDO or REDO operations obtained by parsing delta objects, but in this case the created UNDO/REDO operations are less generic and more difficult to create as they have to manipulate data objects of an application program at runtime and hence cannot make use of generic data manipulation languages such as SQL.

In the example depicted in figure 4A, the reconstruction of the data content of the OLTP data store at an arbitrarily selected time is performed starting from a current version of the OLTP data store.

At first, a time specification is received that corresponds to a state of a OLTP data store that is to be reconstructed. This time can be an arbitrarily selected time and is referred herein as "selected time". For example, a user or an application program can send a command or a request 434 that is indicative of a selected time 426 in the past. The receiving of the selected time 426 can trigger the reconstruction process. The time when the selected time is received and/or when the reconstruction process starts is referred to as "current time" 428. In an optional step, in response to receiving the selected time, a copy 430 of the original OLTP data store 220 can be created, whereby the data content of the copy 430 as well as the original OLTP data store 220 respectively reflect the current state of the data objects of the application program 226. The reconstruction of the state of OLTP data store 220 at the selected time 426 can be performed on the copy 430. Alternatively, it can be performed on the original OLTP data store 220 (e.g. in case it is not necessary to maintain the current state of the OLTP data store for some reason). For the sake of simplicity, the following description is based on the assumption that the reconstruction is performed based on the OLTP data store copy 430 but the reconstruction process could likewise be performed on the original OLTP data store 220.

The delta store 224 comprises a plurality of delta objects 402-424. The earlier the delta objects have been stored in the delta store, the further to the left they appear in the box 224 in Figure 4A, which represents the delta store. The later the delta objects have been stored in the delta store, the further to the right they appear in the box 224.

A data store reconstruction software, e.g. a program module of a streaming framework, a program module of the framework 210 used for creating the delta objects or any other type of application program, is configured to traverse the delta store 224 from right to left until the one 408 of the delta objects is reached that is the first delta object physically stored in the delta store after the selected time 426. In the depicted example, delta objects 424, 422, 420, 418, 416, 414, 412, 410 and 408 are traversed, but not delta object 406 or any delta object 402, 404 further to the left. Each traversed delta object comprises an indication, e.g. an identifier, of the one of the data objects of the application that was changed and whose change is represented by this delta object, and comprises of one or more attributes which where amended by this change.

For each of the this one or more attributes, the attribute value before the change event and after the change event is specified in the delta object.

In case the change operation reflected by the delta object changed a class used as template for instantiating data objects in the application program rather than a data object, the delta object comprises a class-ID of the changed class and indicates the structure of the class before and after the change such that the state of the changed aspect of the class before and after the change can be derived from the delta object.

According to the embodiment depicted in Figure 4A, the OLTP data store reconstruction software is configured to parse each delta object and to create one or more "UNDO operations" that are respectively configured to undo the changes reflected by the said, parsed delta objects.

During the sequential traversal of the delta objects in the delta store 224, a stream of UNDO operations is created and automatically applied on the current copy 430 of the OLTP data store. Thereby, a restored (or "reconstructed") version 432 of the OLTP data store is created in a very fast, and memory-saving manner, as the delta objects can be processed and loaded into memory sequentially. There is no need to load a large log file into memory in order to parse it. This may significantly increase the speed of reconstruction the state of an OLTP data store, because the loading of large files into memory often results in swapping operations and other bottlenecks. The re-created copy 432 represents the state of the OLTP data store 220 at the selected time 426.

The described data store reconstruction approach may be advantageous as this approach for reconstructing an OLTP data store may be much faster than existing, log-based data store recovery approaches, because the UNDO operations can be performed immediately on the OLTP data store copy 432 while sequentially processing delta objects which are stored in a sequence of adjacent physical storage areas in a transactional context that ensures data consistency. There is no need that a read-write head of a physical data storage device jumps to different, spaced apart storage regions in order to collect all information needed for reconstruction the OLTP data store.

According to embodiments, the OLTP data store 220 and/or any copy 430, 532 used as basis for reconstructing the OLTP data store at a selected time is free of cross-table constraints (e.g. is free of uniqueness constraints, primary key constraints and/or secondary key constraints) or the cross-table constraints are the activated or ignored during the database reconstruction process. This may further significantly increase performance. As the UNDO or REDO operations can be performed within a reconstruction transaction context, data consistency is ensured without the heavy use of complex cross table constraints which often render a conventional, log-based database recovery approach unacceptably slow.

Figure 4B illustrates a process of reconstructing the content of an OLTP data store that is also based on the first reconstruction approach that comprises traversing delta objects and performing UNDO operations. The approach depicted in figure 4B ensures that the OLTP data store is reconstructed in a consistent state by taking into account the transactional context within which the delta objects were created and stored.

The features and steps depicted in figure 4B are basically identical to the features and steps described already for figure 4A. The only difference is that the transactional context is taken into account when identifying the delta objects to be traversed and used for reconstructing the OLTP data store.

**Figure 4B** illustrates that the integrated transactions are taken into account both when updating the OLTP data store and when storing the delta objects in the delta store. The transaction boundaries are indicated by vertical dotted lines with ends bounded by black circles. The order of physical storing operations which store the delta objects in storage 224 and the order of the updating operations which update data records in the OLTP data store is done according to the chronology of commit-ready events of the individual transactions TR41-TR45. For example, all delta objects created within transaction TR41 are first written to storage 224 and the OLTP data store is updated within the same transaction TR41. Then, all delta objects 456-462 that were created within transaction TR42 are written to delta store 224 and the corresponding updates of the OLTP data store are performed within the same transaction TR42. Then all delta objects 464-468 that were created within transaction TR43 are written to delta store 224 and the corresponding updates of the OLTP data store are also carried out within the same transaction TR43. And so on. The number of delta objects per transaction can vary. It is also possible that each delta object corresponds to its own transaction. The borders of the transactions can be explicitly stored, for example in the form of special "begin transaction objects" and "commit transaction objects", which contain an ID of the respective started or committed transaction. Alternatively or additionally, it is also possible that the borders of the transactions are implicitly stored, for example in the form of transaction IDs, which are contained in each of the delta objects and in each case denote the transaction within which the delta object was created.

At first, the data store reconstruction program receives an indication 434 of a selected time 426, e.g. a request of a user input via a GUI to set the state of the OLTP data store to a time of interest in the past.

In response to receiving the selected time, the data store reconstruction program identifies the one 476 of the delta objects in the delta store belonging to the most recently committed integrated transaction TR44 and that in addition is the most recently stored delta object of all delta objects 470-476 within the said integrated transaction TR44. Delta objects having already been stored in the delta store but having been created in a not-yet committed integrated transaction are not traversed but rather ignored as it is currently not known whether or not the transaction will successfully commit or whether the delta object will be deleted in case the transaction fails.

For example, each delta object can comprise an ID of the integrated transaction within which it was created and persisted. All delta objects belonging to the same transaction are stored in adjacent storage areas in the delta store. So the question when a particular transaction committed and a new one begun can be quickly and automatically determined by sequentially scanning and processing the delta objects in the delta store. When the transaction-ID of a currently processed delta object differs from the transaction-ID of the previously processed delta object, a transaction border was passed where one transaction committed. It should be noted that the timestamps of the delta objects are strictly chronological only within the border of a transaction. This is because according to preferred embodiments, the delta objects are stored as transaction-based delta object batches, whereby the delta object batches are ordered in accordance with the chronological order of events when an integrated transaction becomes ready for commit (the completion of the storing of the delta objects can then represent the actual commit event of this integrated transaction). Hence, the chronological order of time stamps of delta objects in the delta store derived from many different transactions may not necessarily be identical with the chronological order of timestamps of the totality of created delta objects.

Then, starting with the identified delta object, the reconstruction comprises sequentially traversing the delta objects in the delta store until a downstream-termination delta object 456 is reached. The downstream-termination delta object is the one of the delta objects that belongs to the one TR42 of the integrated transactions having committed first after the selected time 426 and that was first stored in the delta store after the selected time, the traversing including the downstream-termination delta object and comprising sequentially undoing all DO changes specified in the traversed delta objects 456-476 in the OLTP data store 220 or in a copy 430 thereof.

It should be noted that the downstream-termination delta object may have a timestamp that is before the selected time 426 in case the commit event of the transaction TR42 comprising the downstream-termination delta object is later than the selected time. This is to ensure that the reconstructed OLTP data store only comprises data being descriptive of the data objects of the application program that was already "visible" to application-internal program routines at the selected time. Non-committed data object changes are hidden from other data objects in the application program to ensure that any data object change is first persisted to the OLTP data store and data store 224 and only after a successful commit is subject to further changes performed within a different transactional context.

According to some embodiments, any read operation performed by one of the data objects on an attribute of another data object involves a reading of the respective attribute values from the OLTP data store. This may be advantageous as this ensures that any data object of the application program can only "see" data object changes which have already been stored in the OLTP data store within an already committed integrated transaction. Non-committed changes in a data objects cannot be "seen" by other data objects.

The data store reconstruction software is configured to parse, when traversing the delta objects 476 to 456 each delta object and to create one or more "UNDO operations" that are respectively configured to undo the changes reflected by the traversed delta objects. After the traversal, the state of the resulting OLTP data store 432 corresponds to the state of the OLTP data store at the selected time. The OLTP data store 432 does not comprise the changes specified in the delta objects 456, 458 as these delta objects belong to a transaction TR42 not having committed at the selected time.

These features may be advantageous as they may ensure transactional safety and data consistency of the reconstructed data store 432. The restored (or "reconstructed") version 432 of the OLTP data store is created in a very fast and consistent manner, whereby the delta objects can be traversed sequentially without loading the whole content of the store 224 into memory.

According to preferred embodiments, all UNDO operations derived from delta objects having been created and stored in the same integrated transaction are executed on the OLTP data store in the reconstruction process within a respective reconstruction transaction. For example, the UNDO operations extracted from delta objects 470-476 can be performed in a first OLTP- data store reconstruction transaction RTR44 (not shown), the UNDO operations extracted from delta objects 464-468 can be performed in a second reconstruction transaction RTR43, and the UNDO operations extracted from delta objects 456-462 can be performed in a third reconstruction transaction RTR42. The order of performing the UNDO operations corresponds to the direction of the delta object traversal. For example, when traversing the delta objects of TR43, at first an UNDO operation reversing the data object changes specified in delta object 468 is performed on the data content of the OLTP data store 430, then an UNDO operation reversing the data object changes specified in delta object 466 is performed on the OLTP data store 430, and then an UNDO operation reversing the data object changes specified in delta object 464 is performed on the OLTP data store 430.

In a further beneficial aspect, the way the delta objects and OLTP data store updates are stored and the way they are reconstructed inherently ensures transactional consistency of the reconstructed OLTP data store. Hence, it may not necessary to create complex cross-table constraints in the OLTP data store in order to ensure that the data is consistent. This may greatly accelerate the process of reconstructing an OLTP data store. Hence, according to embodiments, the OLTP data store is free of cross-table constraints.

As the reconstruction starts from a current version of the OLTP data store, it is not necessary to repeatedly create backups. Rather, in case it is necessary to reset the OLTP data store to a previous state, it is possible to simply start from the currently existing OLTP data store version.

Figure 5A illustrates a process of reconstructing the content of an OLTP data store based on a second reconstruction approach that comprises traversing delta objects and performing REDO operations.

In the example depicted in figure 5A, the reconstruction of the data content of the OLTP data store 220 at an arbitrarily selected time 426 is performed starting from an old version of the OLTP data store 220. For example, the old version can be an OLTP data store backup copy 532 that was created at a backup time 530 as a copy of the original OLTP data store 538.

As described already with reference to figure 4A, a time specification 434 is received that specifies the time corresponding to the state of an OLTP data store that is to be reconstructed. This time can be an arbitrarily selected time and is referred herein as "selected time" 526. The time when the selected time is received and/or when the reconstruction process starts is referred to as "current time" 528. The reconstruction of the state of OLTP data store 220 at the selected time 526 can be performed on the backup copy 532 created at a "backup time" 530. For example, the OLTP data store or a software maintaining the OLTP data store can be configured to create backup copies of the OLTP data store repeatedly, e.g. once every hour, or every day, or every week, etc. In case the OLTP data store is to be reconstructed as it was at the selected time, the one of the backup copies having been created most recently before the selected time is selected as a basis for the data store reconstruction.

The delta store 224 comprises a plurality of data objects 502-524. The earlier the delta objects have been stored in the delta store, the further to the left they appear in the box 224 which represents the delta store. The later the delta objects have been stored in the delta store, the further to the right they appear in the box 224.

A data store reconstruction software is configured to traverse the delta store 224 from left starting with delta object 504 to right until delta object 514 is reached. In the depicted example, delta objects 504 - 514 are traversed, but not delta object 502 or any delta object 516-524 further to the right. Each traversed delta object comprises an indication of the one of the data objects of the application that was changed and one or more attributes and attribute values as described with reference to figure 4.

The data store reconstruction software is configured to parse each delta object and to create one or more "REDO operations" that are respectively configured to re-apply the changes reflected by this delta object on a backup copy of the OLTP data store 220.

During the sequential traversal of the delta objects in the delta store 224, a stream of REDO operations is created and automatically applied on the backup 532 of the OLTP data store. Thereby, a reconstructed version 536 of the OLTP data store is created in a very fast, memory-saving manner.

**Figure 5B** illustrates a process of reconstructing the content of an OLTP data store that is also based on the second reconstruction approach that comprises traversing delta objects and performing REDO operations. The approach depicted in figure 5B ensures that the OLTP data store is reconstructed in a consistent state by taking into account the transactional context within which the delta objects were created and stored.

The features and steps depicted in figure 5B are basically identical to the features and steps described already for figure 5A. The only difference is that the transactional context is taken into account when identifying the delta objects to be traversed and used for reconstructing the OLTP data store.

Figure 5B illustrates that the integrated transactions are taken into account both when updating the OLTP data store and when storing the delta objects in the delta store. The transaction boundaries are indicated by vertical dotted lines with ends bounded by black circles. The order of physical storing operations which store the delta objects in delta store 224 and the order of the updating operations which update data records in the OLTP data store is done according to the chronology of commit-ready events of the individual transactions TR51-TR55. For example, all delta objects created within transaction TR51 are first written to delta store 224 and the OLTP data store is updated within the same transaction TR51. Then, all delta objects 560-564 that were created within transaction TR52 are written to the delta store 224 and the corresponding updates of the OLTP data store are performed within the same transaction TR52. Then all delta objects 566-570 that were created within transaction TR53 are written to the delta store 224 and the corresponding updates of the OLTP data store are also carried out within the same transaction TR53. And so on. The number of delta objects per transaction can vary. It is also possible that each delta object corresponds to its own transaction. The borders of the transactions can be explicitly stored, for example in the form of special "begin transaction flags" and "commit transaction flags", which contain an ID of the respective started or committed transaction. Alternatively or additionally, it is also possible that the borders of the transactions are implicitly stored, for example in the form of transaction IDs, which are contained in each of the delta objects and in each case denote the transaction within which the delta object was created.

At first, the data store reconstruction program (e.g. the framework having created the delta objects) or another program creates a backup 532, i.e., a copy, of the OLTP data store 220 at a time referred to as backup time 530. For example, the backup can be created once in a day, or once in a week. Then, the data store reconstruction program receives an indication 434 of a selected time 426, e.g. a request of a user input via a GUI to set the state of the OLTP data store to a time of interest in the past. In response to the request 434, the data store reconstruction program identifies the one of the backups having been created most recently before the selected time (in case multiple backups created at different backup times exist).

Then, the data store reconstruction program reconstructs the state of the OLTP data store at the selected time. The reconstruction comprises identifying the one 554 of the delta objects in the delta store belonging to the one TR51 of the integrated transactions having committed first after the backup time and that was first stored in the delta store after the backup time. Starting with the identified delta object 554, the data store reconstruction program then sequentially traverses the delta objects 554-564 in the delta store until an upstream-termination delta object 564 is reached. The upstream-termination delta object is the one of the delta objects that belongs to the one TR52 of the integrated transactions that was last committed before the selected time and that was last stored in the delta store before the selected time. The traversing includes the upstream-termination delta object and comprises sequentially applying all data object changes specified in the traversed delta objects on the backup 532. For example, these data object changes can be applied by creating REDO operations based on the information contained in the traversed delta objects and applying the REDO operations on the OLTP data store 532.

It should be noted that the upstream-termination delta object 564 may have a timestamp that is before the selected time 426 in case the commit event of the transaction TR42 comprising the downstream-termination delta object is later than the selected time. This is to ensure that the reconstructed OLTP data store only comprises data being descriptive of the data objects of the application program that was already "visible" to application-internal program routines at the selected time. The data store reconstruction software is configured to parse, when traversing the delta objects 554 to 564 each delta object and to create one or more "REDO operations" that are respectively configured to re-apply the changes reflected by the traversed delta objects on the backup copy 532. After the traversal, the state of the resulting OLTP data store 536 corresponds to the state of the OLTP data store 220 at the selected time. The OLTP data store 536 does not comprise the changes specified in the delta object 556 as this delta object belong to a transaction TR53 not having committed at the selected time.

These features may be advantageous as they may ensure transactional safety and data consistency of the reconstructed data store 536. The restored (or "reconstructed") version 536 of the OLTP data store is created in a very fast and consistent manner, whereby the delta objects can be traversed sequentially without loading the whole content of the store 224 into memory.

According to preferred embodiments, all REDO operations derived from delta objects having been created and stored in the same integrated transaction are executed on the OLTP data store in the reconstruction process within a respective transaction (also referred to as "reconstruction transaction"). For example, the REDO operations extracted from delta objects 554, 556, 558 can be performed in a first OLTP-data store reconstruction transaction RTR51 (not shown), and the REDO operations extracted from delta objects 560-564 can be performed in a second reconstruction transaction RTR52. The order of performing the REDO operations corresponds to the direction of the delta object traversal. For example, when traversing the delta objects of TR52, at first a REDO operation reversing the data object changes specified in delta object 560 is performed on the data content of the backup 532, then an REDO operation reversing the data object changes specified in delta object 562, and then a REDO operation reversing the data object changes specified in delta object 564 is performed.

In a further beneficial aspect, the way the delta objects and OLTP data store updates are stored and the way they are reconstructed inherently ensures transactional consistency of the reconstructed OLTP data store. Hence, it may not be necessary to create complex cross-table constraints in the OLTP data store in order to ensure that the data is consistent. This may greatly accelerate the process of reconstructing an OLTP data store. Hence, according to embodiments, the OLTP data store is free of cross-table constraints.

This approach for reconstructing an OLTP data store may be much faster than existing, log-based database recovery approaches, because the REDO operations can be performed immediately on the OLTP data store copy 532 in such a way that they are transactionally safe and the data content of the reconstructed OLTP data store is consistent.

Furthermore, it may not be necessary to create complex cross-table constraints in the OLTP data store in order to ensure that the data is not corrupted in a backup process.

According to embodiments, the OLTP data store backup 532 and/or any copy of the data store 220 used as basis for reconstructing the OLTP data store at a selected time 526 is free of cross-table constraints (e.g. uniqueness constraints, primary key constraints and/or secondary key constraints) or the cross-table constraints are the activated or ignored during the data store reconstruction process. This may further increase performance.

For space reasons, figures 4A, 4B, 5A and 5B respectively show only a small number of delta objects. Typically, embodiments of the invention allow traversing delta objects created within several thousand integrated transactions and applying the respectively created undo transaction within a single second.

**Figure 6** depicts a GUI 600 for real-time selection of the time and state of the data content of an OLTP data store, e.g. a relational OLTP database. For example, the GUI 600 can be a graphical user interface of an application program for inspecting and/or using one or more databases, e.g. databases comprising technical data generated by various machines of different industrial manufacturing pipelines. This application program can be interoperable with the framework and use the framework for quickly reconstructing the state of the OLTP database at a time of interest. The databases to be inspected can comprise a first database and a second database. The data content of the first database represents the current state of the totality of data objects of a first control application program configured for monitoring and controlling a first industrial manufacturing pipeline, e.g. for medical injection needles of a particular size. The data content of the second database represents the current state of the totality of data objects of a second control application program configured for monitoring and controlling a second industrial manufacturing pipeline, e.g. for medical injection needles of a different size or type. The GUI 600 comprises a first tab 602 for searching the first database and a second tab 604 for searching the second database for one or more keywords. The first tab is currently selected and comprises a first area on the left side of the tab 602 with a graphical representation of a timescale 608 ranging e.g. from 1925 to today (some day in August 2019) and a search field 612 enabling the user to enter one or more search terms to be searched in the first database. The graphical representation of the timescale comprises a slider element 606 that indicates the currently selected time, in this case, April 01, 2019. A second area on the right side of the tab 602 comprises a result of the current search entered by a user in search field 612.

The selectable slider 606 enables a user to select a time of interest by moving the selectable GUI element 606 to the left or to the right along the graphical representation of the timescale. For example, when the program is started and the GUI is shown the first time, the slider 606 can be positioned at the right and of the timescale. This indicates that the data content of the first database represents a current state of the first application program and hence, indirectly, that any search term entered would be searched in the data objects of the first program in its current state. Any query entered via search field 612 will be processed on a current, up-to-date version of the first database and the results of the search will be presented on the right side of the currently selected tab and be related to the current state of the first production pipeline. However, the user may not be interested in the current state, but rather may be interested in a situation as of April 1, 2019. For example, the user may suspect that a new machine installed on that date is responsible for a particular production defect and may be interested in machine parameters from that date. The user may select the time of interest via the slider 606. The release of the slider may automatically trigger the reconstruction of the state of the database to a state as of the selected time, i.e., April 1, 2019. The reconstruction is performed as described herein for embodiments of the invention and is illustrated, for example, in figures 4 and 5. The reconstruction can be performed very fast, e.g. within a few seconds, also for large databases provided database backups have been created frequently. When the reconstruction of the state of the database on April 1, 2019 is accomplished, an indication of the date corresponding to the reconstructed state of the database is indicated 610, 614 in the graphical user interface, e.g. in the left side such pane or in the right side result pane.

Sequentially traversing delta objects stored in a delta store for reconstructing the content of an OLTP data store at the time of interest, and reconstructing also the state of the totality of data objects of an application program at the selected time may be advantageous as the high speed and scalability of this approach allows for a real-time or at least near-term selection of the data store state of interest.

The use of a GUI in combination with the high-speed data store reconstruction procedure as described herein for embodiments and examples of the invention can be particularly advantageous for analyses of a temporal evolution of a particular aspect of the object under investigation. An increasing proportion of manufacturing processes are fully automated or largely automated, with object-oriented, complex software programs for monitoring and control playing an important role. Those complex software programs generate an immense amount of structured data, often stored in an OLTP data store. However, these OLTP data stores only contain the latest state of the data objects of the application program, so that historical analyses are not possible. However, these would be very important, e.g. with regard to the recognition of errors and their causes in the production process, with regard to the recognition of optimization potentials and others. Using a GUI that enables a user to change the state of an OLTP data store reflecting the state of an application program in real time may enable an automated, semi-automated or manual inspection and analysis of the state of this application program at many different points in time, and hence may allow the identification of trends, of errors, of cause-and-effect relationships at an arbitrarily chosen level of granularity.

It should be noted that these types of analysis are made possible even in case the application program whose state is reflected in the OLTP data store lacks any explicit reporting capabilities. This may also facilitate the implementation of complex monitoring and control programs for all kinds of technical and other processes and workflows, as it is not necessary to implement explicit reporting or logging routines: any kind of change in the state of a data object in the application program will result in an update of the OLTP data store and the creation and storing of a respective delta object. Programming the application program such that it interoperates with a framework 210 that does not only update the OLTP data store but that in addition automatically creates and stores delta objects upon every data object change may ensure that every single, small change of the state of the application program or one of its data objects is persisted and can be used for reconstructing and/or analyzing the state of the application program quickly and easily. The programmer is freed of the burden of developing and implementing explicit report routines within the application program itself.

**Figure 7** illustrates the data content of five different types 702-710 of delta objects. According to embodiments, the framework used for creating the delta objects comprises a set of predefined templates for each of a plurality of supported types of delta objects. For example, a template can be a combination of a Java interface method and a Java class file that implements this interface method and that can be used for creating delta objects which comprise the property values defined for this template. In the example embodiment depicted in figure 7, the framework comprises a template for the "createObjectDeltaObject" delta object type 702, a template for the "deleteObjectDeltaObject" delta object type 704, a template for the "changePropertyDeltaObject" delta object type 706, a template for the "addObjectAssociationDeltaObject" delta object type 708, and a template for the "removeObjectAssociationDeltaObject" delta object type 710.

According to embodiments, any creation of a new data object in the application program 226 triggers the creation of a new delta object of type 702 by the framework.

Each delta object of type 702 comprises an indication of its type ("createObjectDeltaObject") that may also reflect the type of change operation performed in the application program that triggered the creation of this delta object. In addition, each delta object of type 702 comprises a timestamp being indicative of the time of creating the new data object in the application program, a transaction-ID being indicative of the integrated transaction within which the change operation occurred and within which the delta object was created, an object-type being indicative of the type of data object that was created (e.g. "customer") and a unique identifier (object-ID) of the new data object that was created (here: a new instance of the class "customer").

Each delta object of type 704 comprises an indication of its type ("deleteObjectDeltaObject") that also reflects the type of change operation performed in the application program that triggered the creation of this delta object. Each delta object of type 704 comprises the information described already for delta object type 702, i.e., a timestamp, a transaction-ID, the object-type and an object-ID. In addition, each delta object of type 704 comprises a list of properties and associations and respective data values ("list of P&A") representing the latest state of this data object and its associations at the time when it was deleted.

Each delta object of type 706 comprises an indication of its type ("changePropertyDeltaObject") that reflects the type of change operation performed in the application program that triggered the creation of this delta object. Each delta object of type 706 comprises the information described already for delta object type 702, i.e.., a timestamp, a transaction-ID, the object-type and an object-ID. In addition, each delta object of type 706 comprises an identifier of the property whose change triggered the creation of this delta object and comprises the new value that was assigned to this property upon this change.

Each delta object of type 708 comprises an indication of its type ("addObjectAssociationDeltaObject") that reflects the type of change operation performed in the application program that triggered the creation of this delta object (here: the adding of an association between two data objects to one of the two data objects). Each delta object of type 708 comprises the information described already for delta object type 702, i.e.., a timestamp, a transaction-ID, the object-type and an object-ID in respect to the data object to whom the association was assigned. In addition, each delta object of type 708 comprises an identifier or name of the association that was added to the data object and an identifier of the other data object that was linked to the above-mentioned data object by adding the association.

According to embodiments, a data object in an association of a particular association type (IndexedAssociation) has a certain position in the list of associated objects - e.g. at position 5. This is expressed by the "AddedObjectldPosition". Additional association types and their changes can also be stored as delta objects.

Each delta object of type 710 comprises an indication of its type ("removeObject-FromAssociationDeltaObject") that reflects the type of change operation performed in the application program that triggered the creation of this delta object (here: the removing of a data object from an association between two data objects). Each delta object of type 710 comprises the information described already for delta object type 702, i.e.., a timestamp, a transaction-ID, the object-type and an object-ID in respect to the data object from which the association was removed. In addition, each delta object of type 710 comprises an identifier or name of the association that was removed and an identifier of the other data object that was linked to the above-mentioned data object by the removed association.

Other embodiments of the invention may support less or additional delta object types or support delta object types with a slightly different data content and comprise a corresponding set of templates. In any case, each template should specify the information that is required for enabling a program that reads and parses the delta objects (e.g. the framework 210) to create UNDO or REDO operations which re-execute or undo the data object changes specified in the delta objects. For example, in some embodiments, a changePropertyDeltaObject instance may comprise the property value of the data object before the change operation took effect in addition to the new property values.

According to some embodiments, the set of delta object types supported by the framework in addition comprises delta object types for creating a new class, for deleting an existing class and/or for modifying the structure of an existing class, e.g. adding a new property to an existing class and/or for removing a property of an existing class.

For example, a delta object of the type "changeObjectDeltaObject" can be created in response to a command "customer.name().set("test");" performed by a data object of the application program. The execution of the method "set("test")" induces a call of an abstract interface method "changeObjectDeltaObject" 706 provided by the framework. The interface method for creating a new delta object of type 706 can be, for example:

```
 public interface createChangePropertyDeltaObject {
      Property<date> timestamp();
      Property<date> transaction-ID();
      Property<String> object-type();
      Property<String> object-ID();
      Property<String> property-ID();
      Property<String> newPropertyValue();
 }
```

The interface method createChangePropertyDeltaObject may be called automatically whenever a DO in the application program sets a data value of another DO. The interface method may be implemented by one or more classes provided by the framework (not shown).

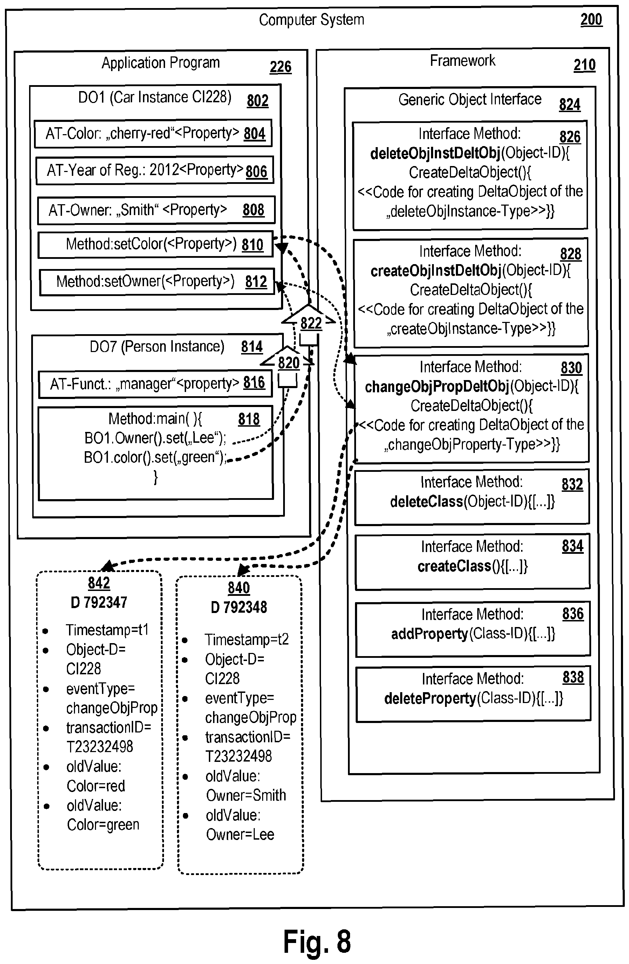

Figure 8 illustrates the creation of delta objects by the framework 210 as implemented in some embodiments of the invention.

According to embodiments of the invention, the attributes of the data objects in the application program 226 are not implemented in the form of primitive data types such as String, Integer, Float, Boolean etc. but rather in the form of a generic data object and a respective class (referred to in the following as "Property") that is functionally linked to the framework 210. For example, the framework can comprise the class "Property" and may be used as a class library during the development and programming of the application program 226. Hence, according to embodiments, all properties of all data objects of the application program 226 are instances of the class "Property" or inherit some features and/or functions provided by an abstract class "Property", whereby the "Property" class is provided by the framework 210.

This feature may be highly advantageous as any property change within the application program 226 is automatically communicated to the framework 210 that is in charge of instantiating a new delta object instance based on the respective type of change operation and that is in charge of specifying in this new delta object which property of the DO was modified and the new property value (at least for all change operation types involved with modifying the type and or value of a property (or "attribute") of a DO. As any new property is an instance of the PROPERTY class provided by the framework, the framework inherently "knows" when a property value of a DO is changed in the application program.

These features free the programmer of the burden to make sure that every DO change in the application program is correctly propagated and persisted in the delta store and/or OLTP data store, because any property change operation is necessarily and fully automtically associated with creating a new instance of the Property class in the framework and hence automatically triggers data processing routines in the framework that are associated with the creation of a respective delta object in the framework.

Moreover, these features free the programmer of the burden of making sure that any relevant DO changes are explicitly covered in reporting routines because the delta objects that are automatically created by the framework in response to any change operation that involves the creation of a new Property class instance implicitly represents the most fine granular change log one could think of. The delta store can be used as an automatically generated complete log or report that can be evaluated by analytical programs developed in respect to any analytical question that may be of interest for an operator of the application program.

In summary, the framework may offer the great advantage that a programmer who uses this framework when creating an application program does not have to worry about and does not have to write explicit routines or modules to ensure that all changes to data objects and/or associations and/or classes within the application program at runtime are fully persisted. The programmer only has to make sure that the operations that cause the changes in the data objects, associations and/or classes in the application program use classes and/or interfaces provided by the framework, so that the framework is automatically notified of any change to a DO, DO association or class in the application program and hence can automatically create respective delta objects and persist them in the delta store and optionally also update an OLTP data store such that the OLTP store always represents the latest state of the application program. This greatly facilitates and accelerates the development of application programs and increases the quality and reliability of the program and of the way the application program is persisted, because the persistence of changes in the application program is inherently and fully automatically implemented simply by making use of the respective classes and functionalities provided by the framework.

In other words, the use of a framework 210 according to embodiments of the invention provide for an industrialization and automation of large parts of the software development process, whereby the quality, reliability and completeness of persisting and reporting the state of an application program is greatly facilitated.

In the following, a concrete example will be described to illustrate how the framework 210 can be used by a programmer at design time of the application program 226 for automatically propagating DO or class changes occurring at runtime of the application program 226 in the application program 226 to the framework 210.

### State of the art approach property change

A state of the art approach of modifying an object property of a Java class instance of the class "ExampleClassic" would be implemented as follows:

```
public class ExampleClassic {
      private String firstName;
      private String lastName;
      public String getFirstName() {
            return firstName;
      }
      public void setFirstName(String firstName) {
            this.firstName = firstName;
      }
      public String getLastName() {
            return lastName;
      }
      public void setLastName(String lastName) {
            this.lastName = lastName;
      }
 }
```

In the example given above, the creation of a new ExampleClassic instance and the access to one of its attributes (properties) (here: the first name) is performed by the following method calls:
ExampleClassic exampleClassicInstance = new ExampleClassic();
exampleClassicInstance.setFirstName("Peter");

### Framework-based property change approach

To the contrary, according to embdoiments of the invention, the modification of an object property of a Java class instance of the class "ExampleNew" would be implemented based on a generic Property class instance rather than a primitive property String value as follows:

```
 public interface ExampleNeu {
      Property<String> firstName();
      Property<String> lastName();
 }
```

In the example given above, the ExampleNeu interface and a class implementing the ExampleClassic instance can be comprised in and be provided by the application program while the class Property is provided by the framework.

According to embodiments, the Property class provided by the framework comprises a "set" method that is called whenever a new Instance of this Property is created and assigned to a Porperty instance in the application program. The call to this "set" method of a Property class instance triggers the creation of a delta object.

According to embodiments, the functionality that any change operation which respectively creates, modifies and/or deletes one of the DOs in the application program automatically triggers the creation of a delta object by the framework is implemented such that the DOs of the application programs (or at least the ones of the DOs implementing the Serializable or being otherwise marked as "transient") comprise attributes (also referred to as "variables" or "properties") in the form of class instances of at least one class provided by the framework. This at least one class provided by the framework is referred to e.g. as "Property" class. The Property class provided by the framework comprises a "set" method that is called whenever a new Instance of this Property is created and assigned to a Porperty instance in the application program. The call to this "set" method of a Property class instance causes the framework to create a delta object.

According to embodiments, the DO changes which are notified to the framework and which trigger the creation and storing of a respective delta object comprise the creation, deletion and/or modification of associations (also referred to as "relationships") between two DOs. Embodiments of the invention may allow persisting DO associatons changes, including the creation, modification and deletion of associations, in the form of delta objects.

For example, the source code of the application program can comprise calls to the "add" method of a DO (here: ShoppingItem) for creating an association in the application program between this DO and another DO and for propagating the creation of the association to the framework. The call to this "add" method for adding a DO to another DO triggers the creation of a delta object representing the created association between the DO whose "add" method was called and the DO provided as argument to this method. For example, the DO comprising the "add" method can implement the interface "ManyAssociation" provided by the framework and hence inherit all methods provided by this interface. The "ManyAssociation" interface comprises, among others, the "add" method. A programmer developing the application program such that a particular class implements the ManyAssociation interface provided by the framework can ensure that any association created between an instance of this class and one or more other class instances by using the add() method will trigger the creation of a delta object by the framework. For example, the source code of the application program can comprise the following code with multiple calls to the "add" method:

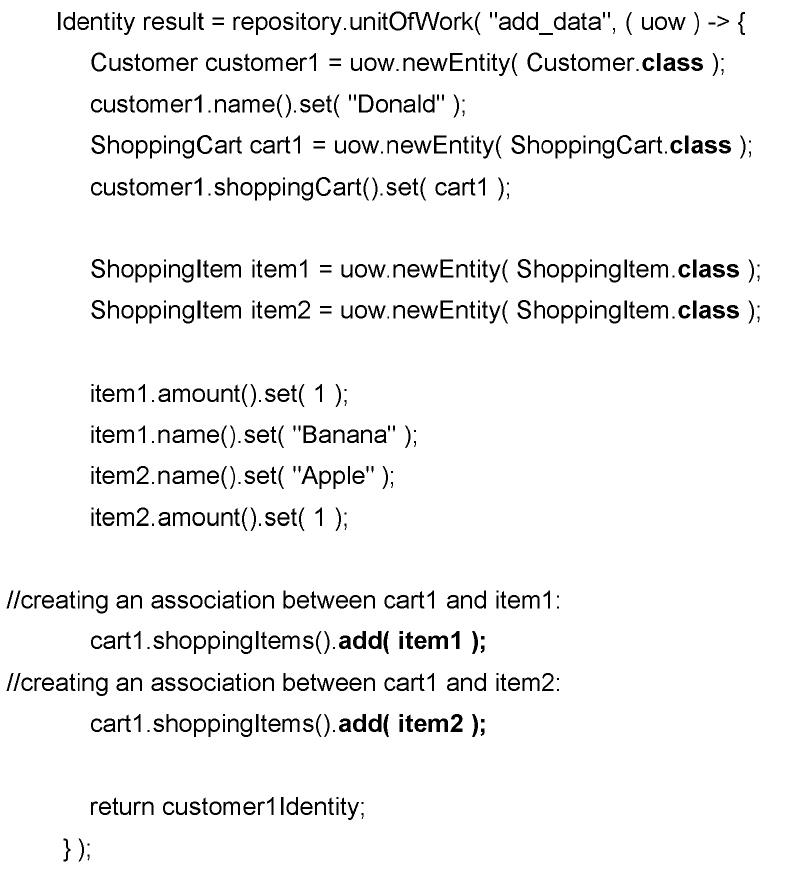

According to embodiments, the "set" method of the Property class of the framework is signed with a signature key of a certification authority. The digital signature is associated with a certificate of a certification authority. The signing of the set method may allow verifying the method's integrity and ensure that the code has not been changed or corrupted since it was signed. This may help users and other software to determine whether the framework can be trusted.

Access to one of its attributes (properties) (here: the first name) of any DO bein an instance of the ExampleNew implementing class can be performed e.g. by the following method calls:
ExampleNew exampleNewInstance = uow.create(ExampleNeu.class);
exampleNeuInstance.firstName().set("Peter");

Thereby, uow is an ojbect provided by the framework that is in charge of creating and managing an individual integrated transaction. The call to the setter method of the Property (here: firstName().set("Peter")) in the application program fully automatically triggers the creation of a delta object of the type changeObjectDeltaObject in the framework.

Representing a class attribute as an instance of the generic "Property" class provided by framework has the following advantages:
- The source code is much more compact
- Because the properties of the data objects implement the class "Property", and all method calls for changing the properties run via the class "Property" of the framework 210, every change of a property value can be recognized very easily and fully automatically by the framework and used to create a delta object; In the classical model, the attribute is directly manipulated with the setter method, without another program/framework being able to interfere in this process (without time-consuming "tricks"). By implementing the object properties as instances of the generic "Property" class of the framework, this technical difficulty is avoided;
- the properties and especially the dynamic behavior of the properties can be easily extended at any time - e.g. by test methods like "notNull" or complex test protocols or by complex evaluation routines for reporting purposes, without having to change the source code of the application program. It is sufficient to extend the source code of the framework by corresponding functions. Thus a highly complex software can be supplemented during operation by checks and reporting functions on a fine-granular level, namely the attribute level, without a source code change or recompilation being necessary. A change in a single class or a few classes in the framework is sufficient, and this change immediately has global validity for all application programs developed on the basis of the framework.

In the example depicted in figure 8, the application program 226 at runtime comprises DO 802, an instance of the car class whose attribute values 804, 806, 808 indicate that the color of this car is cherry-red, the year of registration is 2012 and that the car is owned by a person named "Smith". The attributes of this car instance can be modified by other DOs, e.g. DO 814 being an instance of the "person" class and representing a person having the function of a fleet manager (attribute 816), by executing the following methods calls specified in source code 818: BO1.setowner("Lee"); and BO1.setColor("green").

The framework comprises, for each of a plurality of predefined data change events, a respective template class (e.g.: an interface class) and/or an interface method for creating delta objects. For example, the framework can comprise one or more generic interface classes 824 respectively comprising one or more generic interface methods 826-838 for creating new data objects 826, modifying a property of an existing DO 830, deleting an existing DO 826, deleting 832 a class at runtime of the application program, creating 834 a class at runtime of the application program and modifying 836, 838 the structure of a class at runtime of the application program. When the DO7 814 executes the method call BO1.setOwner("Lee"), a new Instance of the class "Property" provided by the framework is created. The call to the "setOwner" function provides information on the calling DO7, the time of the call, the new value of the property ("Lee") and the property to be changed ("owner") to the framework. The framework does not only create a new instance of the "Property" class that is needed by the application program to change the owner-property of DO1, the framework also creates a new instance of a changeProperty class or creates a new class instance making use of an abstract changeProperty interface 830 provided by the framework. This new class instance is filled with context information on the property change (which property is changed, the time of change, the DO having caused the change, the new property value, etc.) and used as a new delta object 840.

DO 814 may in addition call the method BO1.setColor("green"). This call triggers the creation of a Property instance for the new color "green" and the creation of a new delta object 842 in the framework.

According to embodiments, one or more of the DOs of the application program are text-based DOs. A text-based DO as used herein is a DO defined in a text-based format such as XML or JSON and which does not represent a class instance of a class written in an object oriented language. For example, the application program can be Java and many of the DOs whose changes are persisted by the framework can be Java class instances. Some of the DOs are XML text objects or JSON text objects. In order to persist the text-based DO, the following approach can be followed:
ExampleNew exampleNewInstance = uow.create({<text-object><object-id>82328368</ object-id ><car-name>Tesla383</car-name><year-of-reg>2018</year-of-reg></text-object>});

Hence, although preferably all DOs of the application program are instances of classes written in an object oriented programming language, some embodiments of the invention may also be implemented based on a non-object-oriented programming language and/or on DOs provided in the form of text-based objects. Figure 9A illustrates the management of integrated transactions by the framework 120 in interoperation with the application program 226.

In the embodiment depicted in Figure 9A, integrated transactions are generated, managed and closed after a commit event by the framework, whereby operations executed within the application program serve as triggers for beginning and/or terminating an integrated transaction. The delta objects created within the integrated transactions are stored in a single delta store in accordance with the chronological order of commit-ready events of the integrated transactions within which they have been created and in accordance with their respective timestamps.

For example, the framework 210 can implement a function being able to receive one or more method calls as argument. Each call to this function by a DO of the application program triggers the creation of an integrated transaction whose existence is bound to the execution of the called function. The method calls provided as arguments are change operations (e.g. the creation of a new DO, the modification of a property of an existing DO, the deletion of an existing DO, the creation of a class, the deletion of a class, the modification of a class).

This may be advantageous as the transactional context of the integrated transaction created by the framework upon a call to this function is automatically closed (with a commit or undo action) when the function returns. Hence, it is not possible that a programmer forgets to explicitly close an integrated transaction. Furthermore, as the one or more change operation performed within this integrated transaction are provided as artument of the function, it is implicitly ensured that each of the change operations is executed within an integrated transaction. Provided the programmer of the application program specifies any change to a data object or class exclusively as an argument of the said function, it is ensured that no change operation can be executed outside of an integrated transaction. This may ensure transactional consistency for every single change operation as well as complete persistence of any change in the delta store (and optionally also in the OLTP data store). The programmer is not required to explicitly open or close a transactional context or to explicitly assign change operations to a particular integrated transaction. Providing the change operations as an argument to the function of the interface is all that is required.

For example, the function that is adapted to receive the one or more change operations as arguments can be a function of a functional interface. In Java, this function can be a so-called Lambda function, whereby each call of a Lambda function is carried out within a respective integrated transaction.

The application program or a data object contained therein can call a lambda function of the framework for the first time and thus trigger the generation of a first integrated transaction T1 by the framework. After the transactional context T1 has been opened, the A1 attribute of car data object 673 is changed in the application program, and later the A2 attribute of the same data object is changed. Then, a further attribute A4 in car data object 866 is changed and finally attribute A5 of car data object 673 is changed. The changes made to data objects within the transactional context of T1 within the application program are represented in Figure 9A by a first line 850. Closing the call of the lambda function within the application program represents a trigger event that triggers a commit event for the integrated transaction T1, represented by the concentric double circle, within the framework.

The application program may in addition can call another lambda function of the framework, thereby triggering the generation of a second integrated transaction T2 whose transactional context is represented by line 852. After the transactional context T2 has been opened, the A1 attribute of car data object 556 is changed in the application program, and later the A2 attribute of car data object 445 is changed. Closing the call of the other lambda function within the application program represents a trigger event that triggers a commit event for the integrated transaction T2.

The application program may in addition can call a still further lambda function of the framework, thereby triggering the generation of a third integrated transaction T3 whose transactional context is represented by line 854. After the transactional context T3 has been opened, car data object 673 is deleted in the application program, and the still further lambda function is closed, thereby triggering a commit event for the integrated transaction T3.

According to embodiments, the framework can manage a variety of different integrated transactions for the same application program simultaneously. It is possible to start one integrated transaction while another is not yet finished. The framework ensures that there are no conflicts and that two transactions do not manipulate the same data object at the same time. A transaction is committed by the framework only if all delta objects created within this transaction are successfully stored in the delta store (not shown here).

The events shown on line 856 are listed in the chronological order of the corresponding data object changes and the time stamps of the respectively created delta objects. Each change of a data object corresponds to a DO change event EV, which in turn triggers the creation of a delta object, which in turn contains an identifier of the integrated transaction within which the delta object was created. However, the sequence of the creation of the delta objects in the framework does not necessarily correspond to the chronological sequence of the physical storage of the delta objects in the delta store. Rather, the framework is configured to perform the storing of the delta objects according to the order of their commit-ready events, so that the time stamps of the delta objects stored in the delta store 224 are strictly chronologically ordered only within a certain transnational context. This is shown in delta store 224: since the commit-ready-event of transaction T2 occurs earlier than that of transaction T1, the corresponding delta objects EV2 and EV4 of transaction T2 are also stored before the delta objects EV1, EV3, EV5, EV6 of transaction T1, although the transactional context of T1 begins earlier than that of T2. The chronological order of the expected commit events is derivable from and determined by the source code of the application program, in which the individual lambda functions are called in one or more different threads, whereby within a thread the opening of a new transactional context is only possible after the completion of an open lambda function call.

**Figure 9B** illustrates the management of integrated transactions by the framework 120 in interoperation with the application program 226 according to a further embdoiment. In the further embodiment, the delta objects created within the integrated transactions are stored in multi delta stores 920, 922, 924, 926. Each of the DOs of the application program corresponds to a respective one of the delta stores. All changes performed in the application program on one of the DOs are stored in the form of a stream of delta objects in the one of the delta stores assigned to the respective DO. For example, all DO changes of DO "car673" are stored by the framework as a stream 930 of delta objects in delta store 920. All DO changes of DO "car556" are stored by the framework as a stream 932 of delta objects in delta store 922. All DO changes of DO "car866" are stored by the framework as a stream 934 of delta objects in delta store 924. All DO changes of DO "car4456" are stored by the framework as a stream 936 of delta objects in delta store 926. The framework is configured to cache and distribute the newly crated delta objects over the different streams and delta stores such that the delta objects being descriptive of changes of a particular DO are selectively stored in a particular one of the multiple delta stores. Thereby, each DO can be, for example, an instance of a class used as template for creating the DO or can be the class itself. The DOs of the application program can comprise class instances and individual classes, wherein a class can be e.g. a class file in accordance with the Java programming language.

As can be inferred from a comparison of Figure 9A and 9B, the same sequence of DO changes and transactions can be stored in one or more delta stores according to different delta object distribution schemas. In both schemas, the transactional context is preserved, e.g. in the form of transaction-IDs comprised in the delta objects. The embodiment depicted in Fig. 9B is preferred due to improved scalability. Depending on the embodiment, the framework may store the delta objects in the one or more delta stores directly or via an additional program, e.g. a streaming application such as Apache Kafka.

**Figure 10** illustrates various sub-modules 902-914 of the framework 210 according to embodiments of the invention.

According to embodiments, the framework comprises a module 910 for creating delta objects and for storing the delta objects in a delta store. The module 910 can comprise a set of classes or interfaces for each of a plurality of different predefined data objects, data object associations and/or class change operations.

The framework can in addition comprise a module 914 for managing integrated transactions and sub-transactions for storing delta objects created within an integrated transaction to the delta store and/or for updating an OLTP data store with change information regarding changed data objects, associations and/or classes in the application program.

In some embodiments, the framework can in addition comprise a module 912 for analyzing the delta store 224 for generating one or more different reports or other forms of analytical results.

In addition, or alternatively, the framework can comprise a module 902 for continuously updating an OLTP data store with data object changes occurring in the application program, thereby ensuring that the OLTP data store always comprises the latest state of the application program. For example, the OLTP data store updating can be performed by sub-module 906 making use of an object-oriented domain model 904 which maps data object types to respective data structures in the OLTP data store. Preferably, all data object instances of a particular object type are stored in a single respective table. This may be advantageous as complex cross-table constraints may be avoided.

According to some embodiments, the framework comprises a module 908 configured for reconstructing the state of the OLTP data store at an arbitrary selected time from the delta store in combination with the current version of the OLTP data store or a backup copy of the OLTP data store created previously.

In addition, or alternatively, the framework comprises a module 916 configured for reconstructing the state of the application program 226 at an arbitrary selected time from the delta store in combination with the current OLTP data store or a backup copy of the OLTP data store created previously.

**Figure 11** illustrates the creation and management of an integrated transaction according to an embodiment of the invention.

According to embodiments of the invention, the framework 210 is configured to generate an integrated transaction 951 (begin event) in response to the reception of a trigger signal 950, for example the call of a particular framework function (e.g. a Java lambda function) by a data object of the application program 226. For example, the call may include one or more change operations 950, 952, 954 as function argument. Each of the said change operations changes a data object, an association of data objects and/or a class of the application program 226 at runtime of the application program. These changes are not immediately visible within the application for other data objects (indicated by the dashed outline of the data object change events 950-954).

When all changes to be made within integrated transaction 951 within application program 226 have been made, the application program is ready for a commit event of this integrated transaction 951. The time of readiness of the application program for the commit event of integrated transaction 951 is represented by circle 958 and is also referred to as the "commit readiness event" of the transaction 951.

As soon as this time or state 958 is reached by the application program, framework 210 initiates the creation of a sub-transaction 960, also referred to as a "delta-sub-transaction". A delta-sub-transaction is a transaction to be executed within the context of an integrated transaction, whereby the delta-sub-transaction comprises storing all delta objects created in the said integrated transaction 951 in the delta store 224 in accordance with the ACID criteria.

Once the framework 210 is notified of a commit event of the delta-sub-transaction 960 (indicating that the delta sub transaction was successfully performed), the framework 210 causes another sub transaction 962 (also called OLTP sub transaction) to be created and executed according to some embodiments of the invention. An OLTP-sub-transaction is a transaction to be executed within the context of an integrated transaction, whereby the OLTP-sub-transaction comprises updating the OLTP data store with all changes 950, 952, 954 made in the application program within the said integrated transaction 951, whereby all update steps performed within an OLTP sub-transaction are executed in accordance with the ACID criteria.

As soon as the framework receives a commit event for the sub-transaction 960 and, in embodiments of the framework supporting the updating an OLTP datastore, as soon as the framework receives a commit event for the OLTP sub-transaction as well, the framework 210 causes a commit event for the integrated transaction 951. This commit event, represented by the concentric double circle at the end of the integrated transaction 951, causes that all changes of data objects, associations and classes, which were carried out in change operations 950, 952 and 954, now also occur within the application program, too, and are visible for other data objects and routines of the application program.

In the following, a concrete implementation example based on the Java lambda functions is provided.

For example, the application program 226 can be written in the object oriented programming language Java and the framework 210 comprises a plurality of interface methods in the form of Java lambda functions (also referred to as "lambda expressions").

Lambda functions have been added in Java 8. Lambda functions basically express instances of functional interfaces (an interface with a single abstract method is called functional interface. An example is java.lang.Runnable). Lambda expressions implement the only abstract function and therefore implement functional interfaces. Lambda functions enable to treat functionality as a method argument, or code as data. They can be created without belonging to any class. A lambda function can be passed around as if it was an object and executed on demand. Lambda expressions basically express instances of functional interfaces (An interface with a single abstract method, an example is java.lang.Runnable). Lambda expressions implement the only abstract function and therefore implement functional interfaces.

However, other embodiments of the invention may be implemented using other programming languages. A skilled programmer is able to implement the examples and embodiments described herein based on the programming language Java also in other programming languages, in particular in other object-oriented programming languages.

The call "*(*"*add_data*"*, (uow)* -> *{"* - a so-called lambda function in Java - opens a transaction context of an integrated transaction. The call can be made by a data object of the application program but the called lambda function itself is provided preferably as part of the framework 210. The term "uow" here represents a name of an individual integrated transaction to receive the data, in this case "unit of work". The name and/or ID of the transaction may in some embodiment be provided as an argument of the method call.

With the method call "uow.create(Customer.class);" a customer object is created in the integrated transaction uow.

The expression "customer.name().set("test");" sets the property name of the customer to "test" and a Property object is created internally in the framework. This Property object has a 'set' method which comprises the new name "test" and comprises an identifier of the integrated transaction uow or is otherwise assigned to the integrated transaction uow.

When the lambda function is left (terminates), the integrated transaction uow is automatically closed and committed by the framework - and in case of an error all changes are discarded.

The lambda function (which provides the uow transaction context) is implemented by the framework 210. When the uow transaction is closed/ready for commit, an abstract driver interface for the delta store is called by the framework and a delta-sub-transaction is opened. Within the context of the delta-sub-transaction, the stream of delta objects created in the integrated transaction uow is transferred to and saved in the delta store. If the storing in the delta store was successful, the delta-sub-transaction commits and the framework opens/begins a further sub-transaction on the OLTP data store for propagating all data object/association and/or class changes introduced in the application program within the integrated transaction to the OLTP data store. If all the said updates are performed successfully, the OLTP sub-transaction commits and closes.

If both the delta-sub-transaction and the OLTP-sub-transaction commit successful, an OK is returned to the application, the integrated transaction commits and the changes in the application program become visible to other data objects. If an error occurs, the framework triggers a rollback in the application, the delta store and the OLTP data store. However, if an error occurs, all data that led to a termination is still available. This greatly increases traceability in the event of an error.

In the source code example provided below, "repository" is the framework-service that is configured to control the creation, maintenance, commit and rollback of the integrated transactions and all sub-transactions. The name "uow"/"UnitOfWork" is an identifier of a particular integrated transaction.

```
      public void testProxyUnitOfWork() throws Exception {
            repository.unitOf\Nork("add_data", (uow) -> {
                   Customer customer = uow.create(Customer.class);
                   assertNotNull(customer);
                   customer. name().set("test");
                   return null;
            });
      }
```

With "unitOfWork.create" a new object of the class Customer is created. In addition, the framework automatically creates a delta object with type "createObject" in the background.

For example, a delta object with the attributes timestamp, class (in the example: Customer.class), and/or object-ID is created for the type "createObjectDeltaObject", e.g. an instance of the createObjectDeltaObject 702 template depicted in figure 7. The command "customer.name().set("test");" induces the creation of a delta object of the type "changePropertyDeltaObject" comprising a timestamp, an object-lD, a property-ID and the new property value.

The command "customer.name().set("test");" induces the creation of a delta object of type "changePropertyDeltaObject", e.g. an instance of the changePropertyDeltaObject 706 template depicted in figure 7.

```
 public void newUnitOfWorkInterface() throws Exception {
 //begin of first Integrated transaction
            Object result = repository.unitOfWork("add_data", (uow) -> {
                   Typedldentity<Customer> customer1 identity = null;
                   Customer customer1 = uow.create(Customer.class);
                   customer1.name().set("Dona!d");
                   customer1 Identity = customer1.id().get();
                   // lets go shopping..
                   ShoppingCart cart1 = uow.create(ShoppingCart.class);
                   Shopping Item item1 = uow.create(Shoppingltem.class);
                   item1.amount().set(1);
                   item1.name().set("Banana");
                   cart1.shoppingItems().add(item1);
                   customer1.shoppingCart().set(cart1);
                   return customer1Identity;
            });
            //end first integrated transaction
            //begin second integrated transaction
            repository.unitOfWork("read-data", (uow) -> {
                   @SuppressWarnings("unchecked")
                   Optional<Customer> optionalCustomer =
                   uow.get((TypedIdentity<Customer>) result);
                   Customer customer = optionalCustomer.get();
                   assertTrue(customer.shoppingCart().isPresent());
                   assertEquals(1, custom-
                   er.shoppingCart().get().shoppingltems().count());
                   assertEqualstnew Integer(1), custom-
                   er.shoppingCart().get().shoppingltems().get(0).amount().get());
                   assertEquals("Banana", custom-
                   er.shoppingCart().get().shoppingltems().get(0).name().get());
                   return customer;
            });
            //end second Integrated transaction
            }
```

**Figure 12** shows a further embodiment for selectively hiding some data of some of the delta ojbjects stored in one or more delta stores 224. A delta store management program 210 (e.g. the framework or another program has access to the at least one delta store 224. The delta store comprises a plurality of delta objects 1210, 1212, e.g. delta objects being indicative of attribute changes of a plurality of different car DOs. For example, delta object 1210 indicates an attribute change of car object 445 at time t10, delta object 1212 indicates an attribute change of car object 445 at time t11 and so on.

In addition, the delta store 224 comprises a plurality of control objects 1206, 1208. Each control objects is indicative of one or more DOs and optionally also one or more properties of these DOs which shall be hidden. Preferably, each control object in addition indicates a time period during which the one or more DOs or their properties shall be hidden. For example, control object 1206 indicates that one or more properties of the car object 673 shall be hidden für a time period between t12 and t17. Control object 1208 indicates that one or more properties of the car object 445 shall be hidden für any time later than t11.

According to embodiments, the delta store 224 is an append-only store and all delta objects and command objects are stored chronologically in the delta store at times t10, t11, ..., t21 indicated to the left of the arrow "write operation chronology". The time periods during wich data of a DO stored in the delta store shall be hidden may differ from the time when the respective command object was stored in the delta store. For example, control object 1208 is stored in the delta store at about time t18, but the time period during which data related to the car 445 DO shall be hidden is any time later than t11. Hence, the "hiding time" may start and/or end before, after or at the same time as the time at which the command object was stored.

For example, the framework that is used for continuously persisting DO changes of the application program in the at least one delta store may receive a command of a user or of another application program indicating that one or more properties (or all properties) of one or more selected DOs (e.g. car 445 or car 673) shall be hidden for a given time period. In response to receiving this command, the framework (or another program having write access to the delta store) writes a control command encoding the information which information to hide at what time. The control objects may have a different flag or attribute than the delta objects, thereby allowing a parser to easily distinguish the command objects from the delta objects.

According to embodiments, a delta store management program 210 (e.g. the framework) is configured to traverse the delta store 224 for providing the stored data to another entity, e.g. a user or another software program.

The delta store management program comprises at least one module 1202 or functionality for parsing delta objects. For example, the parsing of the delta objects can comprise reading a delta object, extracting the identity of the DO whose change is indicated in the delta object as well as the property and property value that was changed, and using the extracted information e.g. for computing a response, for creating a copy of the delta store and/or for creating UNDO or REDO commands for reconstructing the state of the application program or of an OLTP database comprising the latest state of the application program.

According to some embodiments, the delta store management program comprises in addition a module 1204 or functionality for parsing command objects. For example, the parsing of the command objects can comprise traversing the whole delta store for extracting all command objects stored in the delta store. The extracted command objects are parsed for determining the identity of the DO whose property value shall be hidden, determining the one or more properties that shall be hidden and determining the time interval during which these one or more properties of this DO shall be hidden.

According to preferred embodiments, the program 210 is configured to traverse the delta store completely for selectively parsing the command objects in a first traversal operation. Then, after having parsed the command objects for deterimining the DOs whose data is to be hidden and for determining the time period during which the currently valid property values shall be hidden, the delta store management program 210 traverses the at least one delta store a second time, thereby parsing the traversed delta objects sequentially and hiding one or more property values of the delta objects of one or more of the DOs in accordance with the hiding instruction obtained from the control objects. For example, the hiding of the one or more property values can comprise creating copies of the delta objects indicating changes of one or more DOs of interest, wherein one or more property values of the delta object copies are deleted, anonymized, pseudonymized and/or encrypted.

**Figure 12** depicts an embodiment wherein the delta store comprises delta objects indicating DO changes of a plurality of different DOs. According to one example, the delta store management program can traverse the delta store a first time for parsing all command objects and then can traverse the delta store a second time for extracting all delta objects in the delta store or for extracting delta objects of a plurality of different DOs. The software 210 processes the extracted delta objects such that the property values of at least some of the extracted delta objects are hidden in accordance with the information hiding specifications in the command objects. The processed delta objects are then returned as output.

According to another example, the program 210 can receive a request provide a complete archive of all changes of a single particular DO, e.g. car673. In response to receiving the request, the program 210 traverses the delta store a first time for parsing the command objects and a second time for selectively reading delta objects comprising an object-ID of the car673. The read delta objects relating to the car673 DO is processed such that sensitive data is hidden during the time period indicated in the command objects (here: in command object 1206). The processed delta objecs comprising one or more pseudonymized property values are output. For example, the output delta objects 1214, 1220, 1222, 1230, 1232 are returned without any changes. However, the output delta objects 1216, 1218, 1224 and 1228 comprise one or more property values which have been hidden, e.g. pseudonymized.

According to other embodiments, the command objects are stored in DO-specific delta stores as depicted, for example, in figure 9B.

### List of reference numerals

- 101-110: steps
- 120-126: steps
- 200: computer system
- 202: data object
- 204: data object
- 206: change operation
- 208: change operation
- 210: framework
- 212: main memory
- 214: processor(s)
- 216: delta object
- 218: delta object
- 220: OLTP data store
- 222: stream of delta objects
- 224: delta store
- 302-310: storage areas
- 311-316: delta objects
- 402-424: delta objects
- 408-424: traversed delta objects
- 426: selected time
- 434: command/request indicating a selected time
- 428: current time
- 430: OLTP-DB copy comprising the state of the DOs at the current time
- 432: OLTP-DB copy comprising the state of the DOs at the selected time
- 450-478: delta objects
- 456-476: traversed delta objects
- 502-524: delta objects
- 504-514: traversed delta objects
- 550-580: delta objects
- 554-564: traversed delta objects
- 526: selected time
- 528: current time
- 530: backup time
- 532: OLTP-DB copy comprising the state of the DOs at the backup time
- 536: OLTP-DB copy comprising the state of the DOs at the selected time
- 538: OLTP-DB comprising the state of the DOs at the backup time
- 600: graphical user interface
- 602: GUI for time traveling an OLTP data store comprising US stock data
- 604: GUI for time traveling an OLTP data store comprising UK stock data
- 606: GUI element
- 608: graphical representation of a timescale
- 610: indication of the time currently selected by a user and reflecting the state of the data content of the US stock database
- 612: data entry field for one or more search terms
- 614: indication of the time currently selected by a user and reflecting the state of the data content of the US stock database
- 702-710: delta objects
- 802: data object "DO1"
- 804-808: attribute values of DO1
- 810-812: methods of DO1
- 814: data object B07
- 816: attribute value of B07
- 818: method of B07
- 820: change operation
- 822: change operation
- 824: collection of interface methods
- 826-838: interface methods implemented by the methods of the DOs
- 850-854: lines respectively representing a transactional context
- 856: line representing timestamps of data change events
- 902-914: framework sub-modules
- 920-926: delta stores
- 930-936: streams of delta objects
- 950: data change event
- 952: data change event
- 954: data change event
- 956: commit of integrated transaction
- 958: commit-readiness event
- 951: integrated transaction
- 960: delta sub-transaction
- 962: OLTP sub-transaction
- 1202: delta object parser
- 1204: command object parser
- 1206: control object
- 1208: control object
- 1210: delta object
- 1212: delta object
- 1214: output delta object
- 1216: output delta object (hidden)
- 1218: output delta object (hidden)
- 1220: output delta object
- 1222: output delta object
- 1224: output delta object (hidden)
- 1226: output delta object (hidden)
- 1228: output delta object (hidden)
- 1230: output delta object

## Claims

1. A computer-implemented method for archiving data, the method comprising:
- providing (102) a framework (210), the framework being a software program configured for creating delta objects (311-316,402-424, 450-478, 502-524, 550-580) and for storing the delta objects in at least one data store (224, 920-926) referred to as "delta store", each delta object being descriptive of a data change, wherein the at least one delta store is an "append only" data store managed by a streaming application and/or a by a queuing system, wherein the at least one "append only" data store is a data store that is adapted to store and maintain delta objects in such a way that they are stored in sequentially adjacent physical storage areas in accordance with the chronological order of physically writing the data records on the delta store;
- providing (102) an application program (226) comprising a plurality of data objects (202, 204) - DOs, wherein the application program is a software program for solving a technical and/or business-related problem and is not a DBMS and wherein the application program is programmed such that any change operation (206, 208) which respectively creates, modifies and/or deletes one of the DOs in the application program automatically triggers the creation of a delta object (216, 218) by the framework, the created delta object being descriptive of the DO change caused by the change operation;
- using (104) the application program for processing data, thereby performing a plurality of the change operations;
- creating (106), by the framework, a plurality of delta objects in response to the plurality of change operations;
- storing (108), by the framework, the plurality of delta objects in the at least one delta store, wherein the plurality of change operations and the creation and storing of the delta objects are performed within integrated transactions, each integrated transaction covering one or more of the plurality of change operations and covering at least the creation and storing of the delta objects triggered by the one or more change operations performed within the said integrated transaction; and
- providing (110) the at least one delta store as data archive.

2. The computer-implemented method of any one of the previous claims, wherein the business logic of the application program (226) is identical to or is an updated version of the business logic of a legacy application program, the method further comprising:
- replacing the legacy application program by a combination of the application program and the framework.

3. The computer-implemented method of any one of the previous claims,
- wherein the application program is free of program routines specifically designed for archiving data object changes; and/or
- wherein the application program is programmed such that any one of the change operations (206, 208) automatically triggers the creation of one of the delta objects and wherein the creation and the storing of the delta objects by the framework is performed such that the at least one delta store comprises a complete history of the totality of change operations performed in the application program on the DO objects over the time.

4. The computer-implemented method of any one of the previous claims, each of the delta objects comprising meta data of the one of the data object whose change triggered the creation of the respective delta object, the method further comprising:
- receiving, by a delta store management program, a request to hide information associated with a particular one of the data objects, the request comprising one or more search values, the delta store management program being the framework or a different software program;
- identifying, by the delta store management program, all delta objects in the delta store representing a change operation performed on the particular one data object by comparing the one or more search values with the meta data of the stored delta objects;
- modifying selectively the identified delta objects in the delta store such that the value of at least one attribute of the meta data of all the identified delta objects is hidden, wherein the hiding is performed by deleting, anonymizing, pseudonymizing or encrypting the at least one attribute; and/or
- creating a modified copy of at least the ones of the at least one delta store comprising the identified delta objects, wherein in the modified copy selectively the identified delta objects are modified such that the value of at least one attribute of the meta data of all the identified delta objects is hidden, wherein the hiding is performed by deleting, anonymizing, pseudonymizing or encrypting the at least one attribute.

5. The computer-implemented method of any one of the previous claims 1-3, each of the delta objects comprising meta data of the one of the data object whose change triggered the creation of the respective delta object, the method further comprising:
- storing, by a delta store management program, at least one command object in the at least one delta store, the at least one command object being indicative of one or more of the attributes of one of the DOs to be hidden, and being indicative of a time period during which the one or more attributes of the said DO shall be hidden, wherein the at least one delta store is access-protected and selectively allows the delta store management program and the framework to access the at least one delta store;
- traversing, by the delta store management program, all delta objects in the at least one delta store a first time for parsing the command objects and for obtaining a specification of the attributes and DOs which shall be hidden and the respective hiding time periods;
- traversing, by the delta store management program, all delta objects in the at least one delta store a second time for parsing the delta objects, thereby creating modified copies of the ones of the delta objects comprising attribute values to be hidden according to the specification, wherein in the modified delta objects the ones of the attribute values indicated in the specification are hidden if the delta object was created within a hiding time period indicated in the specification for this attribute value and for the one of the DOs whose change triggered the creationof this delta object, wherein the hiding is performed by deleting, anonymizing, pseudonymizing or encrypting the at least one attribute.

6. The computer-implemented method of any one of the previous claims,
- wherein each integrated transaction defines a integrated transactional context in which:
o a failure to store within the integrated transaction a delta object in the delta store and/or
o a failure to perform within the integrated transaction an OLTP data store update reflecting a DO change in the application program and/or
o a failure to perform within the integrated transaction a change operation on a DO in the application program
induces:
○ a reversal of all DO changes in the application program having already been performed in the said integrated transaction; and
○ a reversal of all OLTP data store updates having already been performed in the said integrated transaction; and
○ a deletion of all delta objects having already been written in the delta store in the said integrated transaction.

7. The computer-implemented method of any one of the previous claims, further comprising:
- creating, by the framework, for each of the data objects of the application program, a respective data stream (930, 932, 934, 936);
- assigning, by the framework, to each of the data streams a respective delta store (920, 922, 924, 926) of the at least one delta store;
wherein the framework is configured to:
○ add every delta object created in response to a change operation performed on one of the data objects selectively to the data stream created for this data object; and/or
○ perform the storing of the delta objects such that all delta objects being indicative of a change of a particular one of the data objects are added selectively to the data stream created for this data object and are stored selectively in the one of the delta stores assigned to this data stream.

8. The computer-implemented method of claim 7,
- wherein the method is performed by a computer system comprising multiple processing units and wherein the method comprises automatically assigning the data streams to different ones of the processing units for processing the data streams in parallel; and/or
- wherein the delta stores are different physical storage devices or storage areas within different physical storage devices and wherein the storing of the data streams in the respective delta stores is performed in parallel.

9. The computer-implemented method of any one of the previous claims, further comprising:
- for each of the at least one delta store, automatically creating an asymmetric cryptographic key pair respectively comprising a private decryption key and a corresponding public encryption key;
- encrypting each of the delta objects stored in any one of the at least one delta store with the public encryption key created for this delta store;
- receiving a request for hiding data related to one or more of the DOs in the at least one delta store; and
- in response to receiving the request, identifying and deleting the one of the private decryption keys created for the one or more of the at least one delta stores comprising delta objects indicating a change of one of the DOs indicated in the request.

10. The computer-implemented method of any one of claims, wherein the begin of each of the one or more integrated transactions is triggered by a call to a function, the execution of the called function comprising performing the one or more change operations to be performed within the integrated transaction whose begin was triggered by the call, wherein the call is performed in a data object of the application program and the function is performed in and/or provided by the framework (210).

11. The computer-implemented method of claim 10, wherein the one or more change operations to be performed within the one of the integrated transactions whose begin is triggered by the call to the function are provided to the function as function arguments.

12. The computer-implemented method of any one of the previous claims,
- wherein the change operations comprise a class change operation, a class change operation being the creation, deletion or structural modification of a class acting as template for a class-specific type of data objects, the changes induced by the class change operation being reflected in one or more of the delta objects; and/or
- wherein the change operations comprise a modification of an association between two of the DOs.

13. The computer-implemented method of any one of the previous claims, further comprising:
- receiving an indication of a selected time;
- traversing at least some of the delta objects in the at least one delta store for automatically extracting UNDO or REDO operations from the traversed delta objects, the identity of the traversed delta objects depending on the selected time, each UNDO operation being adapted to undo the DO changes specified in the delta object from which the UNDO operaton was extracted, each REDO operation being adapted to re-apply the DO changes specified in the delta object from which the REDO operation was extracted;
- using the extracted UNDO or REDO operations for reconstructing the state of the application program at the selected time and/or for reconstructing the state of an OLTP-data store comprising the latest state of all DOs of the application program at the selected time;
wherein the method preferably further comprises:
- displaying a GUI (600), the GUI comprising at least one GUI element (606) enabling a user to select a point on a graphical representation of a timeline (608);
- in response to receiving the user's selection of the point on the timeline with the GUI element, performing the reconstruction of the application program and/or of the OLTP data store at the selected time, the reconstruction being performed preferably in real-time.

14. A computer-implemented method of restoring data and/or of restoring an application program having created the data from an archive, the application program being a software program for solving a technical and/or business-related problem, the application program not being a DBMS, the method comprising:
- providing (120) the archive, the archive comprising at least one data store referred to as delta store, wherein the at least one delta store is an "append only" data store managed by a streaming application and/or a by a queuing system, wherein the at least one "append only" data store is a data store that is adapted to store and maintain delta objects in such a way that they are stored in sequentially adjacent physical storage areas in accordance with the chronological order of physically writing the data records on the delta store, and the at least one delta store comprising a plurality of delta objects, each delta object being descriptive of a change of one or more of a plurality of data objects (202, 204) - DOs of an application program (226), wherein each delta object comprises:
○ an object-ID of the one of the DOs whose change is described in the delta object,
○ a timestamp being indicative of the time of performing the change indicated in the delta object;
○ a transaction-ID of one of an integrated transaction within which the DO whose change is described in the delta object was changed and within which the delta object was created and stored in the at least one delta store;
- receiving (122), by a delta store management program (210), an indication of a selected time;
- traversing (124), by the delta store management program, the delta objects stored in the at least one delta store, wherein the identity of the traversed delta objects depends on the selected time, wherein the traversing comprises automatically extracting UNDO or REDO operations from the traversed delta objects, wherein the delta store management program compares the time stamp of each delta object with the selected time for deciding whether or not the change specified in the delta object should be analyzed for extracting an UNDO or REDO operation that undoes or re-applies the specified data object change, wherein the chronological order and action target of the UNDO or REDO operations is specified in accordance with the timestamps, object-IDs and transaction-IDs of the traversed delta objects; and
- applying (126), by the delta store management program, the UNDO or REDO operations on DOs of another instance of the application program (226) or an OLTP-data store comprising a particular state of all DOs of the other application program instance for recovering the state of the application program at the selected time, whereby the UNDO or REDO operations are performed on the DOs of the other application program instance or on the OLTP data store within integrated transactions whose borders are defined such that UNDO or REDO operations extracted from delta objects sharing the same transaction-ID are performed within the same integrated transaction.

15. A computer system(200) comprising:
- at least one data store (224) referred to as "delta store", wherein the at least one delta store is an "append only" data store managed by a streaming application and/or a by a queuing system, wherein the at least one "append only" data store is a data store that is adapted to store and maintain delta objects in such a way that they are stored in sequentially adjacent physical storage areas in accordance with the chronological order of physically writing the data records on the delta store;
- a framework (210), the framework being a software program configured for creating delta objects and for storing the delta objects in the at least one delta store, each delta object being descriptive of a data object change;
- an application program (226) comprising a plurality of data objects (202, 204)
- DOs, wherein the application program is a software program for solving a technical and/or business-related problem and is not a DBMS and wherein the application program is programmed such that any change operation (206, 208) which respectively creates, modifies and/or deletes one of the DOs in the application program automatically triggers the creation of a delta object (216, 218) by the framework, the created delta object being descriptive of the DO change caused by the change operation;
wherein the application program (226) and the framework are respectively configured for:
○ processing data by the application program, the application program thereby performing a plurality of the change operations;
○ creating, by the framework, a plurality of delta objects in response to the plurality of change operations;
○ storing, by the framework, the plurality of delta objects in the at least one delta store; and
wherein the plurality of change operations and the creation and storing of the delta objects are performed within integrated transactions, each integrated transaction covering one or more of the plurality of change operations and covering at least the creation and storing of the delta objects triggered by the one or more change operations performed within the said integrated transaction; and
∘ providing the at least one delta store as data archive.

16. A computer system for restoring the state of an application program, the system comprising:
- an archive, the archive comprising at least one data store referred to as delta store, wherein the at least one delta store is an "append only" data store managed by a streaming application and/or a by a queuing system, wherein the at least one "append only" data store is a data store that is adapted to store and maintain delta objects in such a way that they are stored in sequentially adjacent physical storage areas in accordance with the chronological order of physically writing the data records on the delta store, and the at least one delta store comprising a plurality of delta objects, each delta object descriptive of a data object change of one or more of of a plurality of data objects (202, 204) - DOs of an application program (226), the application program being a software program for solving a technical and/or business-related problem, the application program not being a DBMS, wherein each delta object comprises:
○ an object-ID of the one of the DOs whose change is described in the delta object;
○ a timestamp being indicative of the time of performing the change indicated in the delta object;
○ a transaction-ID of one of an integrated transaction within which the DO whose change is described in the delta object was changed and within which the delta object was created and stored in the at least one delta store;
- a delta store management program configured for:
○ receiving an indication of a selected time;
○ traversing the delta objects stored in the at least one delta store, wherein the identity of the traversed delta objects depends on the selected time, wherein the traversing comprises automatically extracting UNDO or REDO operations from the traversed delta objects, wherein the delta store management program compares the time stemp of each delta object with the selected time for deciding whether or not the change specified in the delta object should be analyzed for extracting an UNDO or REDO operation that undoes or re-applies the specified data object change, wherein the chronological order and action target of the UNDO or REDO operations is specified in accordance with the timestamps, object-IDs and transaction-IDs of the traversed delta objects; and
○ applying the UNDO or REDO operations on DOs of another instance of the application program (226) or an OLTP-data store comprising a particular state of all DOs of the other application program instance for recovering the state of the application program at the selected time, whereby the UNDO or REDO operations are performed on the DOs of the other application program instance or on the OLTP data store within integrated transactions whose borders are defined such that UNDO or REDO operations extracted from delta objects sharing the same transaction-ID are performed within the same integrated transaction.

17. A computer-readable storage medium comprising computer-interpretable instructions which, when executed by a processor, cause the processor to perform a method according to any one of claims 1-14.

## Patentansprüche

1. Computerimplementiertes Verfahren zum Archivieren von Daten, wobei das Verfahren umfasst:
- Bereitstellen (102) eines Framework (210), wobei das Framework ein Software-Programm ist, das eingerichtet ist, Deltaobjekte (311-316, 402-424, 450-478, 502-524, 550-580) zu erzeugen und die Deltaobjekte in mindestens einem Datenspeicher (224, 920-926) zu speichern, der als "Deltaspeicher" bezeichnet wird, wobei jedes Deltaobjekt eine Datenänderung beschreibt, wobei der mindestens eine Deltaspeicher ein "Append-only"-Datenspeicher ist, der von einer Streaming-Anwendung und/oder von einem Warteschlangensystem verwaltet wird, wobei der mindestens eine "Append-only"-Datenspeicher ein Datenspeicher ist, der dafür ausgelegt ist, Deltaobjekte auf solche Weise zu speichern und zu bewahren, dass sie gemäß der chronologischen Reihenfolge, in der die Dateneinträge physisch in den Deltaspeicher geschrieben wurden, der Reihe nach in einander benachbarte physische Speicherbereiche gespeichert werden;
- Bereitstellen (102) eines Anwendungsprogramms (226), das eine Mehrzahl von Datenobjekten (202, 204) - DOs, umfasst, wobei das Anwendungsprogramm ein Software-Programm zum Lösen eines technischen und/oder geschäftlichen Problems ist und kein DBMS ist, und wobei das Anwendungsprogramm so programmiert ist, dass jede Änderungsoperation (206, 208), die jeweils eines von den DOs in dem Anwendungsprogramm erzeugt, modifiziert und/oder löscht, automatisch die Erzeugung eines Deltaobjekts (216, 218) durch das Framework auslöst, wobei das erzeugte Deltaobjekt die von der Änderungsoperation bewirkte DO-Änderung beschreibt;
- Verwenden (104) des
Anwendungsprogramms zur Verarbeitung von Daten, wodurch eine Mehrzahl der Änderungsoperationen durchgeführt wird;
- Erzeugen einer Mehrzahl von Deltaobjekten durch das Framework (106), als Reaktion auf die Mehrzahl von Änderungsoperationen;
- Speichern (108) der Mehrzahl von Deltaobjekten in dem mindestens einen Deltaspeicher durch das Framework, wobei die Mehrzahl von Änderungsoperationen und das Erzeugen und Speichern der Deltaobjekte innerhalb integrierter Transaktionen durchgeführt werden, wobei jede integrierte Transaktion eine oder mehrere von der Mehrzahl von Änderungsoperationen abdeckt und zumindest die Erzeugung und Speicherung der Deltaobjekte abdeckt, die von der einen oder den mehreren innerhalb der integrierten Transaktion durchgeführten Änderungsoperationen ausgelöst wurden; und
- Bereitstellen (110) des mindestens einen Deltaspeichers als Datenarchiv.

2. Computerimplementiertes Verfahren nach einem der vorangehenden Ansprüche, wobei die Geschäftslogik des Anwendungsprogramms (226) mit der Geschäftslogik eines älteren Anwendungsprogramms identisch ist oder eine aktualisierte Version davon ist, wobei das Verfahren ferner umfasst:
- Ersetzen des älteren Anwendungsprogramms durch eine Kombination des Anwendungsprogramms und des Framework.

3. Computerimplementiertes Verfahren nach einem der vorangehenden Ansprüche,
- wobei das Anwendungsprogramm frei von Programmroutinen ist, die spezifisch zum Archivieren von Datenobjektänderungen entworfen wurden; und/oder
- wobei das Anwendungsprogramm so programmiert ist, dass jede von den Änderungsoperationen (206, 208) automatisch die Erzeugung von einem der Deltaobjekte auslöst, und wobei die Erzeugung und die Speicherung der Deltaobjekte durch das Framework so durchgeführt werden, dass der mindestens eine Deltaspeicher eine vollständige Historie der Gesamtheit der Änderungsoperationen umfasst, die im Laufe der Zeit in dem Anwendungsprogramm an den DO-Objekten durchgeführt wurden.

4. Computerimplementiertes Verfahren nach einem der vorangehenden Ansprüche, wobei jedes von den Deltaobjekten Metadaten des einen Datenobjekts, dessen Änderung die Erzeugung des betreffenden Deltaobjekts ausgelöst hat, umfasst, wobei das Verfahren ferner umfasst:
- Empfangen einer Anforderung einer Verbergung von Informationen, die mit einem bestimmten einen von den Datenobjekten assoziiert sind, an einem Deltaspeicherverwaltungsprogramm, wobei die Anforderung einen oder mehrere Suchwerte umfasst, wobei das Deltaspeicherverwaltungsprogramm das Framework oder ein anderes Software-Programm ist;
- Identifizieren aller Deltaobjekte in dem Deltaspeicher, die eine an dem betreffenden einen Datenobjekt durchgeführte Änderungsoperation darstellen, durch das Deltaspeicherverwaltungsprogramm durch Vergleichen des einen oder der mehreren Suchwerte mit den Metadaten der gespeicherten Deltaobjekte;
- selektives Modifizieren der identifizierten Datenobjekte in dem Deltaspeicher, so dass der Wert von mindestens einem Attribut der Metadaten aller identifizierten Datenobjekte verborgen wird, wobei das Verbergen durch Löschen, Anonymisieren, Pseudonymisieren oder Verschlüsseln des mindestens einen Attributs durchgeführt wird; und/oder
- Erzeugen einer modifizierten Kopie von dem einen bzw. von denjenigen von den mehreren Deltaspeichern, in dem bzw. in denen die identifizierten Deltaobjekte enthalten sind, wobei in der modifizierten Kopie die identifizierten Deltaobjekte selektiv so modifiziert werden, dass der Wert von mindestens einem Attribut der Metadaten aller identifizierten Deltaobjekte verborgen wird, wobei das Verbergen durch Löschen, Anonymisieren, Pseudonymisieren oder Verschlüsseln des mindestens einen Attributs durchgeführt wird.

5. Computerimplementiertes Verfahren nach einem der vorangehenden Ansprüche, 1-3, wobei jedes von den Deltaobjekten Metadaten des einen Datenobjekts, dessen Änderung die Erzeugung des betreffenden Deltaobjekts ausgelöst hat, umfasst, wobei das Verfahren ferner umfasst:
- Speichern mindestens eines Befehlsobjekts in dem mindestens einen Deltaspeicher durch ein Deltaspeicherverwaltungsprogramm, wobei das mindestens eine Befehlsobjekt eines oder mehrere von den Attributen von einem der zu verbergenden DOs angibt und einen Zeitraum angibt, über dem das eine oder die mehreren Attribute des DO verborgen werden sollen, wobei der mindestens eine Deltaspeicher zugriffsgeschützt ist und selektiv einen Zugriff des Deltaspeicherverwaltungsprogramms und des Framework auf den mindestens einen Deltaspeicher zulässt;
- Traversieren aller Deltaobjekte in dem mindestens einen Deltaspeicher durch das Deltaspeicherverwaltungsprogramm für ein erstes Mal, um die Befehlsobjekte zu parsen und um eine Spezifikation der Attribute und DOs, die verborgen werden sollen, und die entsprechenden Verbergungszeiträume zu ermitteln;
- Traversieren aller Deltaobjekte in dem mindestens einen Deltaspeicher durch das Deltaspeicherverwaltungsprogramm für ein zweites Mal, um die Deltaobjekte zu parsen, wodurch modifizierte Kopien von denjenigen von den Deltaobjekten erzeugt werden, die Attributwerte umfassen, die gemäß der Spezifikation verborgen werden sollen, wobei in den modifizierten Deltaobjekten diejenigen von den Attributwerten verborgen werden, die in der Spezifikation angegeben werden, falls das Deltaobjekt innerhalb eines in der Spezifikation für diesen Attributwert angegebenen Verbergungszeitraums und für dasjenige von den DOs, dessen Änderung die Erzeugung des Deltaobjekts ausgelöst hat, erzeugt wurde, wobei die Verbergung durch Löschen, Anonymisieren, Pseudonymisieren oder Verschlüsseln des mindestens einen Attributs durchgeführt wird.

6. Computerimplementiertes Verfahren nach einem der vorangehenden Ansprüche,
- wobei jede integrierte Transaktion einen integrierten Transaktionskontext definiert, in dem:
○ ein Fehlschlag einer Speicherung eines Deltaobjekts in dem Deltaspeicher innerhalb der integrierten Transaktion und/oder
○ ein Fehlschlag einer Durchführung einer OLTP-Datenbankaktualisierung innerhalb der integrierten Transaktion, die eine DO-Änderung in dem Anwendungsprogramm reflektiert, und/oder
○ ein Fehlschlag einer Durchführung einer Änderungsoperation an einem DO in dem Anwendungsprogramm
Folgendes hervorruft:
○ eine Rückgängigmachung aller in der integrierten Transaktion bereits durchgeführten DO-Änderungen in dem Anwendungsprogramm; und
○ eine Rückgängigmachung aller in der integrierten Transaktion bereits durchgeführten OLTP-Datenbankaktualisierungen; und
○ eine Löschung aller Deltaobjekte, die in der integrierten Transaktion bereits in den Deltaspeicher geschrieben wurden.

7. Computerimplementiertes Verfahren nach einem der vorangehenden Ansprüche, ferner umfassend:
- Erzeugen eines jeweiligen Datenstroms (930, 932, 934, 936) für jedes von den Datenobjekten des Anwendungsprogramms durch das Framework;
- Zuordnen des einen Deltaspeichers oder eines jeweiligen (920, 922, 924, 926) von den mehreren Deltaspeichern zu jedem von den Datenströmen;
wobei das Framework eingerichtet ist zum:
○ selektiven Hinzufügen jedes Deltaobjekts, das als Reaktion auf eine an einem der Datenobjekte durchgeführte Änderungsoperation erzeugt wurde, zu dem für dieses Datenobjekt erzeugten Datenstrom; und/oder
○ Durchführen des Speicherns der Deltaobjekte auf solche Weise, dass alle Deltaobjekte, die eine Änderung von einem bestimmten einen von den Datenobjekten angeben, selektiv dem für dieses Datenobjekt erzeugten Datenstrom hinzugefügt werden und selektiv in dem einen von den Deltaspeichern gespeichert werden, der diesem Datenstrom zugeordnet ist.

8. Computerimplementiertes Verfahren nach Anspruch 7,
- wobei das Verfahren von einem Computersystem durchgeführt wird, das mehrere Verarbeitungseinheiten umfasst, und wobei das Verfahren ein automatisches Zuordnen der Datenströme zu voneinander verschiedenen von den Verarbeitungseinheiten zur parallelen Verarbeitung der Datenströme umfasst; und/oder
- wobei die Deltaspeicher voneinander verschiedene physische Speichervorrichtungen oder Speicherbereiche innerhalb voneinander verschiedener physischer Speichervorrichtungen sind, und wobei das Speichern der Datenströme in den betreffenden Datenspeichern parallel durchgeführt wird.

9. Computerimplementiertes Verfahren nach einem der vorangehenden Ansprüche, ferner umfassend:
- für den einen oder für jeden von den mehreren Deltaspeichern: automatisch Erzeugen eines asymmetrischen krytographischen Schlüsselpaars, das jeweils einen privaten Entschlüsselungsschlüssel und einen entsprechenden öffentlichen Entschlüsselungsschlüssel umfasst;
- Verschlüsseln von jedem der in dem einen oder in irgendeinem von den mehreren Deltaspeichern gespeicherten Datenobjekte mit dem öffentlichen Verschlüsselungsschlüssel, der für diesen Deltaspeicher erzeugt wurde;
- Empfangen einer Anfrage nach Verbergung von Daten, die mit einem oder mehreren von den DOs in dem mindestens einen Deltaspeicher in Beziehung stehen; und
- als Reaktion auf den Empfang der Anfrage: Identifizieren und Löschen des einen von den privaten Entschlüsselungsschlüsseln, die für den einen oder für die mehreren von den mehreren Deltaspeichern erzeugt wurden, die Deltaobjekte umfassen, die eine Änderung von einem der in der Anfrage angegebenen DOs angeben.

10. Computerimplementiertes Verfahren nach einem der vorangehenden Ansprüche, wobei der Beginn der einen oder von jeder der mehreren integrierten Transaktionen von einem Funktionsaufruf ausgelöst wird, wobei die Ausführung der aufgerufenen Funktion die Durchführung der einen oder der mehreren Änderungsoperationen umfasst, die innerhalb der integrierten Transaktion, deren Beginn von dem Aufruf ausgelöst wurde, durchgeführt werden sollen, wobei der Aufruf in einem Datenobjekt des Anwendungsprogramms durchgeführt wird und die Funktion in dem Framework (210) durchgeführt wird oder von diesem bereitgestellt wird.

11. Computerimplementiertes Verfahren nach Anspruch 10, wobei die eine oder die mehreren Änderungsoperationen, die innerhalb der einen von den integrierten Transaktionen durchzuführen sind, deren Beginn von dem Aufruf der Funktion ausgelöst wird, der Funktion als Funktionsargumente bereitgestellt werden.

12. Computerimplementiertes Verfahren nach einem der vorangehenden Ansprüche,
- wobei die Änderungsoperationen eine Klassenänderungsoperation umfassen, wobei eine Klassenänderungsoperation die Erzeugung, Löschung oder strukturelle Modifizierung einer Klasse ist, die als Template für einen klassenspezifischen Typ von Datenobjekten dient, wobei die von der Klassenänderungsoperation hervorgerufenen Änderungen in einem oder mehreren von den Deltaobjekten reflektiert werden, und/oder
- wobei die Änderungsoperationen eine Modifikation einer Assoziation zwischen zweien von den DOs umfassen.

13. Computerimplementiertes Verfahren nach einem der vorangehenden Ansprüche, ferner umfassend:
- Empfangen einer Angabe einer ausgewählten Zeit;
- Traversieren zumindest mancher von den Deltaobjekten in dem mindestens einen Deltaspeicher, um automatisch UNDO- oder REDO-Operationen aus den traversierten Deltaobjekten zu extrahieren, wobei die Identität der traversierten Deltaobjekte von der ausgewählten Zeit abhängt, wobei jede UNDO-Operation dafür ausgelegt ist, die in dem Deltaobjekt, aus dem die UNDO-Operation extrahiert wurde, spezifizierten DO-Änderungen rückgängig zu machen, jede REDO-Operation dafür ausgelegt ist, die in dem Deltaobjekt, aus dem die REDO-Operation extrahiert wurde, spezifizierten DO-Änderungen erneut anzuwenden;
- Verwenden der extrahierten UNDO- oder REDO-Operationen zum Rekonstruieren des Zustands des Anwendungsprogramms, wie er zu der ausgewählten Zeit war, oder zum Rekonstruieren des Zustands eines OLTP-Datenspeichers, der den zu der ausgewählten Zeit neuesten Zustand aller DOs des Anwendungsprogramms umfasst;
wobei das Verfahren vorzugsweise ferner umfasst:
- Anzeigen einer GUI (600), wobei die GUI mindestens ein GUI-Element (606) umfasst, das einen Anwender in die Lage versetzt, einen Punkt auf einer grafischen Darstellung einer Zeitachse (608) auszuwählen;
- als Reaktion auf den Empfang des von dem Anwender anhand des GUI-Elements ausgewählten Punktes auf der Zeitachse: Durchführen der Rekonstruktion des Anwendungsprogramms und/oder des OLTP-Datenspeichers, wie er zu der ausgewählten Zeit war, wobei die Rekonstruktion vorzugsweise in Echtzeit durchgeführt wird.

14. Computerimplementiertes Verfahren zum Wiederherstellen von Daten und/oder zum Wiederherstellen eines Anwendungsprogramms, das die Daten erzeugt hat, aus einem Archiv, wobei das Anwendungsprogramm ein Software-Programm zum Lösen eines technischen und/oder geschäftlichen Problems ist, wobei das Anwendungsprogramm kein DBMS ist, wobei das Verfahren umfasst:
- Bereitstellen (120) des Archivs, wobei das Archiv mindestens einen Datenspeicher umfasst, der als Deltaspeicher bezeichnet wird, wobei der mindestens eine Deltaspeicher ein "Append-only"-Datenspeicher ist, der von einer Streaming-Anwendung und/oder von einem Warteschlangensystem verwaltet wird, wobei der mindestens eine "Append-only"-Datenspeicher ein Datenspeicher ist, der dafür ausgelegt ist, Deltaobjekte auf solche Weise zu speichern und zu bewahren, dass sie gemäß der chronologischen Reihenfolge, in der die Dateneinträge physisch in den Deltaspeicher geschrieben wurden, der Reihe nach in einander benachbarte physische Speicherbereiche gespeichert werden, und der mindestens eine Deltaspeicher eine Mehrzahl von Datenobjekten umfasst, wobei jedes Datenobjekt eine Änderung von einem oder mehreren von einer Mehrzahl von Datenobjekten (202, 204) - DOs- eines Anwendungsprogramms (226) beschreibt, wobei jedes Deltaobjekt umfasst:
○ eine Objekt-ID des einen von den DOs, dessen Änderung in dem Deltaobjekt beschrieben wird,
○ einen Zeitstempel, der die Zeit zur Durchführung der Änderung, die in dem Deltaobjekt angegeben wird, angibt;
○ eine Transaktions-ID von einer integrierten Transaktion, innerhalb derer das DO, dessen Änderung in dem Deltaobjekt beschrieben wird, geändert wurde und innerhalb derer das Deltaobjekt erzeugt und in dem mindestens einen Deltaspeicher gespeichert wurde;
- Empfangen (122) einer Angabe einer ausgewählten Zeit durch ein Deltaspeicherverwaltungsprogramm (210);
- Traversieren (124) der in dem mindestens einen Deltaspeicher gespeicherten Deltaobjekte durch das Deltaspeicherverwaltungsprogramm, wobei die Identität der traversierten Deltaobjekte von der ausgewählten Zeit abhängt, wobei das Traversieren ein automatisches Extrahieren von UNDO- oder REDO-Operationen aus den traversierten Deltaobjekten umfasst, wobei das Deltaspeicherverwaltungsprogramm den Zeitstempel jedes Deltaobjekts mit der ausgewählten Zeit vergleicht, um zu entscheiden, ob oder ob nicht die in dem Deltaobjekt spezifizierte Änderung analysiert werden sollte, um eine UNDO- oder REDO-Operation, die die spezifizierte Datenobjektänderung erneut anwendet oder rückgängig macht, zu extrahieren, wobei die chronologische Reihenfolge und das Wirkungsziel der UNDO- oder REDO-Operationen gemäß den Zeitstempeln, Objekt-IDs und Transaktions-IDs der traversierten Deltaobjekte spezifiziert werden; und
- Anwenden (126) der UNDO- oder REDO-Operationen auf DOs einer anderen Instanz des Anwendungsprogramms (226) oder einen OLTP-Datenspeicher, der einen bestimmten Zustand aller DOs der anderen Anwendungsprogramminstanz umfasst, durch das Deltaspeicherverwaltungsprogramm, um den Zustand des Anwendungsprogramms, wie er zu der ausgewählten Zeit war, wiederherzustellen, wobei die UNDO- oder REDO-Operationen an den DOs der anderen Anwendungsprogramminstanz oder an dem OLTP-Datenspeicher innerhalb integrierter Transaktionen durchgeführt werden, deren Grenzen so definiert sind, dass UNDO- oder REDO-Operationen, die aus Deltaobjekten mit der gleichen Transaktions-ID extrahiert werden, innerhalb derselben integrierten Transaktion durchgeführt werden.

15. Computersystem (200), umfassend:
- mindestens einen Datenspeicher (224), der als "Deltaspeicher" bezeichnet wird, wobei der mindestens eine Deltaspeicher ein "Append-only"-Datenspeicher ist, der von einer Streaming-Anwendung und/oder von einem Warteschlangensystem verwaltet wird, wobei der mindestens eine "Append-only"-Datenspeicher ein Datenspeicher ist, der dafür ausgelegt ist, Deltaobjekte auf solche Weise zu speichern und zu bewahren, dass sie gemäß der chronologischen Reihenfolge, in der die Dateneinträge physisch in den Deltaspeicher geschrieben wurden, der Reihe nach in einander benachbarte physische Speicherbereiche gespeichert werden;
- ein Framework (210), wobei das Framework ein Software-Programm ist, das eingerichtet ist, Deltaobjekte zu erzeugen und die Deltaobjekte in dem mindestens einen Deltaspeicher zu speichern, wobei jedes Deltaobjekt eine Datenobjektänderung beschreibt;
- ein Anwendungsprogramm (226), das eine Mehrzahl von Datenobjekten (202, 204) - DOs, umfasst, wobei das Anwendungsprogramm ein Software-Programm zum Lösen eines technischen und/oder geschäftlichen Problems ist und kein DBMS ist, und wobei das Anwendungsprogramm so programmiert ist, dass jede Änderungsoperation (206, 208), die jeweils eines von den DOs in dem Anwendungsprogramm erzeugt, modifiziert und/oder löscht, automatisch die Erzeugung eines Deltaobjekts (216, 218) durch das Framework auslöst, wobei das erzeugte Deltaobjekt die von der Änderungsoperation bewirkte DO-Änderung beschreibt;
wobei das Anwendungsprogramm (226) und das Framework jeweils eingerichtet sind zum:
○ Verarbeiten von Daten durch das Anwendungsprogramm, wobei das Anwendungsprogramm dadurch eine Mehrzahl von Änderungsoperationen durchführt;
○ Erzeugen einer Mehrzahl von Deltaobjekten durch das Framework, als Reaktion auf die Mehrzahl von Änderungsoperationen;
○ Speichern der Mehrzahl von Deltaobjekten in dem mindestens einen Deltaspeicher durch das Framework; und
wobei die Mehrzahl von Änderungsoperationen und das Erzeugen und Speichern der Deltaobjekte innerhalb integrierter Transaktionen durchgeführt werden, wobei jede integrierte Transaktion eine oder mehrere von der Mehrzahl von Änderungsoperationen abdeckt und zumindest die Erzeugung und Speicherung der Deltaobjekte abdeckt, die von der einen oder den mehreren innerhalb der integrierten Transaktion durchgeführten Änderungsoperationen ausgelöst wurden; und
○ Bereitstellen des mindestens einen Deltaspeichers als Datenarchiv.

16. Computersystem zum Wiederherstellen des Zustands eines Anwendungsprogramms, wobei das System umfasst:
- ein Archiv, wobei das Archiv mindestens einen als Deltaspeicher bezeichneten Datenspeicher umfasst, wobei der mindestens eine Deltaspeicher ein "Append-only"-Datenspeicher ist, der von einer Streaming-Anwendung und/oder von einem Warteschlangensystem verwaltet wird, wobei der mindestens eine "Append-only"-Datenspeicher ein Datenspeicher ist, der dafür ausgelegt ist, Deltaobjekte auf solche Weise zu speichern und zu bewahren, dass sie gemäß der chronologischen Reihenfolge, in der die Dateneinträge physisch in den Deltaspeicher geschrieben wurden, der Reihe nach in einander benachbarte physische Speicherbereiche gespeichert werden; und der mindestens eine Deltaspeicher eine Mehrzahl von Deltaobjekten umfasst, wobei jedes Deltaobjekt eine Datenobjektänderung von einem oder mehreren von einer Mehrzahl von Deltaobjekten (202, 204) - DOs - eines Anwendungsprogramms (226) umfasst, wobei das Anwendungsprogramm ein Software-Programm zum Lösen eines technischen und/oder geschäftlichen Problems ist, wobei das Anwendungsprogramme kein DBMS ist, wobei jedes Deltaobjekt umfasst:
○ eine Objekt-ID des einen von den DOs, dessen Änderung in dem Deltaobjekt beschrieben wird;
○ einen Zeitstempel, der die Zeit zur Durchführung der Änderung, die in dem Deltaobjekt angegeben wird, angibt;
○ eine Transaktions-ID von einer integrierten Transaktion, innerhalb derer das DO, dessen Änderung in dem Deltaobjekt beschrieben wird, geändert wurde, und innerhalb derer das Deltaobjekt erzeugt und in dem mindestens einen Deltaspeicher gespeichert wurde;
- ein Deltaspeicherverwaltungsprogramm, das eingerichtet ist zum:
○ Empfangen einer Angabe einer ausgewählten Zeit;
○ Traversieren der in dem mindestens einen Deltaspeicher gespeicherten Deltaobjekte, wobei die Identität der traversierten Deltaobjekte von der ausgewählten Zeit abhängt, wobei das Traversieren ein automatisches Extrahieren von UNDO- oder REDO-Operationen aus den traversierten Deltaobjekten umfasst, wobei das Deltaspeicherverwaltungsprogramm den Zeitstempel jedes Deltaobjekts mit der ausgewählten Zeit vergleicht, um zu entscheiden, ob oder ob nicht die in dem Deltaobjekt spezifizierte Änderung analysiert werden sollte, um eine UNDO- oder REDO-Operation, die die spezifizierte Datenobjektänderung erneut anwendet oder rückgängig macht, zu extrahieren, wobei die chronologische Reihenfolge und das Wirkungsziel der UNDO- oder REDO-Operationen gemäß den Zeitstempeln, Objekt-IDs und Transaktions-IDs der traversierten Deltaobjekte spezifiziert werden; und
○ Anwenden der UNDO- oder REDO-Operationen auf DOs einer anderen Instanz des Anwendungsprogramms (226) oder einen OLTP-Datenspeicher, der einen bestimmten Zustand aller DOs der anderen Anwendungsprogramminstanz umfasst, um den Zustand des Anwendungsprogramms, wie er zu der ausgewählten Zeit war, wiederherzustellen, wobei die UNDO- oder REDO-Operationen an den DOs der anderen Anwendungsprogramminstanz oder an dem OLTP-Datenspeicher innerhalb integrierter Transaktionen durchgeführt werden, deren Grenzen so definiert sind, dass UNDO- oder REDO-Operationen, die aus Deltaobjekten mit der gleichen Transaktions-ID extrahiert werden, innerhalb derselben integrierten Transaktion durchgeführt werden.

17. Computerlesbares Speichermedium, das von einem Computer interpretierbare Anweisungen umfasst, die bei ihrer Ausführung durch einen Prozessor den Prozessor veranlassen, ein Verfahren nach einem der Ansprüche 1-14 durchzuführen.

## Revendications

1. Procédé mis en oeuvre par ordinateur pour l'archivage de données, le procédé comprenant :
- le pourvoi (102) d'un cadre (210), le cadre étant un programme logiciel conçu pour créer des objets delta (311-316, 402-424, 450-478, 502-524, 550-580) et pour stocker les objets delta dans au moins un stockage de données (224, 920-926) appelé « stockage delta », chaque objet delta décrivant un changement de données, dans lequel l'au moins un stockage delta est un stockage de données « annexer uniquement » géré par une application de streaming et/ou par un système de file d'attente,
dans lequel l'au moins un stockage de données « annexer uniquement » est un stockage de données qui est adapté pour stocker et maintenir les objets delta d'une manière telle qu'ils sont stockés dans des zones de stockage physique séquentiellement adjacentes conformément à l'ordre chronologique d'écriture physique des enregistrements de données sur le stockage delta ;
- le pourvoi (102) d'un programme d'application (226) comprenant une pluralité d'objets de données (202, 204) - OD, dans lequel le programme d'application est un programme logiciel pour la résolution d'un problème technique et/ou commercial et n'est pas un DBMS et dans lequel le programme d'application est programmé de sorte que toute opération de changement (206, 208) qui crée, modifie et/ou supprime respectivement l'un des OD dans le programme d'application déclenche automatiquement la création d'un objet delta (216, 218) par le cadre, l'objet delta créé décrivant le changement d'OD amené par l'opération de changement ;
- l'utilisation (104) du programme d'application pour le traitement de données, exécutant ainsi une pluralité des opérations de changement ;
- la création (106), par le cadre, d'une pluralité d'objets delta en réponse à la pluralité d'opérations de changement ;
- le stockage (108), par le cadre, de la pluralité d'objets delta dans l'au moins un stockage delta, dans lequel la pluralité d'opérations de changement et la création et le stockage des objets delta sont exécutées au sein de transactions intégrées, chaque transaction intégrée englobant une ou plusieurs de la pluralité des opérations de changement et englobant au moins la création et le stockage des objets delta déclenchés par la ou les opérations de changement exécutées au sein de ladite transaction intégrée ; et
- le pourvoi (110) de l'au moins un stockage delta en tant qu'archive de données.

2. Procédé mis en oeuvre par ordinateur selon l'une quelconque des revendications précédentes, dans lequel la logique commerciale du programme d'application (226) est identique ou est une version mise à jour de la logique commerciale d'un ancien programme d'application, le procédé comprenant en outre :
- le remplacement de l'ancien programme d'application par une combinaison du programme d'application et du cadre.

3. Procédé mis en oeuvre par ordinateur selon l'une quelconque des revendications précédentes,
- dans lequel le programme d'application est exempt de routines de programme spécifiquement conçues pour l'archivage de changements d'objets de données ; et/ou
- dans lequel le programme d'application est programmé de sorte que n'importe laquelle des opérations de changement (206, 208) déclenche automatiquement la création de l'un des objets delta et dans lequel la création et le stockage des objets delta par le cadre est exécutée de sorte que l'au moins un stockage delta comprend un historique complet de la totalité des opérations de changement exécutées dans le programme d'application sur les objets OD au cours du temps.

4. Procédé mis en oeuvre par ordinateur selon l'une quelconque des revendications précédentes, chacun des objets delta comprenant des métadonnées de l'un des objets de données dont le changement a déclenché la création de l'objet delta correspondant, le procédé comprenant en outre :
- la réception, par un programme de gestion de stockage delta, d'une requête visant à masquer les informations associées à l'un des objets de données particulier, la requête comprenant une ou plusieurs valeurs de recherche, le programme de gestion de stockage delta étant le cadre ou un programme logiciel différent ;
- l'identification, par le programme de gestion de stockage delta, de tous les objets delta dans le stockage delta représentant une opération de changement exécutée sur l'objet de données particulier par comparaison de la ou des valeurs de recherche avec les métadonnées des objets delta stockés ;
- la modification sélective des objets delta identifiés dans le stockage delta de sorte que la valeur d'au moins un attribut des métadonnées de tous les objets delta identifiés est masquée, dans lequel le masquage est exécuté par suppression, anonymisation, pseudonymisation ou chiffrage de l'au moins un attribut ; et/ou
- la création d'une copie modifiée d'au moins les éléments de l'au moins un stockage delta comprenant les objets delta identifiés, dans lequel dans la copie modifiée les objets delta identifiés sont sélectivement modifiés de sorte que la valeur d'au moins un attribut des métadonnées de tous les objets delta identifiés est masquée, dans lequel le masquage est exécuté par suppression, anonymisation, pseudonymisation ou chiffrage de l'au moins un attribut.

5. Procédé mis en oeuvre par ordinateur selon l'une quelconque des revendications 1 à 3 précédentes, chacun des objets delta comprenant des métadonnées de l'un des objets de données dont le changement a déclenché la création de l'objet delta correspondant, le procédé comprenant en outre :
- le stockage, par un programme de gestion de stockage delta, d'au moins un objet de commande dans l'au moins un stockage delta, l'au moins un objet de commande indiquant qu'un ou plusieurs des attributs de l'un des OD sont masqués, et indiquant une période pendant laquelle le ou les attributs dudit OD doivent être masqués, dans lequel l'au moins un stockage delta est protégé en accès et autorise sélectivement le programme de gestion de stockage delta et le cadre à accéder à l'au moins un stockage delta ;
- le passage en revue, par le programme de gestion de stockage delta, de tous les objets delta dans l'au moins un stockage delta une première fois pour l'analyse des objets de commande et pour l'obtention d'une spécification des attributs et des OD qui doivent être masqués et des périodes de masquage correspondantes ;
- le passage en revue, par le programme de gestion de stockage delta, de tous les objets delta dans l'au moins un stockage delta une seconde fois pour l'analyse des objets delta, créant ainsi des copies modifiées des objets parmi les objets delta comprenant des valeurs d'attribut à masquer selon la spécification, dans lequel dans les objets delta modifiés les valeurs parmi les valeurs d'attribut indiquées dans la spécification sont masquées si l'objet delta a été créé au sein d'une période de masquage indiquée dans la spécification pour cette valeur d'attribut et pour l'un des OD dont le changement a déclenché la création de cet objet delta, dans lequel le masquage est exécuté par suppression, anonymisation, pseudonymisation ou chiffrage de l'au moins un attribut.

6. Procédé mis en oeuvre par ordinateur selon l'une quelconque des revendications précédentes,
- dans lequel chaque transaction intégrée définit un contexte transactionnel intégré dans lequel :
• un échec à stocker au sein de la transaction intégrée un objet delta dans le stockage delta et/ou
• un échec à exécuter au sein de la transaction intégrée une mise à jour de stockage des données OLTP reflétant un changement d'OD dans le programme d'application et/ou
• un échec à exécuter au sein de la transaction intégrée une opération de changement d'un OD dans le programme d'application
induit :
• une inversion de tous les changements d'OD dans le programme d'application ayant déjà été exécutés dans ladite transaction intégrée ; et
• une inversion de toutes les mises à jour de stockage de données OLTP ayant déjà été exécutées dans ladite transaction intégrée ; et
• une suppression de tous les objets delta ayant déjà été écrits dans le stockage delta dans ladite transaction intégrée.

7. Procédé mis en oeuvre par ordinateur selon l'une quelconque des revendications précédentes, comprenant en outre :
- la création, par le cadre, pour chacun des objets de données du programme d'application, d'un flux de données (930, 932, 934, 936) correspondant;
- l'attribution, par le cadre, à chacun des flux de données d'un stockage delta (920, 922, 924, 926) correspondant de l'au moins un stockage delta ;
dans lequel le cadre est conçu pour :
• ajouter chaque objet delta créé en réponse à une opération de changement exécutée sur l'un des objets de données sélectivement sur le flux de données créé pour cet objet de données ; et/ou
• exécuter le stockage des objets delta de sorte que tous les objets delta indiquant un changement d'un objet particulier parmi les objets de données sont ajoutés sélectivement au flux de données créé pour cet objet de données et sont stockés sélectivement dans l'un des stockages delta attribués à ce flux de données.

8. Procédé mis en oeuvre par ordinateur selon la revendication 7,
- dans lequel le procédé est exécuté par un système informatique comprenant plusieurs unités de traitement et dans lequel le procédé comprend l'attribution automatique des flux de données à différentes unités parmi les unités de traitement pour le traitement des flux de données en parallèle ; et/ou
- dans lequel les stockages delta sont différents dispositifs de stockage physique ou des zones de stockage au sein de différents dispositifs de stockage physique et dans lequel le stockage des flux de données dans les stockages delta respectifs est exécuté en parallèle.

9. Procédé mis en oeuvre par ordinateur selon l'une quelconque des revendications précédentes, comprenant en outre :
- pour chacun de l'au moins un stockage delta, la création automatique d'un couple de clés de chiffrage asymétriques comprenant respectivement une clé de déchiffrage privée et une clé de chiffrage publique correspondante ;
- le chiffrage de chacun des objets delta stockées dans l'un quelconque de l'au moins un stockage delta avec la clé de chiffrage publique créée pour ce stockage delta ;
- la réception d'une requête pour masquer des données liées à un ou plusieurs des OD dans l'au moins un stockage delta ; et
- en réponse à la réception de la requête, l'identification et la suppression de l'une des clés de déchiffrage privées créées pour le ou les stockages parmi l'au moins un stockage delta comprenant des objets delta indiquant un changement de l'un des OD indiqués dans la requête.

10. Procédé mis en oeuvre par ordinateur selon l'une quelconque des revendications, dans lequel le début de chacune parmi la ou les transactions intégrées est déclenché par un appel à une fonction, l'exécution de la fonction appelée comprenant l'exécution de la ou des opérations de changement à exécuter au sein de la transaction intégrée dont le début a été déclenché par l'appel, dans lequel l'appel est exécuté dans un objet de données du programme d'application et la fonction est exécutée dans et/ou pourvue par le cadre (210).

11. Procédé mis en oeuvre par ordinateur selon la revendication 10, dans lequel la ou les opérations de changement à exécuter au sein de la transaction parmi les transactions intégrées dont le début est déclenché par l'appel à la fonction sont pourvues à la fonction en tant qu'arguments de fonction.

12. Procédé mis en oeuvre par ordinateur selon l'une quelconque des revendications précédentes,
- dans lequel les opérations de changement comprennent une opération de changement de classe, une opération de changement de classe étant la création, la suppression ou la modification structurelle d'une classe jouant le rôle de modèle pour un type d'objets de données spécifique d'une classe, les changements induits par l'opération de changement de classe se reflétant dans un ou plusieurs des objets delta ; et/ou
- dans lequel les opérations de changement comprennent une modification d'une association entre deux des OD.

13. Procédé mis en oeuvre par ordinateur selon l'une quelconque des revendications précédentes, comprenant en outre :
- la réception d'une indication d'un temps sélectionné ;
- le passage en revue d'au moins certains des objets delta dans l'au moins un stockage delta pour l'extraction automatique d'opérations UNDO ou REDO depuis les objets delta passés en revue, l'identité des objets delta passés en revue dépendant du temps sélectionné, chaque opération UNDO étant adaptée pour annuler les changements d'OD spécifiés dans l'objet delta à partir duquel l'opération UNDO a été extraite, chaque opération REDO étant adaptée pour réappliquer les changements d'OD spécifiés dans l'objet delta à partir duquel l'opération REDO a été extraite ;
- l'utilisation des opérations UNDO ou REDO extraites pour la reconstruction de l'état du programme d'application au temps sélectionné et/ou pour la reconstruction de l'état d'un stockage de données OLTP comprenant l'état le plus récent de tous les OD du programme d'application au temps sélectionné ;
dans lequel le procédé comprend en outre préférentiellement :
- l'affichage d'une GUI (600), la GUI comprenant au moins un élément de GUI (606) permettant à un utilisateur de sélectionner un point sur une représentation graphique d'une chronologie (608) ;
- en réponse à la réception de la sélection par l'utilisateur du point de la chronologie avec l'élément de GUI, l'exécution de la reconstruction du programme d'application et/ou du stockage de données OLTP au temps sélectionné, la reconstruction étant exécutée préférentiellement en temps réel.

14. Procédé mis en oeuvre par ordinateur de restauration des données et/ou de restauration d'un programme d'application ayant créé les données à partir d'une archive, le programme d'application étant un programme logiciel permettant de résoudre un problème technique et/ou commercial, le programme d'application n'étant pas un DBMS, le procédé comprenant :
- le pourvoi (120) de l'archive, l'archive comprenant au moins un stockage de données appelé stockage delta, dans lequel l'au moins un stockage delta est un stockage de données « annexer uniquement » géré par une application de streaming et/ou par un système de file d'attente, dans lequel l'au moins un stockage de données « annexer uniquement » est un stockage de données qui est adapté pour stocker et maintenir les objets delta d'une manière telle qu'ils sont stockés dans des zones de stockage physique séquentiellement adjacentes conformément à l'ordre chronologique d'écriture physique des enregistrements de données sur le stockage delta, et
l'au moins un stockage delta comprenant une pluralité d'objets delta, chaque objet delta décrivant un changement d'un ou de plusieurs parmi une pluralité d'objets de données (202, 204) - OD d'un programme d'application (226), dans lequel chaque objet delta comprend :
• un ID d'objet de l'un des OD dont le changement est décrit dans l'objet delta,
• un horodatage indiquant le temps d'exécution du changement indiqué dans l'objet delta ;
• un ID de transaction de l'une des transactions intégrées au sein de laquelle l'OD dont le changement est décrit dans l'objet delta a été changé et au sein de laquelle l'objet delta a été créé et stocké dans l'au moins un stockage delta ;
- la réception (122), par un programme de gestion de stockage delta (210), d'une indication d'un temps sélectionné ;
- le passage en revue (124), par le programme de gestion de stockage delta, des objets delta stockés dans l'au moins un stockage delta, dans lequel l'identité des objets delta passés en revue dépend du temps sélectionné, dans lequel le passage en revue comprend l'extraction automatique des opérations UNDO ou REDO depuis les objets delta passés en revue, dans lequel le programme de gestion de stockage delta compare l'horodatage de chaque objet delta avec le temps sélectionné pour la décision si le changement spécifié dans l'objet delta doit être ou non analysé pour l'extraction d'une opération UNDO ou REDO qui annule ou réapplique le changement d'objet de données spécifié, dans lequel l'ordre chronologique et la cible d'action des opérations UNDO ou REDO sont spécifiés conformément aux horodatages, ID d'objet et ID de transaction des objets delta passés en revue ; et
- l'application (126), par le programme de gestion de stockage delta, des opérations UNDO ou REDO sur les OD d'une autre instance du programme d'application (226) ou d'un stockage de données OLTP comprenant un état particulier de tous les OD de l'autre instance de programme d'application pour la récupération de l'état du programme d'application au temps sélectionné, moyennant quoi les opérations UNDO ou REDO sont exécutées sur les OD de l'autre instance du programme d'application ou sur le stockage de données OLTP au sein des transactions intégrées dont les limites sont définies de sorte que les opérations UNDO ou REDO extraites des objets delta partageant le même ID de transaction sont exécutées au sein de la même transaction intégrée.

15. Système informatique (200) comprenant :
- au moins un stockage de données (224) appelé « stockage delta », dans lequel l'au moins un stockage delta est un stockage de données « annexer uniquement » géré par une application de streaming et/ou par un système de file d'attente, dans lequel l'au moins un stockage de données « annexer uniquement » est un stockage de données qui est adapté pour stocker et maintenir les objets delta d'une manière telle qu'ils sont stockés dans des zones de stockage physique séquentiellement adjacentes conformément à l'ordre chronologique d'écriture physique des enregistrements de données sur le stockage delta ;
- un cadre (210), le cadre étant un programme logiciel conçu pour créer des objets delta et pour stocker les objets delta dans l'au moins un stockage delta, chaque objet delta décrivant un changement d'objet de données ;
- un programme d'application (226) comprenant une pluralité d'objets de données (202, 204) - OD, dans lequel le programme d'application est un programme logiciel pour la résolution d'un problème technique et/ou commercial et n'est pas un DBMS et dans lequel le programme d'application est programmé de sorte que toute opération de changement (206, 208) qui crée, modifie et/ou supprime respectivement l'un des OD dans le programme d'application déclenche automatiquement la création d'un objet delta (216, 218) par le cadre, l'objet delta créé décrivant le changement d'OD amené par l'opération de changement ;
dans lequel le programme d'application (226) et le cadre sont respectivement conçus pour :
• le traitement de données par le programme d'application, le programme d'application exécutant ainsi une pluralité des opérations de changement ;
• la création, par le cadre, d'une pluralité d'objets delta en réponse à la pluralité d'opérations de changement ;
• le stockage, par le cadre, de la pluralité d'objets delta dans l'au moins un stockage delta ; et
dans lequel la pluralité d'opérations de changement et la création et le stockage des objets delta sont réalisés au sein de transactions intégrées, chaque transaction intégrée englobant une ou plusieurs de la pluralité des opérations de changement et englobant au moins la création et le stockage des objets delta déclenchés par la ou les opérations de changement réalisées au sein de ladite transaction intégrée ; et
• le pourvoi de l'au moins un stockage delta en tant qu'archive de données.

16. Système informatique pour la restauration de l'état d'un programme d'application, le système comprenant :
- une archive, l'archive comprenant au moins un stockage de données appelé stockage delta, dans lequel l'au moins un stockage delta est un stockage de données « annexer uniquement » géré par une application de streaming et/ou par un système de file d'attente, dans lequel l'au moins un stockage de données « annexer uniquement » est un stockage de données qui est adapté pour stocker et maintenir les objets delta d'une manière telle qu'ils sont stockés dans des zones de stockage physique séquentiellement adjacentes conformément à l'ordre chronologique d'écriture physique des enregistrements de données sur le stockage delta, et l'au moins un stockage delta comprenant une pluralité d'objets delta, chaque objet delta décrivant un changement d'objet de données d'un ou de plusieurs parmi une pluralité d'objets de données (202, 204) - OD d'un programme d'application (226), le programme d'application étant un programme logiciel pour la résolution d'un problème technique et/ou commercial, le programme d'application n'étant pas un DBMS, dans lequel chaque objet delta comprend :
• un ID d'objet de l'un des OD dont le changement est décrit dans l'objet delta ;
• un horodatage indiquant le temps d'exécution du changement indiqué dans l'objet delta ;
• un ID de transaction de l'une des transactions intégrées au sein de laquelle l'OD dont le changement est décrit dans l'objet delta a été changé et au sein de laquelle l'objet delta a été créé et stocké dans l'au moins un stockage delta ;
- un programme de gestion de stockage delta conçu pour :
• la réception d'une indication d'un temps sélectionné ;
• le passage en revue des objets delta stockés dans l'au moins un stockage delta, dans lequel l'identité des objets delta passés en revue dépend du temps sélectionné, dans lequel le passage en revue comprend l'extraction automatique des opérations UNDO ou REDO depuis les objets delta passés en revue, dans lequel le programme de gestion de stockage delta compare l'horodatage de chaque objet delta avec le temps sélectionné pour la décision si le changement spécifié dans l'objet delta doit être ou non analysé pour l'extraction d'une opération UNDO ou REDO qui annule ou réapplique le changement d'objet de données spécifié, dans lequel l'ordre chronologique et la cible d'action des opérations UNDO ou REDO sont spécifiés conformément aux horodatages, ID d'objet et ID de transaction des objets delta passés en revue ; et
• l'application des opérations UNDO ou REDO sur les OD d'une autre instance du programme d'application (226) ou d'un stockage de données OLTP comprenant un état particulier de tous les OD de l'autre instance de programme d'application pour la récupération de l'état du programme d'application au temps sélectionné, moyennant quoi les opérations UNDO ou REDO sont exécutées sur les OD de l'autre instance du programme d'application ou sur le stockage de données OLTP au sein des transactions intégrées dont les limites sont définies de sorte que les opérations UNDO ou REDO extraites des objets delta partageant le même ID de transaction sont exécutées au sein de la même transaction intégrée.

17. Support de stockage lisible par ordinateur comprenant des instructions interprétables par ordinateur qui, lorsqu'elles sont exécutées par un processeur, amènent le processeur à exécuter un procédé selon l'une quelconque des revendications 1 à 14.
